# EUROPEAN PATENT APPLICATION

(11) **EP 4 391 438 A1**
(43) Date of publication of application: **26.06.2024**
(21) Application number: 22866251.6
(22) Date of filing: 18.07.2022
(51) Int. Cl.: H04L 7/00

(54) **COMMUNICATION METHOD, RELATED APPARATUS, AND STORAGE MEDIUM**

(30) Priority: 13.09.2021 CN 202111067726; 28.09.2021 CN 202111142893
(71) Applicant: Huawei Technologies Co., Ltd., Shenzhen, Guangdong 518129 (CN)
(72) Inventor: LI, Rixin, Shenzhen, Guangdong 518129 (CN); QI, Yunlei, Shenzhen, Guangdong 518129 (CN); FAN, Boling, Shenzhen, Guangdong 518129 (CN); WANG, Renlei, Shenzhen, Guangdong 518129 (CN); XU, Li, Shenzhen, Guangdong 518129 (CN)
(74) Representative: Körber, Martin Hans
(86) International application number: PCT/CN2022/106293
(87) International publication number: WO 2023/035776

(57) **Abstract**

A communication method, a related apparatus, and a storage medium are provided, to resolve transparent transmission of clock frequency information of a service. In this application, a first communication apparatus receives a first service data stream, generates a first code block stream based on the first service data stream, and sends the first code block stream. The first code block stream includes first clock frequency information, and the first clock frequency information indicates transmission duration of k first data frames of the first service data stream, and/or a moment at which the k first data frames of the first service data stream are received. In this way, a second communication apparatus may send the k first data frames based on the first clock frequency information, so that a clock frequency of the k first data frames sent by the second communication apparatus are basically consistent with a clock frequency of the k first data frames received by the first communication apparatus. This can resolve transparent transmission of clock frequency information of a service.

## Description

### CROSS-REFERENCE TO RELATED APPLICATIONS

This application claims priority to Chinese Patent Application No. 202111067726.3, filed with the China National Intellectual Property Administration on September 13, 2021 and entitled "COMMUNICATION METHOD, RELATED APPARATUS, AND STORAGE MEDIUM", which is incorporated herein by reference in its entirety. This application claims priority to Chinese Patent Application No. 202111142893.X, filed with the China National Intellectual Property Administration on September 28, 2021 and entitled "COMMUNICATION METHOD, RELATED APPARATUS, AND STORAGE MEDIUM", which is incorporated herein by reference in its entirety.

### TECHNICAL FIELD

This application relates to the communication field, and in particular, to a communication method, a related apparatus, and a storage medium.

### BACKGROUND

Various types of services exist in a network, and some of the services have a requirement for transparent transmission of a clock frequency. In other words, only when a clock frequency of a service data stream sent by a communication device a1 is basically consistent with a clock frequency of the service data stream received by a communication device a2, the communication device a2 can correctly parse the received service data stream. For example, the services with the requirement for transparent transmission of a clock frequency are constant bit rate (constant bit rate, CBR) services such as a common public radio interface (common public radio interface, CPRI) service and a synchronous digital hierarchy (synchronous digital hierarchy, SDH) service.

Currently, a clock frequency of a service can be transmitted based on a circuit emulation service (circuit emulation service, CES). Specifically, a communication apparatus processes an original service data stream on a user network interface (user network interface, UNI); extracts a data frame of an original service; adds a corresponding Ethernet frame header, a pseudo wire overhead, a real-time transport protocol (real-time transport protocol, RTP) header, an Ethernet header, and a frame check sequence (frame check sequence, FCS), to form an Ethernet packet; and then sends the Ethernet packet through an interface (network-to-network interface, NNI), for example, an interface between networks or an interface between devices in a network. Clock frequency information of the service data stream may be placed in the RTP header. It can be learned that the data frame needs to be encapsulated into the Ethernet packet in the foregoing solution. In this way, after receiving the Ethernet packet, another communication apparatus needs to perform layer 2 (layer 2, L2) processing (which need to be performed on the Ethernet frame header, the RTP header, and the pseudo wire header), and needs to perform an operation, for example, packet assembly, which is complex.

On the other hand, the flexible Ethernet (flexible Ethernet, FlexE) combines some technical features of the Ethernet and a transport network (for example, an optical transport network (Optical Transport Network, OTN) and an SDH), and is an important milestone in evolution of the Ethernet technology. As flexible Ethernet technologies emerge, an Ethernet physical interface has a feature of virtualization. A plurality of Ethernet physical interfaces may be cascaded, to support several virtual logical ports. For example, a 400-gigabit (400 Gigabit, 400 G) flexible Ethernet physical interface group obtained by cascading four 100-gigabit Ethernet (100 Gigabit Ethernet, 100 GE) physical interfaces can support several logical ports. The International Telecommunication Union Telecommunication Standardization Sector (International Telecommunication Union Telecommunication Standardization Sector, ITU-T) defines a next-generation transport network technology system (Metro Transport Network, MTN) based on reuse of FlexE logic to meet a requirement of a new service, for example, the 5th generation (the 5th generation, 5G) mobile network. The MTN is a new transport network layer network including an MTN section layer (MTN section layer) and an MTN path layer (MTN path layer). A physical layer is compatible with existing standard 50GBASE R, 100GBASE R, 200GBASE R and 400GBASE R interfaces and the like.

In a bearer network based on the FlexE, the MTN, or the like, how to implement transparent transmission of clock frequency information of a service data stream becomes a problem that needs to be urgently resolved.

### SUMMARY

Embodiments of this application provide a communication method, a related apparatus, and a storage medium, to resolve transparent transmission of clock frequency information of a service.

According to a first aspect, an embodiment of this application provides a communication method, and the method may be performed by a first communication apparatus. The first communication apparatus receives a first service data stream, generates a first code block stream based on the first service data stream, and sends the first code block stream. The first code block stream includes first clock frequency information.

In a possible implementation, the first clock frequency information may indicate a moment at which the first communication apparatus receives k first data frames of the first service data stream. In another possible implementation, the first clock frequency information may indicate transmission duration of k first data frames of the first service data stream. In still another possible implementation, the first clock frequency information indicates a moment at which the first communication apparatus receives k first data frames of the first service data stream, and may further indicate transmission duration of the k first data frames of the first service data stream.

The first code block stream sent by the first communication apparatus includes the first clock frequency information, and the first clock frequency information indicates the transmission duration of the k first data frames and/or the transmission moment at which the first communication apparatus receives the k first data frames. Therefore, a second communication apparatus may send the k first data frames based on the first clock frequency information, so that a clock frequency of the k first data frames sent by the second communication apparatus are basically consistent with a clock frequency of the k first data frames received by the first communication apparatus. This can resolve transparent transmission of clock frequency information of a service.

In a possible implementation, the first clock frequency information may indicate the transmission duration of the k first data frames of the first service data stream. For example, the first clock frequency information includes a first count value, and the first count value is a quantity of periods of a clock frequency of a local clock signal of the first communication apparatus in duration in which the first communication apparatus receives the k first data frames. In this way, the second communication apparatus may send, based on a local clock signal of the second communication apparatus, the k first data frames in duration of periods whose quantity is the first count value and that are of the local clock signal of the second communication apparatus. In this way, the clock frequency of the k first data frames sent by the second communication apparatus can be basically consistent with the clock frequency of the k first data frames received by the first communication apparatus, to resolve transparent transmission of clock frequency information of a service. In addition, transparent transmission of the clock frequency information is implemented by transmitting the first count value, to reduce bits of information that needs to be transmitted.

In a possible implementation, the first clock frequency information may indicate the transmission duration of the k first data frames of the first service data stream. For example, the first clock frequency information includes a second count value, and the second count value is a difference between a first count value and a preset count value. In this way, the second communication apparatus may calculate the first count value based on the second count value and the preset count value, so that the second communication apparatus may resolve transparent transmission of clock frequency information of a service based on the local clock signal of the second communication apparatus and the first count value. In addition, because the second count value is the difference between the first count value and the preset count value, a quantity of bits occupied by the second count value may be less than a quantity of bits occupied by the first count value. Therefore, transparent transmission of the clock frequency information is implemented by transmitting the second count value, to further reduce bits of information that needs to be transmitted.

To improve flexibility of the solution, in a possible implementation, the first clock frequency information includes a second count value and a preset count value. In this way, the second communication apparatus may calculate a first count value based on the second count value and the preset count value, so that the second communication apparatus may resolve transparent transmission of clock frequency information of a service based on the local clock signal of the second communication apparatus and the first count value. In addition, in still another possible implementation, sending periods of the second count value and the preset count value may be separately set. For example, the sending period of the preset count value may be larger than the sending period of the second count value. This can reduce a quantity of times of sending the preset count value, and save resources. Further, because the first communication apparatus further sends the preset count value to the second communication apparatus, the first communication apparatus may more flexibly change a value of the preset count value, and the second communication apparatus may directly determine the preset count value from received data. It can be learned that the specific value of the preset count value may be more flexible and variable in this solution.

In a possible implementation, the preset count value may be a preset value. For example, the preset count value may be manually configured in the first communication apparatus. For another example, a rule and an initial value may be manually configured in the first communication apparatus, and then the first communication apparatus may obtain the preset count value through calculation according to the configuration rule and the initial value.

In a possible implementation, the preset count value is a quantity of periods of a clock frequency of a reference clock signal in preset duration. A difference between the preset duration and the transmission duration of the k first data frames is less than a preset difference threshold. It may also be understood as that a deviation exists between transmission duration of any two groups of data frames (each group has k data frames) of the first service data stream. That the difference between the preset duration and the transmission duration of the k first data frames is less than the preset difference threshold may also be understood as that the preset duration is close to average transmission duration of the k data frames of the first service data stream, so that a difference between transmission duration of each group of data frames and the preset count value may be small.

In a possible implementation, the first clock frequency information may indicate the transmission moment at which the first communication apparatus receives the k first data frames. In a possible implementation, the first clock frequency information includes a moment at which a frame header of a 1^{st} data frame in the k first data frames is received, and a moment at which a frame trailer of a k^{th} first data frame in the k first data frames is received. In this way, the second communication apparatus may send the k first data frames based on the received first clock frequency information, to resolve transparent transmission of clock frequency information of a service. In another possible implementation, the second communication apparatus may calculate the transmission duration of the k first data frames based on the two receiving moments. This manner is simple, and another reference value is not required for calculation. In this implementation, it may also be understood as that the first clock frequency information may indicate the transmission duration of the k first data frames of the first service data stream.

In this embodiment of this application, when the first clock frequency information includes the moment at which the frame header of the 1^{st} data frame in the k first data frames is received, the moment, included in the first clock frequency information, at which the frame header of the 1^{st} data frame in the k first data frames is received may be a moment at which the first communication apparatus receives the frame header of the 1^{st} data frame in the k first data frames. When the first clock frequency information includes the moment at which the frame trailer of the k^{th} first data frame in the k first data frames is received, the moment, included in the first clock frequency information, at which the frame trailer of the k^{th} first data frame in the k first data frames is received may be a moment at which the first communication apparatus receives the frame trailer of the k^{th} first data frame in the k first data frames.

In a possible implementation, the first clock frequency information may indicate the transmission duration of the k first data frames of the first service data stream, the first clock frequency information includes first duration, and the first duration is the transmission duration of the k first data frames. In this way, the second communication apparatus may send the k first data frames based on the received first duration, to resolve transparent transmission of clock frequency information of a service. This manner is simple, and the first communication apparatus and the second communication apparatus do not need to have a same frequency point.

In a possible implementation, the first clock frequency information may indicate the moment at which the first communication apparatus receives the k first data frames of the first service data stream. The first clock frequency information includes the moment at which the frame header of the 1^{st} data frame in the k first data frames is received. If data frames corresponding to one piece of clock frequency information are referred to as a group of data frames, for example, because the first clock frequency information indicates the transmission duration of the k first data frames, the k first data frames may be referred to as a group of data frames, the second communication apparatus may send the k first data frames based on the received first clock frequency information, to resolve transparent transmission of clock frequency information of a service. This manner is simple, and the first communication apparatus and the second communication apparatus do not need to have a same frequency point.

In a possible implementation, the first clock frequency information includes the moment at which the frame trailer of the k^{th} data frame in the k first data frames is received. In this way, the second communication apparatus may send the k first data frames based on the received first clock frequency information, to resolve transparent transmission of clock frequency information of a service. This manner is simple, and the first communication apparatus and the second communication apparatus do not need to have a same frequency point.

In a possible implementation, the first clock frequency information includes a third count value. The third count value is a quantity of periods of a clock frequency of a local clock signal of the first communication apparatus in second duration, and the second duration is duration from a preset moment to a moment at which a frame header of a 1^{st} first data frame in the k first data frames is received. In this way, the second communication apparatus may send the k first data frames based on the received first clock frequency information, to resolve transparent transmission of clock frequency information of a service.

In a possible implementation, the first clock frequency information includes second duration. In this way, the second communication apparatus may send the k first data frames based on the received first clock frequency information, to resolve transparent transmission of clock frequency information of a service. This manner is simple, and the first communication apparatus and the second communication apparatus do not need to have a same frequency point.

In a possible implementation, the first clock frequency information includes a fourth count value. The fourth count value is a quantity of periods of a clock frequency of a local clock signal of the first communication apparatus in third duration, and the third duration is duration from a preset moment to a moment at which a frame trailer of a k^{th} first data frame in the k first data frames is received. In this way, the second communication apparatus may send the k first data frames based on the received first clock frequency information, to resolve transparent transmission of clock frequency information of a service.

In a possible implementation, the first clock frequency information includes third duration. In this way, the second communication apparatus may send the k first data frames based on the received first clock frequency information, to resolve transparent transmission of clock frequency information of a service. This manner is simple, and the first communication apparatus and the second communication apparatus do not need to have a same frequency point.

In a possible implementation, the first code block stream further includes second clock frequency information, and the second clock frequency information indicates transmission duration of k second data frames of the first service data stream, and/or a moment at which the first communication apparatus receives the k second data frames of the first service data stream. Because the first code block stream includes a plurality of pieces clock frequency information, the second communication apparatus may send the restored first service data stream based on the plurality of pieces clock frequency information, and a clock frequency of the first service data stream sent by the second communication apparatus can be basically consistent with a clock frequency of the first service data stream received by the first communication apparatus, to resolve transparent transmission of clock frequency information of a service.

In a possible implementation, the first code block stream includes a first data unit group, the first data unit group includes W₁ first data units, W₁ is a positive integer, and the first clock frequency information is carried in at least one of the W₁ first data units.

W₁ may be equal to 1. In this case, it may be understood that the k first data frames are encapsulated in one first data unit. The first clock frequency information is also carried in the first data unit.

W₁ may alternatively be greater than 1. In this case, it may be understood that the k first data frames are encapsulated in W₁ (a plurality of) first data units. Some first data units in the W₁ first data units may carry the first clock frequency information. For example, the first clock frequency information may be carried in one first data unit in the W₁ first data units, or may be carried in two first data units in the W₁ first data units. One of the two first data units may carry a portion of the first clock frequency information.

For the first data unit carrying the first clock frequency information, to improve flexibility of the solution, the first clock frequency information may be carried in at least one of the following content of the first data unit: a header code block, at least one data code block, a tail code block, or an operations, administration, and maintenance code block.

For the first data unit carrying the first clock frequency information, to improve flexibility of the solution, the first clock frequency information may be carried in at least one of the following content of the first data unit: an overhead area or a payload area.

In a possible implementation, bits corresponding to the k first data frames are carried in a payload area of a data code block in the at least one data code block of a first data unit in the W₁ first data units. In a possible implementation, bits corresponding to the k first data frames are carried in the tail code block and a payload area of a data code block in the at least one data code block of a first data unit in the W₁ first data units. For example, the tail code block is a T7 code block.

In a possible implementation, the at least one first data unit in the W₁ first data units carries first indication information, and the first indication information indicates that the first data unit carrying the first indication information carries the first clock frequency information.

In this way, when receiving the first indication information, the second communication apparatus may determine, based on the first indication information, that the first data unit carrying the first indication information carries the first clock frequency information, to obtain the first clock frequency information from the first data unit. In this embodiment of this application, the first communication apparatus side and the second communication apparatus side may agree, in advance, on whether one piece of clock frequency information is carried in one data unit or a plurality of data units. If it is agreed that one piece of clock frequency information is carried in one data unit, the first indication information indicates that the first data unit that carries the first indication information carries all of the first clock frequency information. If it is agreed that one piece of clock frequency information is carried in a plurality of data units, the first indication information indicates that the first data unit carrying the first indication information carries a portion of the first clock frequency information.

In a possible implementation, the at least one first data unit in the W₁ first data units carries second indication information, and the second indication information indicates that the first data unit carrying the second indication information does not carry the first clock frequency information.

In this way, when receiving the second indication information, the second communication apparatus may determine, based on the second indication information, that the first data unit carrying the second indication information does not carry the first clock frequency information, and therefore, does not need to obtain the first clock frequency information from the first data unit.

In a possible implementation, the first clock frequency information is carried in a payload area of a first data code block of the at least one first data unit in the W₁ first data units. In this case, the tail code block of the first data unit carrying the first clock frequency information may be a T7 code block. Because the T7 code block has a large quantity of bits that can be used to carry data, when a payload area occupying the data code block carries the first clock frequency information, some fields of the tail code block T7 may be used to carry bits of the k first data frames, to reduce a quantity of data code blocks of the first data unit.

In a possible implementation, two first data units in the W₁ first data units include a same quantity of data code blocks. The first service data stream may be a data stream with a constant rate. When the first communication apparatus receives the first service data stream and encapsulates the first service data stream, quantities of data code blocks of the two data units of the first code block stream corresponding to the first service data stream are the same, to simplify an encapsulation process.

In a possible implementation, the first code block stream further includes a second data unit group, the second data unit group includes W₂ second data units, W₂ is a positive integer, and a second data unit in the W₂ second data units carries the k second data frames of the first service data stream. A quantity of data code blocks included in one second data unit in the W₂ second data units is the same as a quantity of data code blocks included in one first data unit in the W₁ first data units. The first service data stream may be a data stream with a constant rate. When the first communication apparatus receives the first service data stream and encapsulates the first service data stream, quantities of data code blocks of the two data units of the first code block stream corresponding to the first service data stream are the same, to simplify an encapsulation process.

In a possible implementation, W₁ is equal to W₂. In this way, a quantity of data units carrying the k first data frames is equal to a quantity of data units carrying the k second data frames, to further simplify an encapsulation process of the code block stream.

In a possible implementation, before generating the first code block stream based on the first service data stream, the first communication apparatus may further receive Q₀ second service data streams, where Q₀ is a positive integer. The first communication apparatus may generate the first code block stream based on the first service data stream and the Q₀ second service data streams. The first clock frequency information further indicates transmission duration of k third data frames of each of the Q₀ second service data streams, and/or a moment at which the first communication apparatus receives the k third data frames. In this way, the first communication apparatus may receive a plurality of service data streams, and encapsulate the plurality of service data streams, to obtain the first code block stream. This can improve service processing efficiency.

In a possible implementation, the Q₀ second service data streams and the first service data stream have a same source communication apparatus, and the Q₀ second service data streams and the first service data stream have a same sink communication apparatus. In this way, in a process in which the first communication apparatus encapsulates the plurality of service data streams into the first code block stream and sends the first code block stream to the second communication apparatus, a communication apparatus of another intermediate node other than the second communication apparatus does not need to decapsulate the first code block stream, to improve a data transmission rate.

In a possible implementation, the first communication apparatus may multiplex, based on a preset order of the first service data stream and the Q₀ second service data streams and on a basis of a bit block including n₀ consecutive bits, bit blocks of the first service data stream and the Q₀ second service data streams, to obtain a third service data stream, where n₀ is a positive integer. The first communication apparatus generates the first code block stream based on the third service data stream. In this way, the first communication apparatus may perform parallel processing on a plurality of received service data streams. Compared with serial processing, parallel processing can reduce a data amount that needs to be buffered, and further reduce pressure of a buffer.

In a possible implementation, n₀ is 8 bits or 256 bits. In this way, an arrangement manner of data that is from each service data stream and that is included in the first data unit may be adjusted by adjusting a value of n₀. In addition, with reference to a specific example, one pulse code modulation (pulse code modulation, PCM) frame of the first service data stream is 256 bits (32 * 8 = 256), and one PCM frame is truncated on a basis of 64 bits, to obtain four segments through truncation. Therefore, each data unit may carry one PCM frame by using payload areas of four D code blocks. If there are four service data streams, each data unit may include 16 D code blocks, the 16 D code blocks may carry four PCM frames from the four service data streams, and an arrangement manner of bits of the four PCM frames on the 16 D code blocks may vary with the value of n₀. In addition, the value of n₀ is adjusted on a basis of bytes (8 bits), so that distribution of service data streams in the data unit can be more regular.

In a possible implementation, the first code block stream includes the first data unit group, and the first data unit group includes the W₁ first data units.

When W₁ is 1, one first data unit in the W₁ first data units includes the bits corresponding to the k first data frames of the first service data stream, and bits corresponding to the k third data frames of each of the Q₀ second service data streams. When W₁ is 1, k data frames from the first service data stream and each of the Q₀ second service data streams are encapsulated into one first data unit.

When W₁ is an integer greater than 1, one first data unit in the W₁ first data units includes some of the bits corresponding to the k first data frames of the first service data stream, and some of bits corresponding to the k third data frames of each of the Q₀ second service data streams.

In a possible implementation, if W₁ is an integer greater than 1, and k/W₁ is an integer, one first data unit in the W₁ first data units includes bits corresponding to (k/W₁) first data frames of the first service data stream, and bits corresponding to (k/W₁) third data frames of each of the Q₀ second service data streams. When W₁ is greater than 1, (k/W₁) data frames from the first service data stream and each of the Q₀ second service data streams are encapsulated into one first data unit. In this way, the plurality of service data streams may be evenly distributed in W₁ data units in parallel.

In a possible implementation, the first communication apparatus may process the Q₀ second service data streams, to generate Q₀ third code block streams. The first service data stream is processed, to generate a second code block stream. The second code block stream includes the first clock frequency information, and the second code block stream includes the first clock frequency information and the k first data frames. The first communication apparatus may multiplex data in the Q₀ third code block streams and the second code block stream, to obtain the first code block stream. This can improve solution flexibility.

In a possible implementation, the first communication apparatus may multiplex, based on a preset order of the Q₀ third code block streams and the second code block stream and on a basis of Ni data units, data units of the Q₀ third code block streams and the second code block stream, to obtain the first code block stream, where N₁ is a positive integer. In this way, the obtained first code block stream is still a code block stream on a basis of a data unit, to lay a foundation for multiplexing the first code block stream and another code block stream again.

In a possible implementation, before sending the first code block stream, the first communication apparatus may further obtain Q₁ fourth code block streams, where Q₁ is a positive integer. The first communication apparatus performs time division multiplexing on code blocks of the Q₁ fourth code block streams and the first code block stream according to a correspondence between the Q₁ fourth code block streams and S₁ first slots and a correspondence between the first code block stream and the S₁ first slots, to obtain a fifth code block stream. The Q₁ fourth code block streams and one code block stream in the first code block stream correspond to at least one first slot in the S₁ first slots, where S₁ is an integer not less than (Q₁+1). The fifth code block stream is sent. In this scenario, the first code block stream may be a code block stream corresponding to a large-granularity slot, and may further be multiplexed with another code block stream of the large-granularity slot before being sent. This can expand the application scope of this application.

In a possible implementation, before sending the fifth code block stream, the first communication apparatus may further obtain Q₂ sixth code block streams, where Q₂ is a positive integer. The first communication apparatus may perform time division multiplexing on code blocks of the Q₂ sixth code block streams and the fifth code block stream according to a correspondence between the Q₂ sixth code block streams and S₂ second slots and a correspondence between the fifth code block stream and the S₂ second slots, to obtain a seventh code block stream. The Q₂ sixth code block streams and one code block stream in the fifth code block stream correspond to at least one second slot in the S₂ second slots, where S₂ is an integer not less than (Q₂+1). Second slots corresponding to the fifth code block stream are divided into the S₁ first slots. The seventh code block stream is sent. In this scenario, the first code block stream may be a code block stream corresponding to a fine-granularity slot, and may further be multiplexed with another code block stream of the fine-granularity slot and then multiplexed with another code block stream of the large-granularity slot before being sent. This can expand the application scope of this application.

In a possible implementation, the first code block stream includes the first data unit group, the first data unit group includes the W₁ first data units, and the first data unit in the W₁ first data units includes one of the following content: a header code block and at least one data code block; a header code block, at least one data code block, and a tail code block; at least one data code block and a tail code block; a header code block, at least one data code block, and an operations, administration, and maintenance code block; a header code block, at least one data code block, a tail code block, and an operations, administration, and maintenance code block; or at least one data code block, a tail code block, and an operations, administration, and maintenance code block. This can improve solution flexibility.

In a possible implementation, the header code block is an S code block, the tail code block is a T code block, the data code block is a D code block, or the operations, administration, and maintenance code block is an O code block. Therefore, the solution may be more compatible with the existing standard.

According to a second aspect, an embodiment of this application provides a communication method, and the method may be performed by a second communication apparatus. The second communication apparatus obtains a first code block stream. The first code block stream includes first clock frequency information, and the first clock frequency information indicates transmission duration of k first data frames of a first service data stream, and/or a moment at which the k first data frames of the first service data stream are received, where k is a positive integer. The k first data frames and the first clock frequency information are obtained from the first code block stream. The second communication apparatus sends the k first data frames based on the first clock frequency information.

The first code block stream includes first clock frequency information, and the first clock frequency information indicates transmission duration of k first data frames of a first service data stream, and/or a moment at which the k first data frames of the first service data stream are received. Therefore, the second communication apparatus may send the k first data frames based on the first clock frequency information, so that a clock frequency of the k first data frames sent by the second communication apparatus are basically consistent with a clock frequency of the k first data frames received by a first communication apparatus. This can resolve transparent transmission of clock frequency information of a service.

In a possible implementation, for a specific implementation form and beneficial effect of the first clock frequency information, refer to related descriptions of the first aspect. Details are not described herein again.

In a possible implementation, the preset count value is a quantity of periods of a clock frequency of a reference clock signal in preset duration. For related beneficial effect and descriptions, refer to related descriptions in the first aspect. Details are not described herein again.

In a possible implementation, a difference between preset duration and the transmission duration of the k first data frames is less than a preset difference threshold. For related beneficial effect and descriptions, refer to related descriptions in the first aspect. Details are not described herein again.

In a possible implementation, the first code block stream further includes second clock frequency information. The second clock frequency information indicates transmission duration of k second data frames of the first service data stream, and/or a moment at which the first communication apparatus receives the k second data frames of the first service data stream. The second communication apparatus may further obtain the second clock frequency information and the k second data frames from the first code block stream, and send the k second data frames based on the second clock frequency information.

Because the first code block stream includes a plurality of pieces clock frequency information, the second communication apparatus may send the restored first service data stream based on the plurality of pieces clock frequency information, and a clock frequency of the first service data stream sent by the second communication apparatus can be basically consistent with a clock frequency of the first service data stream received by the first communication apparatus, to resolve transparent transmission of clock frequency information of a service.

In a possible implementation, the first code block stream includes a first data unit group, the first data unit group includes W₁ first data units, W₁ is a positive integer, and the first clock frequency information is carried in at least one of the following content of at least one first data unit in the W₁ first data units: a header code block, at least one data code block, a tail code block, or an operations, administration, and maintenance code block. For related beneficial effect and descriptions, refer to related descriptions in the first aspect. Details are not described herein again.

In a possible implementation, bits corresponding to the k first data frames are carried in one of the following content of a first data unit in the W₁ first data units: a payload area of a data code block in the at least one data code block; or the tail code block and a payload area of a data code block in the at least one data code block. For related beneficial effect and descriptions, refer to related descriptions in the first aspect. Details are not described herein again.

In a possible implementation, the at least one first data unit in the W₁ first data units carries first indication information, and the first indication information indicates that the first data unit carrying the first indication information carries the first clock frequency information. For related beneficial effect and descriptions, refer to related descriptions in the first aspect. Details are not described herein again.

In a possible implementation, the at least one first data unit in the W₁ first data units carries second indication information, and the second indication information indicates that the first data unit carrying the second indication information does not carry the first clock frequency information. For related beneficial effect and descriptions, refer to related descriptions in the first aspect. Details are not described herein again.

In a possible implementation, the first clock frequency information is carried in a payload area of a first data code block of the at least one first data unit in the W₁ first data units. The tail code block of the first data unit carrying the first clock frequency information is a T7 code block. For related beneficial effect and descriptions, refer to related descriptions in the first aspect. Details are not described herein again.

In a possible implementation, two first data units in the W₁ first data units include a same quantity of data code blocks. For related beneficial effect and descriptions, refer to related descriptions in the first aspect. Details are not described herein again.

In a possible implementation, the first code block stream further includes a second data unit group, the second data unit group includes W₂ second data units, W₂ is a positive integer, and a second data unit in the W₂ second data units carries the k second data frames of the first service data stream. A quantity of data code blocks included in one second data unit in the W₂ second data units is the same as a quantity of data code blocks included in one first data unit in the W₁ first data units. For related beneficial effect and descriptions, refer to related descriptions in the first aspect. Details are not described herein again.

In a possible implementation, W₁ is equal to W₂. For related beneficial effect and descriptions, refer to related descriptions in the first aspect. Details are not described herein again.

In a possible implementation, the second communication apparatus may obtain the first clock frequency information from the first code block stream; and demultiplex the first code block stream, to obtain the first service data stream and Q₀ second service data streams, where Q₀ is a positive integer. The first clock frequency information further indicates transmission duration of k third data frames of each of the Q₀ second service data streams, and/or a moment at which the first communication apparatus receives the k third data frames. In this way, a plurality of service data streams may be transmitted between the first communication apparatus and the second communication apparatus by using the first code block stream, to improve service processing efficiency.

In a possible implementation, the Q₀ second service data streams and the first service data stream have a same source communication apparatus, and the Q₀ second service data streams and the first service data stream have a same sink communication apparatus. For related beneficial effect and descriptions, refer to related descriptions in the first aspect. Details are not described herein again.

In a possible implementation, the second communication apparatus may demultiplex the first code block stream on a basis of a bit block including n₀ consecutive bits, to obtain the first service data stream and the Q₀ second service data streams. In this way, the first communication apparatus may perform parallel processing on a plurality of received service data streams. Compared with serial processing, parallel processing can reduce a data amount that needs to be buffered, and further reduce pressure of a buffer.

In a possible implementation, n₀ is 8 bits or 256 bits. For related beneficial effect and descriptions, refer to related descriptions in the first aspect. Details are not described herein again.

In a possible implementation, the first code block stream includes the first data unit group, and the first data unit group includes the W₁ first data units. When W₁ is 1, one first data unit in the W₁ first data units includes the bits corresponding to the k first data frames of the first service data stream, and bits corresponding to the k third data frames of each of the Q₀ second service data streams.

When W₁ is an integer greater than 1, one first data unit in the W₁ first data units includes some of the bits corresponding to the k first data frames of the first service data stream, and some of bits corresponding to the k third data frames of each of the Q₀ second service data streams.

In a possible implementation, W₁ is an integer greater than 1. If k/W₁ is an integer, one first data unit in the W₁ first data units includes bits corresponding to (k/W₁) first data frames of the first service data stream, and bits corresponding to (k/W₁) third data frames of each of the Q₀ second service data streams. For related beneficial effect and descriptions, refer to related descriptions in the first aspect. Details are not described herein again.

In a possible implementation, the second communication apparatus may demultiplex the first code block stream, to obtain Q₀ third code block streams and a second code block stream. The second code block stream includes first clock frequency information and the k first data frames. The second communication apparatus may obtain the first service data stream and the first clock frequency information from the second code block stream; and obtain the Q₀ second service data streams from the Q₀ third code block streams. This can improve solution flexibility.

In a possible implementation, the second communication apparatus may demultiplex the first code block stream on a basis of Ni data units, to obtain Q₀ third code block streams and a second code block stream, where N₁ is a positive integer. In this way, a processing process is simple, so that a data processing process can be simplified.

In a possible implementation, the second communication apparatus may obtain a fifth code block stream; and demultiplex the fifth code block stream according to a correspondence between Q₁ fourth code block streams and S₁ first slots and a correspondence between the first code block stream and the S₁ first slots, to obtain the Q₁ fourth code block streams and the first code block stream. The Q₁ fourth code block streams and one code block stream in the first code block stream correspond to at least one first slot in the S₁ first slots, where S₁ is an integer not less than (Q₁+1). In this scenario, the first code block stream may be a code block stream corresponding to a large-granularity slot. This can expand the application scope of this application.

In a possible implementation, before sending the fifth code block stream, the second communication apparatus may further obtain a seventh code block stream. The second communication apparatus may demultiplex the seventh code block stream according to a correspondence between Q₂ sixth code block streams and S₂ second slots and a correspondence between the fifth code block stream and the S₂ second slots, to obtain the Q₂ sixth code block streams and the fifth code block stream. The Q₂ sixth code block streams and one code block stream in the fifth code block stream correspond to at least one second slot in the S₂ second slots, and second slots corresponding to the fifth code block stream are divided into the S₁ first slots, where S₂ is an integer not less than (Q₂+1). In this scenario, the first code block stream may be a code block stream corresponding to a fine-granularity slot. This can expand the application scope of this application.

In a possible implementation, the first code block stream includes the first data unit group, the first data unit group includes the W₁ first data units, and the first data unit in the W₁ first data units includes one of the following content: a header code block and at least one data code block; a header code block, at least one data code block, and a tail code block; at least one data code block and a tail code block; a header code block, at least one data code block, and an operations, administration, and maintenance code block; a header code block, at least one data code block, a tail code block, and an operations, administration, and maintenance code block; or at least one data code block, a tail code block, and an operations, administration, and maintenance code block. For related beneficial effect and descriptions, refer to related descriptions in the first aspect. Details are not described herein again.

In a possible implementation, the header code block is an S code block, the tail code block is a T code block, the data code block is a D code block, or the operations, administration, and maintenance code block is an O code block. For related beneficial effect and descriptions, refer to related descriptions in the first aspect. Details are not described herein again.

According to a third aspect, a communication apparatus is provided, and includes a communication unit and a processing unit. The communication apparatus may be the foregoing first communication apparatus or the foregoing second communication apparatus. The communication apparatus may perform any one of the first aspect and the second aspect and any implementation of either the first aspect or the second aspect. The communication unit is configured to perform functions related to sending and receiving. Optionally, the communication unit includes a receiving unit and a sending unit. In a design, the communication apparatus is a communication chip, the processing unit may be one or more processors or processor cores, and the communication unit may be an input/output circuit or a port of the communication chip.

In another design, the communication unit may be a transmitter and a receiver, or the communication unit may be a transmitter machine and a receiver machine.

Optionally, the communication apparatus further includes modules that may be configured to perform any one of the first aspect and the second aspect and any implementation of either the first aspect or the second aspect.

According to a fourth aspect, a communication apparatus is provided, and includes a processor and a memory. The communication apparatus may be the foregoing first communication apparatus or the foregoing second communication apparatus. Optionally, a transceiver is further included. The memory is configured to store a computer program or instructions. The processor is configured to invoke the computer program or the instructions from the memory and run the computer program or the instructions. When the processor executes the computer program or the instructions in the memory, the communication apparatus is enabled to perform any one of the first aspect and the second aspect and any implementation of either the first aspect or the second aspect.

Optionally, there are one or more processors, and there are one or more memories.

Optionally, the memory may be integrated with the processor, or the memory and the processor are disposed separately.

Optionally, the transceiver may include a transmitter (transmitter) and a receiver (receiver).

According to a fifth aspect, a communication apparatus is provided, and includes a processor. The communication apparatus may be the foregoing first communication apparatus or the foregoing second communication apparatus. The processor is coupled to a memory, and may be configured to perform any one of the first aspect and the second aspect and any implementation of either the first aspect or the second aspect. The communication apparatus may be the foregoing first communication apparatus or the foregoing second communication apparatus. Optionally, the communication apparatus further includes the memory. Optionally, the communication apparatus further includes a communication interface, and the processor is coupled to the communication interface.

In an implementation, when the communication apparatus is the first communication apparatus or the second communication apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system of the first communication apparatus or a chip or a chip system of the second communication apparatus, the communication interface may be an input/output interface, an interface circuit, an output circuit, an input circuit, a pin, a related circuit, or the like in the chip or the chip system. The processor may alternatively be embodied as a processing circuit or a logic circuit.

According to a sixth aspect, a system is provided, and the system includes the foregoing first communication apparatus and second communication apparatus.

According to a seventh aspect, a computer program product is provided. The computer program product includes a computer program (which may also be referred to as code or instructions), and when the computer program is run, a computer is enabled to perform any one of the first aspect and the second aspect and any implementation of either the first aspect or the second aspect.

According to an eighth aspect, a computer-readable storage medium is provided. The computer-readable medium stores a computer program (which may also be referred to as code or instructions). When the computer program is run on a computer, the computer is enabled to perform any one of the first aspect and the second aspect and any implementation of either the first aspect or the second aspect.

According to a ninth aspect, a chip system is provided. The chip system may include a processor. The processor is coupled to a memory, and may be configured to perform any one of the first aspect and the second aspect and any implementation of either the first aspect or the second aspect. Optionally, the chip system further includes a memory. The memory is configured to store a computer program (which may also be referred to as code or instructions). The processor is configured to invoke the computer program from the memory and run the computer program, to enable an apparatus in which the chip system is installed to perform any one of the first aspect and the second aspect and any implementation of either the first aspect or the second aspect.

According to a tenth aspect, a processing apparatus is provided, and includes an interface circuit and a processing circuit. The interface circuit may include an input circuit and an output circuit. The processing circuit is configured to receive a signal by using the input circuit, and transmit a signal by using the output circuit, to implement any one of the first aspect and the second aspect and any implementation of either the first aspect or the second aspect.

In a specific implementation process, the foregoing processing apparatus may be a chip, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In another implementation, the communication apparatus may be a part of the first communication apparatus or the second communication apparatus, for example, an integrated circuit product, for example, a system chip or a communication chip. The interface circuit may be an input/output interface, an interface circuit, an output circuit, an input circuit, a pin, a related circuit, or the like in the chip or a chip system. The processing circuit may be a logic circuit in the chip.

### BRIEF DESCRIPTION OF DRAWINGS

FIG. 1a is a schematic diagram of a network architecture to which embodiments of this application are applicable;
FIG. 1b is a schematic diagram of another network architecture to which embodiments of this application are applicable;
FIG. 1c is a schematic diagram of an architecture of a protocol stack model to which embodiments of this application are applicable;
FIG. 1d is a schematic diagram of an architecture of another protocol stack model to which embodiments of this application are applicable;
FIG. 2a-1 and FIG. 2a-2 show an example of a possible pipe division solution of a communication apparatus based on FIG. 1a;
FIG. 2b is a schematic diagram of a structure of a code block in a 64B/66B coding format;
FIG. 2c shows a structure form of an idle code block;
FIG. 2d is a schematic diagram of a frame structure corresponding to an OSU service according to an embodiment of this application;
FIG. 3 is a schematic interaction diagram of a communication method according to an embodiment of this application;
FIG. 4a is a schematic flowchart of a data transmission method on a first communication apparatus side according to an embodiment of this application;
FIG. 4b is a schematic diagram of collecting statistics on a first count value according to an embodiment of this application;
FIG. 4c is a schematic flowchart of a data transmission method on a second communication apparatus side according to an embodiment of this application;
FIG. 5a is a possible implementation of converting a service data stream into a code block stream according to an embodiment of this application;
FIG. 5b is a schematic diagram of a rate relationship between data streams in a container construction process according to an embodiment of this application;
FIG. 5c is a possible implementation of converting a code block stream into a service data stream according to an embodiment of this application;
FIG. 6a is a schematic diagram of a location for carrying first clock frequency information according to an embodiment of this application;
FIG. 6b is a schematic diagram of another location for carrying first clock frequency information according to an embodiment of this application;
FIG. 6c is a schematic diagram of still another location for carrying first clock frequency information according to an embodiment of this application;
FIG. 6d is a schematic diagram of a structure of a possible O code block according to an embodiment of this application;
FIG. 7a is a schematic diagram of multiplexing a bit block according to an embodiment of this application;
FIG. 7b is a schematic diagram of a signal that is carried in a data unit shown in FIG. 6a according to an embodiment of this application;
FIG. 7c is a schematic diagram of a signal that is carried in a data unit shown in FIG. 6a according to an embodiment of this application;
FIG. 7d is a schematic diagram of multiplexing a data unit according to an embodiment of this application;
FIG. 8 is a schematic diagram of a structure of a frame format of a flexible Ethernet protocol according to an embodiment of this application;
FIG. 9a shows a flexible fine-granularity basic unit (fine-granularity basic unit, fgBU) format according to an embodiment of this application;
FIG. 9b is a schematic diagram of a basic frame of a code block stream according to an embodiment of this application;
FIG. 9c is a schematic diagram of possible transmission duration of a data frame of a first service data stream according to an embodiment of this application;
FIG. 9d is a schematic diagram of possible transmission duration of a data frame of a first service data stream according to an embodiment of this application;
FIG. 10 is a schematic diagram of a structure of a communication apparatus according to an embodiment of this application;
FIG. 11 is a schematic diagram of a structure of another communication apparatus according to an embodiment of this application; and
FIG. 12 is a schematic diagram of a structure of another communication apparatus according to an embodiment of this application.

### DESCRIPTION OF EMBODIMENTS

Technical solutions provided in embodiments of this application may be applied to a metro transport network (Metro Transport Network, MTN), or may be applied to another type of network, for example, the flexible Ethernet FlexE, the Ethernet, an OTN, and an SDH network. For ease of description, embodiments of this application are mainly described by using the FlexE as an example.

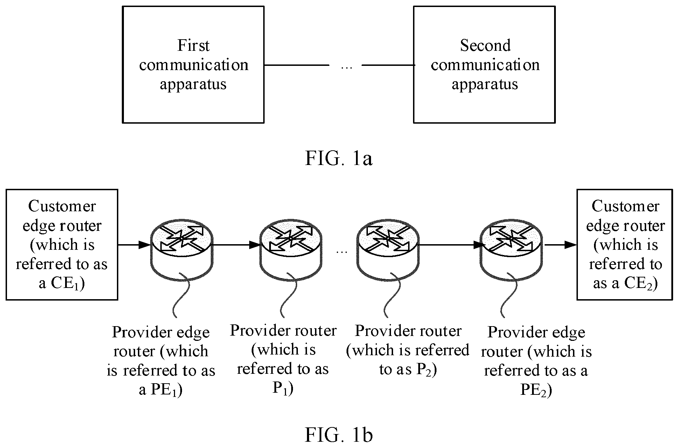

FIG. 1a is a schematic diagram of an example of a network architecture to which embodiments of this application are applicable. As shown in FIG. 1a, the network architecture includes a first communication apparatus and a second communication apparatus. There may be or may not be another communication apparatus between the first communication apparatus and the second communication apparatus. The first communication apparatus and the second communication apparatus in embodiments of this application may be network devices, or modules, units, or chips inside a network device. The network device includes but is not limited to: a core router, an edge router, an OTN transmission device, an OTN optical service unit (Optical Service Unit, OSU), and a box-shaped or frame-shaped switch device, for a specific scenario, based on an Internet protocol radio access network (Internet Protocol Radio Access Network, IP RAN) and a packet transport network (Packet Transport Network, PTN).

In embodiments of this application, the first communication apparatus may receive a first service data stream, generate a first code block stream based on the first service data stream, and send the first code block stream. The first code block stream includes first clock frequency information. The first clock frequency information indicates transmission duration of k first data frames of the first service data stream, and/or a moment at which the k first data frames of the first service data stream are received, where k is a positive integer. The second communication apparatus obtains the k first data frames and the first clock frequency information from the first code block stream, and may further send the k first data frames based on the first clock frequency information.

Because the first communication apparatus sends the first clock frequency information of the k first data frames of the first service data stream to the second communication apparatus, the second communication apparatus may send the k first data frames based on the first clock frequency information, so that a clock frequency of the k first data frames sent by the second communication apparatus are basically consistent with a clock frequency of the k first data frames received by a first communication apparatus. This can resolve transparent transmission of clock frequency information of a service.

FIG. 1b is a schematic diagram of an example of another network architecture to which embodiments of this application are applicable. As shown in FIG. 1b, the network architecture includes three types of apparatuses: a provider edge (provider edge, PE) router, a customer edge (customer edge, CE) router, and a provider router (provider router, PR). In embodiments of this application, the PE router may also be written as a PE, for example, a subsequent PE₁ and PE₂, and the CE router may also be abbreviated as a CE, for example, a subsequent CE₁ and CE₂.

As shown in FIG. 1b, CE apparatuses in the network architecture include the CE₁ and the CE₂. In embodiments of this application, the CE₁ may send data to the CE₂, and the CE₂ may also send data to the CE₁. In embodiments of this application, a CE that sends data is referred to as a source communication apparatus, or referred to as a source. In embodiments of this application, the source may also be a communication device that generates a service data stream. A CE that receives data is referred to as a sink communication apparatus, or referred to as a sink. The sink in embodiments of this application may also be a communication device that finally needs to parse a service data stream. In FIG. 1b, an example in which the CE₁ may send the data to the CE₂ is used for illustration. In this example, the CE₁ is the source, and the CE₂ is the sink.

As shown in FIG. 1b, a PE apparatus in FIG. 1b includes the PE₁ and the PE₂. There may be or may not be another communication apparatus between the PE₁ and the PE₂. In FIG. 1b, an example in which apparatuses such as P₁ and P₂ are further included between the PE₁ and the PE₂ is used for illustration. P₁ and P₂ may be PR apparatuses.

The first communication apparatus in FIG. 1a may be the PE₁ in FIG. 1b, and the second communication apparatus in FIG. 1a may be the PE₂ in FIG. 1b. The PE₁ may receive at least one service data stream from the CE apparatus (for example, the CE₁). The PE₁ may also receive a service data stream from another CE apparatus. For ease of description, a first service data stream in the at least one service data stream is used as an example for description. For a processing manner of another service data stream (from the CE₁ or another CE apparatus), refer to a processing manner of the first service data stream.

In FIG. 1b, the PE₁ may obtain at least one piece of clock frequency information of the first service data stream. Clock frequency information in the at least one piece of clock frequency information may indicate transmission duration of at least one data frame of the first service data stream. For ease of description, first clock frequency information in the at least one piece of clock frequency information is used as an example for description. One or more data frames corresponding to the first clock frequency information are referred to as first data frames, and a quantity of data frames corresponding to the first clock frequency information is identified as k. The first clock frequency information may indicate the transmission duration of the k first data frames.

In FIG. 1b, the PE₁ may obtain the first clock frequency information of the first service data stream, and further send the k first data frames and the first clock frequency information to the PE₂. The PE₂ may send the received k first data frames to the sink based on the first clock frequency information. Therefore, a clock frequency of the k first data frames sent by the PE₂ to the sink can be basically consistent with a clock frequency of the k first data frames received by the PE₁ from the source. For a related solution of another data frame of the first service data stream, refer to related descriptions of the k first data frames. Details are not described again. It can be learned that the solutions provided in embodiments of this application can resolve transparent transmission of clock frequency information of a service.

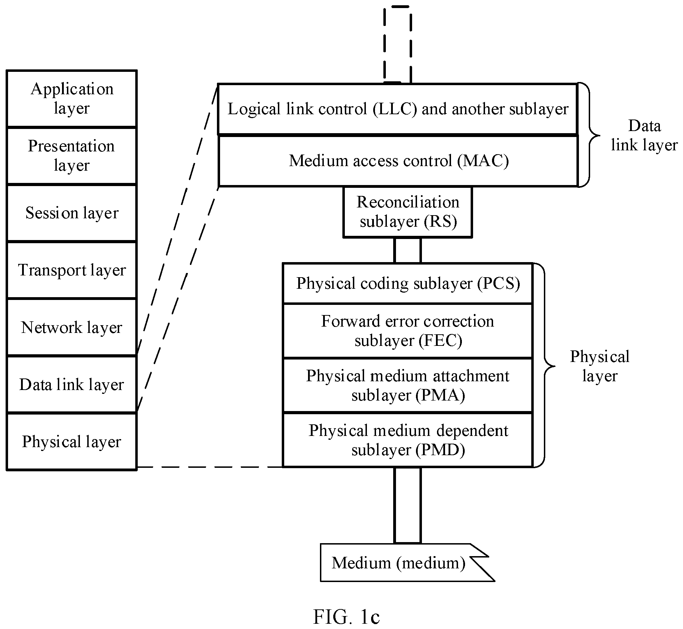

FIG. 1c is a schematic diagram of an architecture of a protocol stack model to which embodiments of this application are applicable. The protocol stack model is a protocol stack of the Ethernet (Ethernet). The Ethernet is a set of standards that are defined by the IEEE 802 standard organization and that relate to a network, an interface, and a physical layer technology. Embodiments of this application may be related to an Ethernet physical layer defined in Article 82 of IEEE 802.3. For the protocol stack of the Ethernet, refer to FIG. 1c. As shown in FIG. 1c, the architecture of the model is a network interconnection model, and defines a seven-layer framework for network interconnection. The seven layers from a lowest-level to a highest-level sequentially are a physical layer, a data link layer, a network layer, a transport layer, a session layer, a presentation layer, and an application layer.

The Ethernet is located at the data link layer and physical layer of an open systems interconnection (open systems interconnection, OSI) reference model. As shown in FIG. 1c, the data link layer includes two sublayers: a logical link control (logical link control, LLC) sublayer and a MAC sublayer responsible for parsing and assembling an Ethernet frame.

As shown in FIG. 1c, the physical layer may include a physical medium dependent (physical medium dependent, PMD) sublayer, a physical medium attachment (physical medium attachment, PMA) sublayer, a forward error correction (forward error correction, FEC) sublayer (which may also be referred to as an FEC layer), and a physical coding sublayer (physical coding sublayer, PCS). A reconciliation sublayer (reconciliation sublayer, RS) is also included between the PCS and the MAC sublayer. FIG. 1c further shows a medium (medium) connected to the PMD sublayer. The medium may be a cable, a pluggable optical module, an optical fiber, or the like.

The Ethernet frame may be transmitted to the physical layer through an interface. At the physical layer, the Ethernet frame is processed at the MAC sublayer, the RS, the PCS, the FEC sublayer, the PMA sublayer, and the PMD sublayer from top to bottom. A processed data stream is represented as a signal sent to a link medium. A receiving direction is related to an inverse process of the foregoing processing. A signal is received by the link medium, and is finally sequentially processed at the PMD sublayer, the PMA sublayer, the FEC sublayer, and the PCS, to restore a MAC data stream.

In the system architecture shown in FIG. 1c, a data stream may be compiled into a group of bits, for example, a code block including 66 bits, in a fixed format by using the PCS. The FEC sublayer is related to conversion of a coding format. For example, a code block stream in a 64B/66B coding format may be converted into a code block stream in a 256B/257B coding format at the FEC layer. The code block stream in embodiments of this application may be a code block stream related to the PCS, or may be a code block stream related to the FEC sublayer.

FIG. 1c shows an example of the protocol stack of the Ethernet to which embodiments of this application are applicable. The flexible Ethernet (Flexible Ethernet, FlexE) and the MTN are two technologies extended based on a code block at an Ethernet physical layer.

The Optical Internet Forum (Optical Internet Forum, OIF) releases the FlexE. The FlexE is a general technology that supports a plurality of Ethernet MAC layer rates. A plurality of 100 GE physical (Physical, PHYs) interfaces are bound, and each 100 GE port is divided into 20 slots by using 5 Gbps as a granularity in time domain, so that the FlexE may support the following functions: binding, where a plurality of Ethernet interfaces are bound into one link group to support a MAC service whose rate is greater than that of a single Ethernet interface; a sub-rate that supports, by allocating a slot to a service, a MAC service whose rate is less than a link group bandwidth or is less than a signal Ethernet interface bandwidth; and channelization that supports, by allocating a slot to a service, simultaneous transmission of a plurality of MAC services in a link group, for example, supports simultaneous transmission of one 150 Gbps MAC service and two 25 Gbps MAC services in a 2*100 GE link group.

The ITU-T research group 15 uses some design concepts of the FlexE to define a new transport technology, namely, the MTN. The MTN may include complete transport network functions such as an interface, cross-connection, operations, administration, and maintenance (Operations, Administration, and Maintenance, OAM), management and control, and protection. The OIF-FlexE is an interface technology that can be used for a data center interconnection (data center interconnection, DCI) scenario. The MTN is an integrated transport network technology that can be used for a 5G transport network. The MTN is not equivalent to the FlexE.

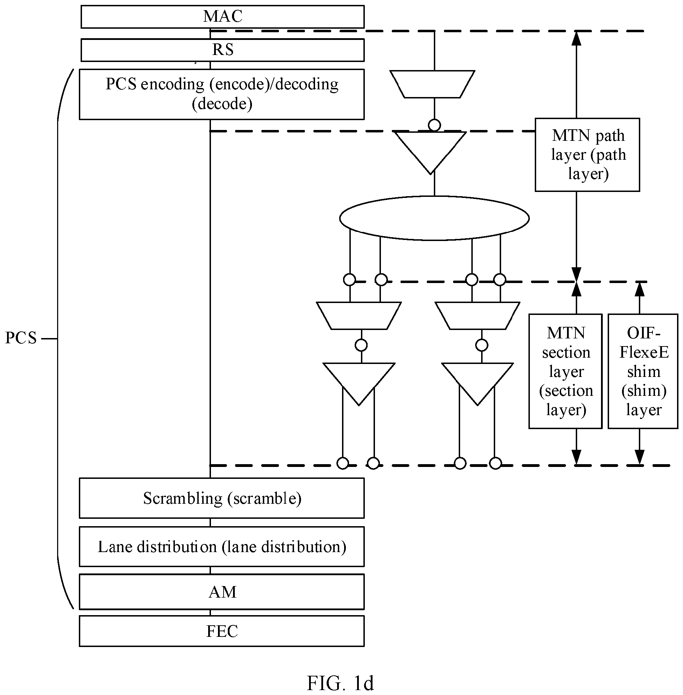

FIG. 1d is a schematic diagram of an example of an architecture of another protocol stack model to which embodiments of this application are applicable. The protocol stack model is a protocol stack of the MTN network. As shown in FIG. 1d, from a perspective of a protocol stack, an OIF-FlexE shim (shim) is equivalent to an MTN section layer (section layer) in terms of functions. The MTN section layer may be compatible with the FlexE, and a frame format of the MTN section layer may still use a FlexE frame format.

The PCS in FIG. 1d may include an MTN path adaptation (MTN path adaptation) layer, an MTN path trail termination (MTN path trail termination) layer functional module, an MTN path connection (MTN path connection) functional module, an MTN section adaptation (MTN section adaptation) layer functional module, and an MTN section trail termination (MTN section trail termination) functional module.

As shown in FIG. 1d, a data stream sent by a transmitter may sequentially pass through a MAC and an RS, and enter an MTN path layer (path layer) in an MTN domain. After being encoded by using a PCS encoding (encoding) module at the MTN path layer, the data stream may be referred to as a code block stream (for example, a 64B/66B code block stream). Further, overhead information such as path layer OAM may further be inserted into the 64B/66B code block stream at the MTN path layer, and a corresponding forwarding port and slot may be found at the MTN path layer by using the MTN path connection functional module. Then, the code block stream may enter the MTN section layer (section layer) from the MTN path layer, and may be interleaved with another code block stream at the MTN section layer through rate adaptation. Overhead information such as section layer OAM may be inserted into an interleaved code block stream at the MTN section layer, and then the code block stream enters a PHY bottom layer through adaptation for transmission. It should be noted that the adaptation function is not a function in the MTN domain. After adaptation, the code block stream is transcoded from 64B/66B to 256B/257B at the FEC layer. A transcoded code block stream is sent to a physical link for transmission and sending.

As shown in FIG. 1d, the data stream received by a receiver may be processed by the FEC sublayer, the MTN section layer, the MTN path layer, and the like in sequence. In a receiving process, after receiving a code block stream, the FEC sublayer of the receiver first performs FEC error correction, and then converts a coding format of the data stream (for example, converts a 256B/257B code block stream into a 64B/66B code block stream). Then, the code block stream enters the MTN section layer. After the section layer performs processing and de-interleaving on the code block stream, the code block stream is restored to each single MAC 64B/66B code block stream in the MTN section adaptation layer. Then, each 64B/66B code block stream is forwarded at the MTN path connection functional module.

It can be learned from FIG. 1d that, the MTN section layer is similar to the FlexE, and may provide a point-to-point link. The MTN path layer may provide a function of cross-connection from an ingress port to an egress port of the apparatus, in other words, the MTN path layer may connect a point-to-point link of the MTN section layer in series to form a complete path from a network ingress to a network egress.

It should be noted that, in the system architecture shown in FIG. 1d, the data stream at the MTN path layer may be compiled into a group of bits, for example, a code block including 66 bits, in a fixed format by using the PCS encoding (encoding) module. The FEC sublayer is related to conversion of a coding format. For example, a code block stream in a 64B/66B coding format may be converted into a code block stream in a 256B/257B coding format at the FEC layer. The code block stream in embodiments of this application may be a code block stream related to the MTN path layer, or may be a code block stream related to the FEC sublayer.

The following describes some nouns and terms in embodiments of this application.

### (1) Large-granularity service and fine-granularity service

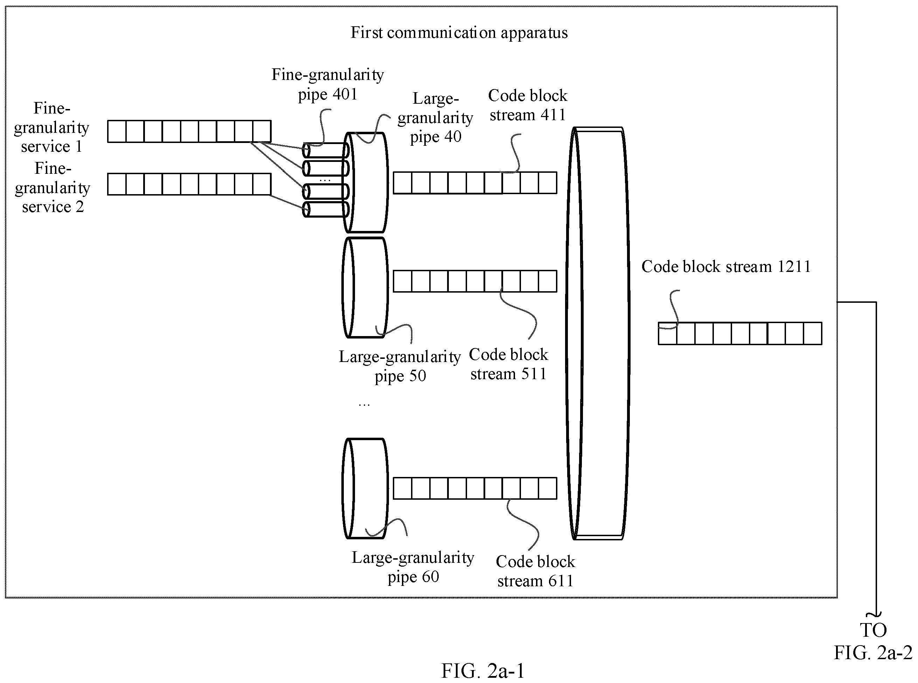

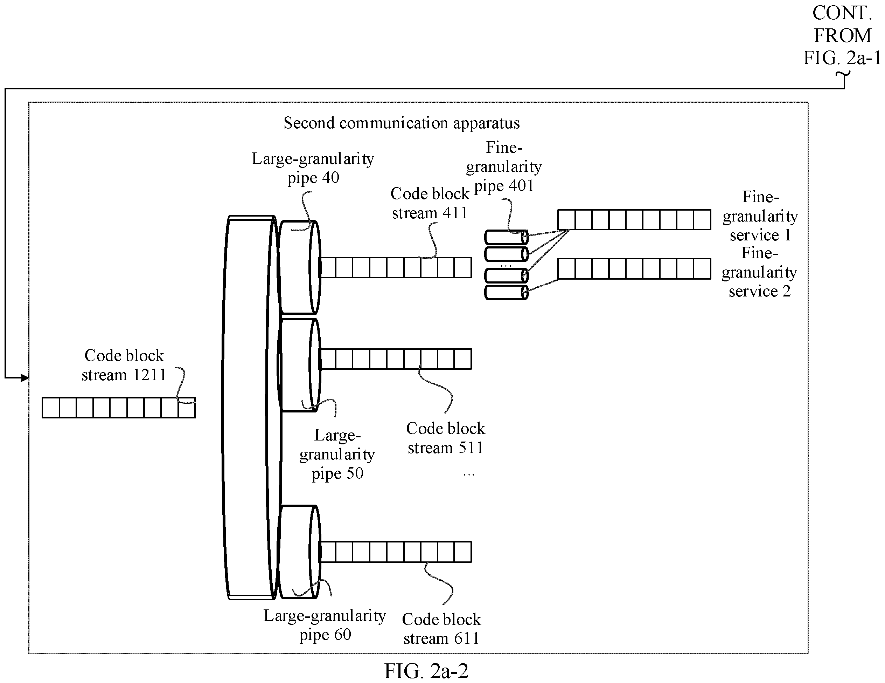

Based on the foregoing descriptions, FIG. 2a-1 and FIG. 2a-2 show an example of a possible pipe division solution of a communication apparatus based on FIG. 1a. As shown in FIG. 2a-1 and FIG. 2a-2, pipes are obtained by dividing an interface of the first communication apparatus and an interface of the second communication apparatus. In embodiments of this application, two terms are defined: a large-granularity pipe and a fine-granularity pipe. The large-granularity pipe and the fine-granularity pipe are relative. One large-granularity pipe may be divided into at least two fine-granularity pipes, and a bandwidth of the large-granularity pipe is greater than a bandwidth of the fine-granularity pipe. In embodiments of this application, slot allocation of the MTN/FlexE may be performed at a granularity of 5 Gbps, and at least one path of the MTN/FlexE with a slot granularity of 5 Gbps may be referred to as a large-granularity pipe. It should be noted that, in embodiments of this application, a path with a slot granularity of 5 Gbps may be referred to as a large-granularity pipe, or a plurality of paths each with a slot granularity of 5 Gbps may be referred to as a large-granularity pipe. Correspondingly, a pipe obtained through division in a slot of a large-granularity pipe may be referred to as a fine-granularity pipe. To describe embodiments of this application more clearly, an example in which a path with a slot granularity of 5 Gbps is referred to as a large-granularity pipe is used for subsequent description. Based on the MTN/FlexE technology, an Ethernet hard private line technology provides a pipe bandwidth with a finer granularity. The pipe with a finer bandwidth granularity provided by the Ethernet hard private line technology may be referred to as a fine-granularity pipe, and the fine-granularity pipe is used to carry one or more fine-granularity services.

The fine-granularity service in embodiments of this application may be relative to the large-granularity service. The fine-granularity service may be a service whose bandwidth is less than a bandwidth of a large-granularity pipe. For example, a service whose bandwidth requirement is 10 Mbps or 100 Mbps may be referred to as a fine-granularity service. In embodiments of this application, a node that needs to multiplex or demultiplex a fine-granularity service is referred to as a fine-granularity node, and a node that needs to multiplex and demultiplex a large-granularity service is referred to as a large-granularity node. A node on a transmission path may be or may not be a fine-granularity node.

FIG. 2a-1 and FIG. 2a-2 show a possible service transmission method as an example. With reference to FIG. 2a-1 and FIG. 2a-2, an example is provided for description. As shown in FIG. 2a-1 and FIG. 2a-2, a large-granularity pipe 40 is divided into 480 fine-granularity pipes 401, and each fine-granularity pipe corresponds to one sub-slot resource. Code block streams of fine-granularity services are multiplexed according to a correspondence between a fine-granularity service and a sub-slot, to obtain a code block stream 411 corresponding to the large-granularity pipe 40. The first communication apparatus includes slots corresponding to 20 large-granularity pipes. Each large-granularity pipe corresponds to one slot. Another large-granularity pipe other than the large-granularity pipe 40 is used to carry a large-granularity service. There is a correspondence between the large-granularity service and the slot. In other words, there is a correspondence between the large-granularity service and each large-granularity pipe. Then, code block streams (for example, the code block stream 411, a code block stream 511 corresponding to a large-granularity pipe 50, and a code block stream 611 corresponding to a large-granularity pipe 60 shown in the figure) corresponding to the large-granularity pipes are multiplexed, to obtain a code block stream 1211. Then, the code block stream 1211 is sent to the second communication apparatus.

As shown in FIG. 2a-1 and FIG. 2a-2, the second communication apparatus demultiplexes the code block stream 1211, to obtain the code block streams corresponding to the large-granularity pipes, for example, the code block stream 411, the code block stream 511, and the code block stream 611 shown in the figure. In FIG. 1d, the second communication apparatus further demultiplexes the code block stream 411, to obtain a fine-granularity service 1 and a fine-granularity service 2.

### (2) Code block

One code block mentioned in embodiments of this application is one bit or a plurality of consecutive bits, and information carried in one code block may be information carried in a bit included in the code block.

The code block in embodiments of this application may also have another replaceable name, for example, may alternatively be a data unit, a bit block, or a flit (flit). In embodiments of this application, some embodiments described by using a code block as an example are also applicable to a flit scenario.

The code block in embodiments of this application may include two types: a data-type code block and a control-type code block. A bit of the data-type code block may be used to carry an actual data payload, and a bit of the control-type code block may be used to carry control information.

The data-type code block may be a data-type code block in the FlexE technology/MTN, or may be one bit or a plurality of consecutive bits in a field, in a data frame of an OSU service, that carries a payload.

The control-type code block may include at least one of a header code block, a tail code block, an idle code block, an operations, administration, and maintenance code block, an error code block, or a low-power code block in the FlexE technology/MTN. The control-type data unit may further include one bit or a plurality of consecutive bits in an overhead area (an area carrying overhead information) in the data frame of the OSU service.

### (2.1) An example of a concept, defined in embodiments of this application, of a "code block" in a 64B/66B coding format

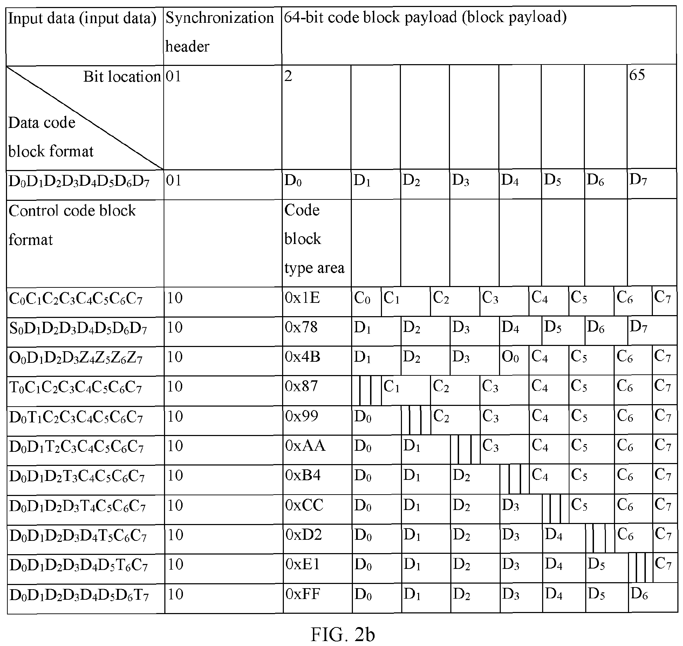

FIG. 2b is a schematic diagram of an example of a structure of a code block in a 64B/66B coding format defined in a standard. As shown in FIG. 2b, the code block is defined in the IEEE Std 802.3-2018.IEEE Standard for Ethernet SECTION SIX. As shown in FIG. 2b, a synchronization header area of the code block includes a bit 0 and a bit 1 of the code block. The synchronization header area of the code block has two cases: 01 and 10. A code block whose synchronization header is 01 is referred to as a data code block, and the data code block may be written as a D code block. A code block whose synchronization header is 10 is referred to as a control code block. A field after a synchronization header of the control code block occupies 8 bits, and may be referred to as a type field (the type field may be denoted as a type field) of the control code block.

The control code block may include a header code block, a tail code block, an ordered set (Ordered set) code block (which may also be denoted as an O code block), an idle code block (which may also be denoted as an IDLE code block), an error code block (which may also be denoted as an error code block), a low-power code block, and the like. In embodiments of this application, the header code block is a code block whose synchronization header is 10 and whose type field is 0x78 in FIG. 2b, and may be denoted as an S code block. In embodiments of this application, the tail code block may be denoted as a T code block. Tail code blocks include code blocks whose synchronization header is 10 and whose type fields are 0x87, 0x99, 0xAA, 0xB4, 0xCC, 0xD2, 0xE1, and 0xFF in FIG. 2b. In embodiments of this application, the O code block is a code block whose synchronization header is 10 and whose type field is 0x4B in FIG. 2b. In embodiments of this application, a control code block other than an S code block and a T code block in control code blocks may be denoted as a C code block.

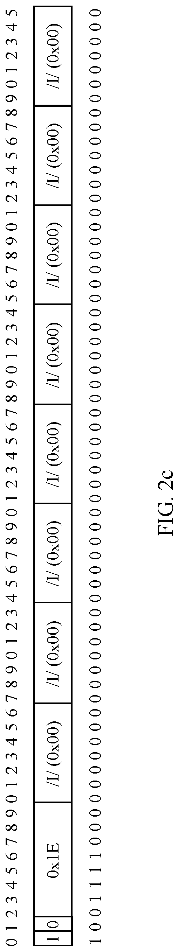

FIG. 2c shows an example of a structure form of an idle code block. As shown in FIG. 2c, a synchronization header area of an idle code block is 10, and other content is shown in the figure. A code block in embodiments of this application is described by using structure forms of code blocks shown in FIG. 2b and FIG. 2c as examples. However, embodiments of this application are also applicable to code block forms, for example, 8B/10B and 256B/257B, defined in other standards.

### (2.2) An example of a concept, defined in embodiments of this application, of a "code block" in a data frame of an OSU service

One code block mentioned in embodiments of this application is one bit or a plurality of consecutive bits, and information carried in one code block may be information carried in a bit included in the code block. For ease of understanding, in the OSU service, a code block is referred to as a bit block. One bit block is one bit or a plurality of consecutive bits. A data-type code block is referred to as a data-type bit block, and a control-type code block is referred to as a control-type bit block.

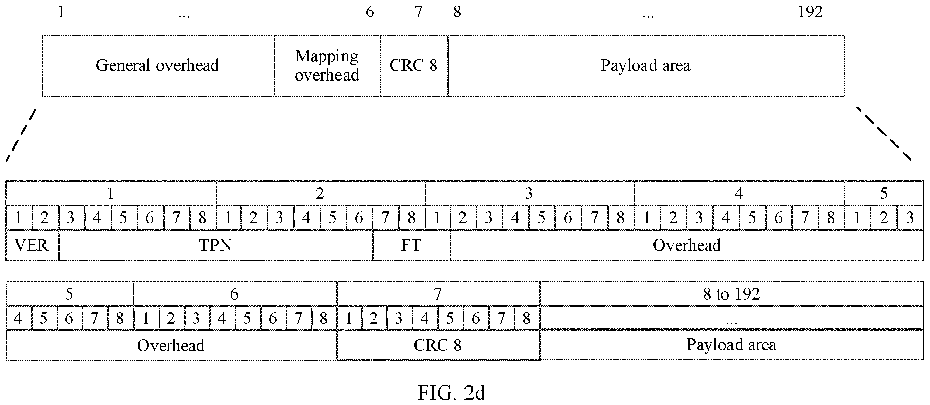

FIG. 2d is a schematic diagram of an example of a possible frame structure corresponding to an OSU service. As shown in FIG. 2d, a length of the data frame may be 192 bytes. A first byte to a seventh byte are an overhead area, and an eighth byte to a 192^{th} byte are a payload area. The overhead area may include a general overhead, a mapping overhead, and cyclic redundancy check (cyclic redundancy check, CRC) 8.

The general overhead may include other general overheads such as a version (version, VER), a tributary port number (tributary port number, TPN), and a frame type (frame type, FT).

The version (version, VER) may be used to identify a version of the frame structure. The TPN may be used to identify a correspondence between a tributary port and a frame. The FT may be used to identify a frame type. The other general overheads may include functions such as connectivity verification (connectivity verification, CV), a bandwidth (bandwidth, BW) indication, tandem connection monitoring (tandem connection monitoring, TCM), and path monitoring (path monitoring, PM).

Information carried by the mapping overhead is related to a type of a mapped service, and different overhead functions may be set based on different requirements of a carried service. The mapping overhead is mainly classified into a constant bit rate (constant bit rate, CBR) mapping overhead, an Ethernet mapping overhead, and the like. The CBR mapping overhead mainly includes a timestamp (TS), a payload length (PLn), and the like.

The data-type bit block (which may also be referred to as a data-type code block) in embodiments of this application may include one bit or a plurality of consecutive bits in the payload area of the data frame shown in FIG. 2d. For example, the eighth byte to the 192^{th} byte of the data frame may be referred to as a data-type bit block or a data-type code block.

The control-type bit block (which may also be referred to as a control-type code block) in embodiments of this application may include one bit or a plurality of consecutive bits in the overhead area of the data frame shown in FIG. 2d. For example, one bit or a string of consecutive bits in at least one of the general overhead, the mapping overhead, or the CRC 8 may be referred to as a control-type bit block or a control-type code block.

### (2.2) Code block stream

In embodiments of this application, a data stream on a code block basis is referred to as a code block stream, for example, a first code block stream and a fourth code block stream in embodiments of this application. The code block stream in embodiments of this application may also have another name, for example, a code block sequence. The name is not specifically limited in embodiments of this application.

In embodiments of this application, there may be a plurality of forms of a segment of consecutive code blocks in one of the "first code block stream", the "fourth code block stream", a "fifth code block stream", a "sixth code block stream", a "seventh code block stream", a "third code block stream", and a "second code block stream". For example, the following is an example:
...SDDDD...
...DDDDD...
...DDDT...
...DDDTI...
...TIIISDDD...
...TOS...
...TIOS...

In the foregoing example, S indicates a header code block, D indicates a data code block, T indicates a tail code block, I indicates an idle code block, and O indicates an O code block.

It can be learned from the foregoing example that the code block sequence in embodiments of this application may include a plurality of code block types, for example, the S code block, the D code block, and the T code block. For another example, the code block sequence further includes the I code block and the O code block. A specific quantity of code blocks in the code block stream is not limited, and only a possible existence form of a segment of consecutive code blocks in one code block sequence in embodiments of this application is listed.

It should be noted that, in embodiments of this application, one of the "first code block stream", the "fourth code block stream", the "fifth code block stream", the "sixth code block stream", the "seventh code block stream", the "third code block stream", and the "second code block stream" may alternatively be a data stream of the OSU service. The data stream of the OSU service may include one or more data frames shown in FIG. 2d. Each data frame may include a control-type bit block and a data-type bit block.

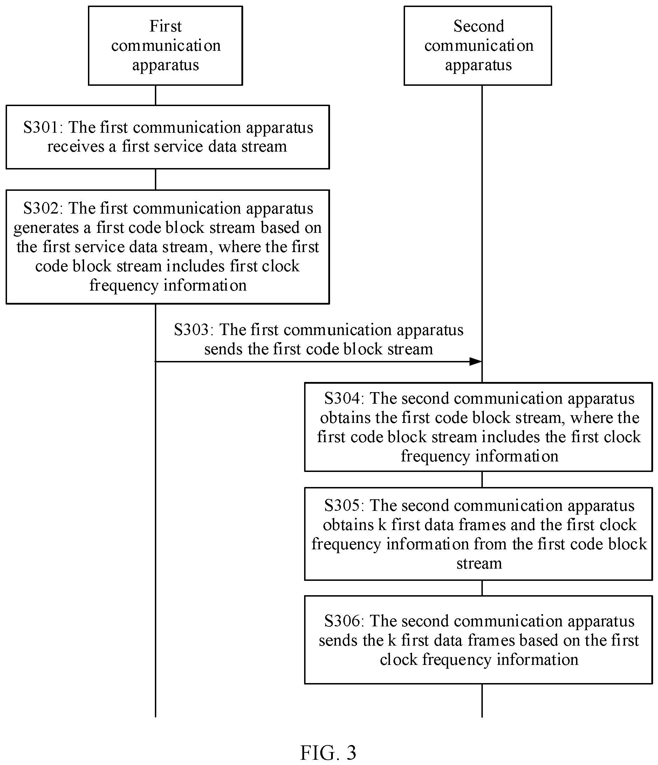

Based on the foregoing descriptions, FIG. 3 is a schematic interaction diagram of an example of a communication method according to an embodiment of this application. As shown in FIG. 3, the method includes the following steps.

S301: A first communication apparatus receives a first service data stream.

In a possible implementation, the first communication apparatus receives the first service data stream sent by a source.

S302: The first communication apparatus generates a first code block stream based on the first service data stream. The first code block stream includes first clock frequency information.

In a possible implementation, the first clock frequency information may indicate a moment at which the first communication apparatus receives k first data frames of the first service data stream.

In another possible implementation, the first clock frequency information may indicate transmission duration of k first data frames of the first service data stream.

In still another possible implementation, the first clock frequency information may indicate a moment at which the first communication apparatus receives k first data frames of the first service data stream, and may further indicate transmission duration of the k first data frames of the first service data stream.

In S302, the first code block stream may include at least one piece of clock frequency information, and the first clock frequency information is one of the at least one piece of clock frequency information. The clock frequency information in embodiments of this application may alternatively be another name, for example, a service frame frequency, a service bit rate, a count value at an arrival moment of a service frame header, a count difference between a service frame header and a frame header, a clock frequency (clock frequency), or client clock frequency information. For ease of description, the name "clock frequency information" is used as an example for description in embodiments of this application.

The first service data stream may include a plurality of data frames. For differentiation, in embodiments of this application, a data frame (one data frame or a plurality of consecutive data frames) corresponding to the first clock frequency information is referred to as a first data frame, and a total quantity of data frames corresponding to the first clock frequency information is identified as k. One piece of clock frequency information in the at least one piece of clock frequency information of the first code block stream may correspond to one or more data frames, and one piece of clock frequency information may be clock frequency information indicating a corresponding data frame received by the first communication apparatus. One piece of clock frequency information may indicate transmission duration of the data frame corresponding to the clock frequency information, or may be understood as duration of the data frame, corresponding to the clock frequency information, received by the first communication apparatus. For example, the first clock frequency information may indicate the duration in which the first communication apparatus receives the k first data frames.

S303: The first communication apparatus sends the first code block stream.

S304: A second communication apparatus obtains the first code block stream. The first code block stream includes first clock frequency information.

S305: The second communication apparatus obtains the k first data frames and the first clock frequency information from the first code block stream.

S306: The second communication apparatus sends the k first data frames based on the first clock frequency information.

In a possible implementation, the second communication apparatus sends the k first data frames to a sink. Correspondingly, the sink receives the k first data frames.

The first code block stream sent by the first communication apparatus includes the first clock frequency information. Therefore, the second communication apparatus may send the k first data frames based on the first clock frequency information, so that a clock frequency of the k first data frames sent by the second communication apparatus are basically consistent with a clock frequency of the k first data frames received by the first communication apparatus. This can resolve transparent transmission of clock frequency information of a service.

The following describes the service data stream in embodiments of this application. In embodiments of this application, the data stream received by the first communication apparatus is referred to as a service data stream. Embodiments of this application relate to a plurality of service data streams, for example, a first service data stream, a second service data stream 1, a second service data stream 2, and a second service data stream 3. In this embodiment of this application, the first service data stream is used as an example to describe the service data stream in embodiments of this application. For related descriptions of another service data stream, refer to related descriptions of the first service data stream. Details are not described again.

The first service data stream in this embodiment of this application may be a CBR service data stream, for example, may include but is not limited to a European transmission level 1 (European transmission level 1, E1), synchronous (synchronous, STM-1), a CPRI, and serial digital information (serial digital information, SDI).

The first service data stream in this embodiment of this application may alternatively be a data stream that does not have an Ethernet frame format but has a constant rate and a time division multiplexing (Time Division Multiplexing, TDM) frame structure. This type of data stream may also be referred to as a CBR service.

Table 1 and Table 2 are used as examples below to show related information of several service data streams. The service data streams (for example, the first service data stream, the second service data stream 1, the second service data stream 2, and the second service data stream 3) in this embodiment of this application may be data streams of services shown in Table 1 and Table 2.

For clearer display, for some English abbreviations in Table 1 and Table 2, refer to descriptions at other locations in this application. For other English abbreviations, refer to the following descriptions:
a megabyte (megabyte, MB) (MB may also be referred to as G), bit per second (bit/s), a gigabyte (gigabyte, GB) (GB may also be referred to as G), a synchronous optical network (synchronous optical network, SONET), an optical carrier (optical carrier, OC), a generic requirement (generic requirement, GR), a core (CORE), the American National Standards Institute (American National Standards Institute, ANSI), plesiochronous digital hierarchy (plesiochronous digital hierarchy, PDH), a transmission level 1 (Transmission Level 1, T1), fast Ethernet (fast Ethernet, FE), the American Institute of Electrical and Electronics Engineers (Institute of Electrical and Electronics Engineers, IEEE), Gigabit Ethernet (Gigabit Ethernet, GE), 10 Gigabit Ethernet (10 Gigabit Ethernet, 10 GE), a local area network (local area network, LAN), a wide area network (wide area network, WAN), a storage area network (storage area network, SAN), a fiber channel (fiber channel, FC), fiber connection (fiber connection, FICON), an enterprise systems connection architecture (enterprise systems connection architecture, ESCON), a fiber distributed data interface (fiber distributed data interface, FDDI), idle speed control (idle speed control, ISC), the International Organization for Standardization (International Organization for Standardization, ISO), the International Business Machines Corporation (International Business Machines corporation, IBM), the geographically distributed parallel sysplex (geographically dispersed parallel sysplex, GDPS), an optical transform unit (optical transform unit, OTU), an enhanced common public radio interface (enhanced common public radio interface, eCPRI), the Open Base Station Architecture Initiative (Open Base Station Architecture Initiative, OBSAI), a reference point (reference point, RP), the European Standard (EUROPÄISCHE NORM, EN), a digital video broadcasting asynchronous serial interface (digital video broadcasting asynchronous serial interface, DVB-ASI), a standard definition-serial digital interface (standard definition-serial digital interface, SD-SDI), a high definition-serial digital interface (high definition-serial digital interface, HD-SDI), a 3G-serial digital interface (3G-serial digital interface, 3G-SDI), the Society of Motion Picture and Television Engineers (Society of Motion Picture and Television Engineers, SMPTE), the recommended standard (Recommended Standard, RS), the American Electronic Industries Association (Electronic Industries Association, EIA), and a registered jack (Registered Jack, RJ).

**Table 1 Related information of several types of service data streams**

| Service type | Service type | Service rate | Reference standard |
|---|---|---|---|
| SDH | STM-1 | 155.52 MB bit/s | ITU-T |
| | STM-4/STM-16/STM-64 | 622.08 MB/2.488 GB/9.95 Gbit/s | G.707/G.691/G.957/G.693/ G.783/G.825 |
| SONET | OC-3 | 155.52 Mbit/s | GR-253-CORE/GR-1377-CORE/ANSIT1.105 |
| | OC-12/OC-48/OC-192 | 622.08 M/2.5 G/9.95 Gbit/s | |
| PDH | E1 electrical port | 2.048 Mbit/s | ITU-T |
| | | | G.703/G.823/G.783/G.824/ G.742 |
| | T1 | 1.544 Mbit/s | ITU-T |
| | | | G.703/G.823/G.824/G.783 |
| Ethernet | FE | 125 Mbit/s (a service of 100 Mbit/s) | IEEE 802.3u |
| | GE | 1.25 Gbit/s (a service of 1 Gbit/s) | IEEE 802.3ab/802.3z |
| | 10GE LAN | 10.31 Gbit/s (a service of 10 Gbit/s) | IEEE 802.3ae |
| | 10GE WAN | 9.95 Gbit/s | |
| | 25GE LAN/25GE | 25.78 Gbit/s | IEEE 802.3by |
| | LAN_FEC | | |
| SAN | FC100/FICON | 1.06 Gbit/s | ANSI |
| | FC200/FICON Express | 2.12 Gbit/s | X3.230/X3.296/X3.303 |
| | (Express) | | |
| | ESCON | 200 Mbit/s | |
| | FC400/FICON 4 GB | 4.25 Gbit/s | |
| | FC800/FICON 8 GB | 8.5 Gbit/s | |
| | FC1200/FICON 10 GB | 10.51 Gbit/s | |
| | FC1600/FC3200 | 14.025 G/28.05 Gbit/s | |
| | FDDI | 125 Mbit/s | ISO9314 |
| | InfiniBand^{™} | 2.5/5/10 Gbit/s | InfiniBand^{™} Architecture Release (Architecture Release) 1.2.1 |
| | 2.5G/5G/10G | | |
| | ISC 1G/2G | 1.06 G/2.12 Gbit/s | IBM GDPS |

**Table 2 Related information of several types of service data streams**

| Service type | Service type | Service rate | Reference standard |
|---|---|---|---|
| OTN | OTU1 | 2.67 Gbit/s | ITU-T G.709/G.959.1 |
| | OTU2 | 10.71 Gbit/s | |
| | OTU2e | 11.10 Gbit/s | |
| Distributed base station service interface | CPRI options 1 to 9 | 614.4 Mbit/s to 12.165 Gbit/s | CPRI specification V4.1 |
| | CPRI option 10/CPRI option 10_FEC | 24.33 Gbit/s | |
| | 10GE eCPRI | 10.31 Gbit/s | eCPRI specification V1.2 |
| | 25GE eCPRI/25GE eCPRI_FEC | 25.78 Gbit/s | |
| Open base station service interface | OBSAI 4x/OBSAI 8x | 3.072/6.144 Gbit/s | OBSAI RP3 specification V4.2 |
| Video | DVB-ASI | 270 Mbit/s | EN 50083-9 |
| | SD-SDI | 270 Mbit/s | SMPTE 259M |
| | HD-SDI | 1.485 Gbit/s or 1.4835 Gbit/s | SMPTE 292M |
| | 3G-SDI | 2.97 Gbit/s or 2.96 Gbit/s | SMPTE 424M |
| Conventional relay protection service | C37.94 | 2 Mbit/s | IEEE C37.94 |
| | CoDir64K | 64 Kbit/s | ITU-T G.703 standard codirectional 64K interface |
| | 2M optical interface | 2 Mbit/s | Interface Specification for Relay Protection Device of China Southern Power Grid |
| Serial digital interface | X.21/V.24/V.35 | N*64 Kbit/s | ITU-T X.21/V24/V35 |
| | RS-232/RS-422/RS-485 | N*64 Kbit/s | EIA-RS-232/EIA-422-A/EIA485-A |
| | Z&M telephone voice RJ-48c | 64 Kbit/s | ITU-T Q552 |

In S302, the at least one piece of clock frequency information of the first code block stream may further include second clock frequency information. For differentiation, in embodiments of this application, a data frame (one data frame or a plurality of consecutive data frames) corresponding to the second clock frequency information is referred to as a second data frame, and there may be one or more second data frames. The second clock frequency information may indicate transmission duration of the second data frame of the first service data stream.

In a possible implementation, each of the at least one piece of clock frequency information corresponds to k data frames. In this case, the second clock frequency information indicates transmission duration of k second data frames of the first service data stream, and/or a transmission moment at which the first communication apparatus receives the k second data frames. It may also be understood that, for the first service data stream, the first communication apparatus determines the clock frequency information of the k data frames once every k data frames. After S304, the second communication apparatus may further obtain the second clock frequency information and the k second data frames from the first code block stream, and send the k second data frames based on the second clock frequency information. For related descriptions of the second clock frequency information, refer to related descriptions of the first clock frequency information. Details are not described again.

In still another possible implementation, a quantity of second data frames may be different from the quantity of first data frames. When the quantity of first data frames is different from the quantity of second data frames, the first communication apparatus may send the quantity of data frames corresponding to the first clock frequency information and the quantity of data frames corresponding to the second clock frequency information to the second communication apparatus, so that the second communication apparatus determines data frames separately corresponding to the first clock frequency information and the second clock frequency information.

In S302, the first clock frequency information may have the following plurality of implementations. The following uses examples for description by using an implementation a1, an implementation a2, an implementation a3, an implementation a4, an implementation a5, an implementation a6, an implementation a7, an implementation a8, an implementation a9, an implementation a10, and an implementation a11.

### Implementation a1:

In the implementation a1, the first clock frequency information includes a first count value, and the first count value is a quantity of periods of a clock frequency of a local clock signal of the first communication apparatus in duration in which the first communication apparatus receives the k first data frames. The first clock frequency information may indicate the transmission duration of the k first data frames of the first service data stream.

The period of the clock frequency in embodiments of this application may also be referred to as a clock period, an oscillation period, or the like. Duration of one period of the clock frequency is a reciprocal of the clock frequency. The quantity of periods of the clock frequency of the local clock signal of the first communication apparatus may also be referred to as a quantity of clock periods, a quantity of oscillation periods, a quantity of oscillation times, and the like of the local clock signal of the first communication apparatus.

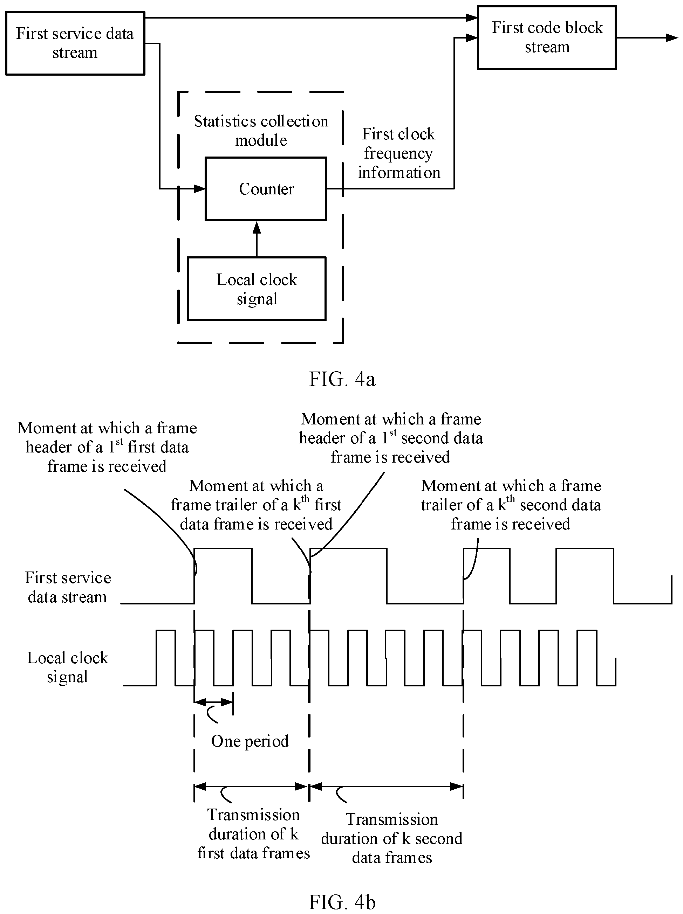

FIG. 4a is a schematic flowchart of an example of a data transmission method on a first communication apparatus side according to an embodiment of this application. As shown in FIG. 4a, the first communication apparatus receives the first service data stream. The first service data stream may be a service at a constant rate, and a bit rate of the first service data stream may be denoted as R_{client}. The first service data stream may be sent by a source communication apparatus to the first communication apparatus by using a bit width of n bits, where n is a positive integer.

Further, the first communication apparatus may collect statistics on the first clock frequency information of the k first data frames of the first service data stream by using a statistics collection module. Specifically, a frame header of a 1^{st} first data frame in the k first data frames may be identified, and a counter is started (for example, the first communication apparatus starts the counter at a moment at which a first bit of the frame header of the 1^{st} first data frame is received). The counter counts the quantity of periods of the clock frequency of the local clock signal of the first communication apparatus (the clock frequency of the local clock signal of the first communication apparatus may be denoted as f_{source}). The counter continuously performs counting until a frame trailer of a k^{th} first data frame is identified, and the counter is stopped (for example, the first communication apparatus stops the counter at a moment at which a last bit of the frame trailer of the k^{th} first data frame is received). In this case, a value of the counter is the first count value. In this embodiment of this application, the first count value may be represented as N_{source}. Further, the first communication apparatus may encapsulate the first service data stream, to obtain the first code block stream; place the first count value in the first code block stream; and send the first code block stream to the second communication apparatus.

It should be noted that, in this embodiment of this application, the frame header of the data frame of the first service data stream includes a frame header identifier, and the first communication apparatus and the second communication apparatus may identify the frame header of the data frame based on the frame header identifier. Similarly, the frame trailer of the data frame includes a frame trailer identifier, and the first communication apparatus and the second communication apparatus may identify the frame trailer of the data frame based on the frame trailer identifier. The data frame may be a PCM frame. During specific implementation, a length of one PCM frame may be 256 (32 * 8 = 256) bits.

FIG. 4b is a schematic diagram of an example of collecting statistics on the first count value. As shown in FIG. 4b, one square wave of the first service data stream may indicate the transmission duration of the k data frames, for example, the transmission duration of the k first data frames and the transmission duration of the k second data frames shown in FIG. 4b. The counter is started at a moment at which the frame header of the 1^{st} first data frame is received, counts the quantity of periods of the clock frequency of the local clock signal of the first communication apparatus, and is stopped at a moment at which the frame trailer of the k^{th} first data frame is received. A current value of the counter is the first count value. For example, transmission duration of one PCM frame may include one period of a local clock signal of an 8 kHz first communication apparatus, or may include 256 periods of a local clock signal of a 2.048 MHz first communication apparatus.

Similarly, the counter is started at a moment at which a frame header of a 1^{st} second data frame is received, to count the quantity of periods of the clock frequency of the local clock signal of the first communication apparatus, and the counter is stopped at a moment at which a frame trailer of a k^{th} second data frame is received. A current value of the counter is the second clock frequency information. In FIG. 4b, an example in which the k^{th} first data frame and the 1^{st} second data frame are two consecutive data frames is used for presentation. During actual application, a relationship between the k first data frames and the k second data frames is not limited.

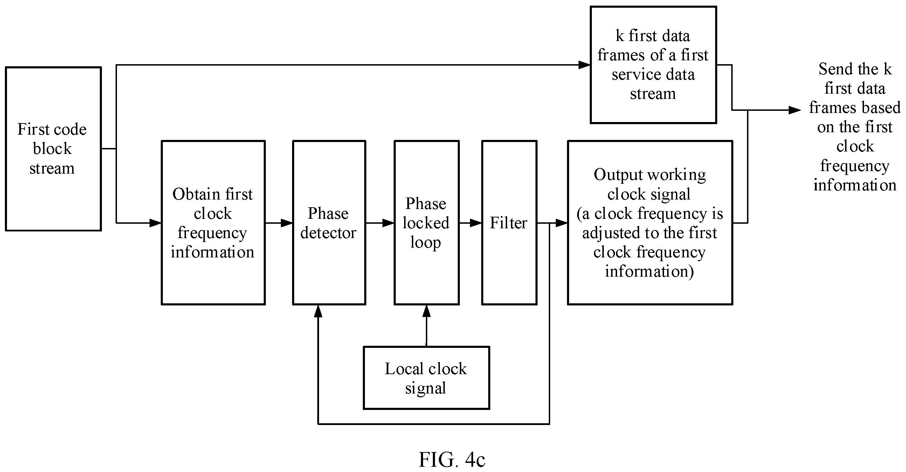

FIG. 4c is a schematic flowchart of an example of a data transmission method on a second communication apparatus side according to an embodiment of this application. As shown in FIG. 4c, the second communication apparatus obtains the first code block stream. The first clock frequency information (namely, the first count value N_{source}) is extracted from the first code block stream, and a frequency of a local clock signal of the second communication apparatus synchronizes with the frequency of the local clock signal of the first communication apparatus. In this case, the second communication apparatus may output a working clock signal based on the local clock signal of the second communication apparatus and the first clock frequency information. A clock frequency of the working clock signal is a clock frequency indicated by the first clock frequency information. The second communication apparatus may implement, by using a phase detector, a phase-locked loop, and a filter, the foregoing solution of outputting the working clock signal based on the local clock signal of the second communication apparatus and the first clock frequency information. The phase-locked loop and the filter are in a cascading relationship. The phase detector may also be considered as an internal structure of the phase-locked loop. An input of the phase detector may be the local clock signal of the second communication apparatus and the clock frequency indicated by the first clock frequency information. The phase-locked loop and the filter output the working clock signal based on a value output by the phase detector and the local clock signal of the second communication apparatus.

In another aspect, the second communication apparatus may decapsulate the first code block stream, to obtain the k first data frames of the first service data stream. Further, the second communication apparatus may send the k first data frames based on the clock frequency indicated by the first clock frequency information.

It can be learned from the implementation a1 that, on a basis of the frequency of the second communication apparatus synchronizing with the frequency of the first communication apparatus, the first communication apparatus and the second communication apparatus may resolve transparent transmission of clock frequency information of a service by transmitting the first count value. The solution is simple, and a quantity of bits occupied by the transmitted first count value may be small.

In still another possible implementation, the local clock signal of the first communication apparatus and the local clock signal of the second communication apparatus have a same frequency, and a frequency of the local clock signal of the first communication apparatus synchronizes with a frequency of the local clock signal of the second communication apparatus. For example, both the local clock signal of the first communication apparatus and the local clock signal of the second communication apparatus are 100 MHz signals. In this way, the second communication apparatus may send the k second data frames based on the clock frequency information, indicated by the first count value, of the k first data frames, to resolve transparent transmission of clock frequency information of a service.

### Implementation a2:

In the implementation a2, the first clock frequency information includes a second count value, and the second count value is a difference between a first count value and a preset count value. The first clock frequency information may indicate the transmission duration of the k first data frames of the first service data stream.

A difference between the implementation a2 and the implementation a1 is that the first clock frequency information is the second count value instead of the first count value. For other descriptions, refer to the implementation a1. Details are not described again. It should be noted that the second count value may be a positive number or a negative number. In a possible implementation, the first clock frequency information may include two parts: a sign (a positive sign or a negative sign) of the second count value, and an absolute value of the second count value.

In the implementation a2, a reference clock signal may be set, and a clock frequency of the reference clock signal is f_{ref}. The clock frequency f_{ref} of the reference clock signal may also be referred to as a reference clock frequency. For given preset duration, a quantity of periods of the clock frequency of the reference clock signal in the preset duration is the preset count value, and the preset count value may be denoted as N_{ref}. For example, a reference clock signal without a frequency offset is preset in the first communication apparatus, where f_{ref}=155.52 MHz, and transmission duration of one data frame is, for example, 125 microseconds. In this case, a quantity of clock periods included in the reference clock signal within 125 microseconds may be used as the preset count value.

In a possible implementation, the preset count value may be defined as that N_{ref} is a quantity of clock periods of f_{ref} in the preset duration, and is an integer. In a possible implementation, to make the first clock frequency information transmitted by the first communication apparatus to the second communication apparatus occupy fewer bits, the difference between the first count value and the preset count value may be transmitted to resolve transparent transmission of clock frequency information of a service. To make the difference occupy fewer bits, the preset count value may be close to the first count value. In a possible implementation, the preset duration may be set based on an average value of the transmission duration of the k data frames of the first service data stream. For example, the preset duration is equal to an average value of transmission duration of at least one group of data frames (a group of data frames includes k data frames) of the first service data stream, or the preset duration is close to an average value of transmission duration of at least one group of data frames of the first service data stream. In still another possible implementation, a difference between preset duration and the transmission duration of the k first data frames is less than a preset difference threshold.

In still another possible implementation, k values may be configured in the first communication apparatus. Then, the first communication apparatus determines a quantity r of bits of the k data frames, and then multiplies r by transmission duration of each bit. An obtained value may be used as the preset duration. The transmission duration of each bit may be determined based on a transmission rate of a service data stream corresponding to the k data frames. In this implementation, it may also be understood that when it is assumed that when an actual frequency of the local clock is equal to a clock frequency of the service data stream corresponding to the k data frames, recorded transmission duration of the k data frames is used as the preset duration. It can be learned from this implementation that the first communication apparatus may determine the preset duration provided that a value of k is configured. This solution provides a possible implementation solution for determining the preset duration, and only the value of k needs to be configured in this solution. This solution is simple and easy to be promoted.

A solution performed by the second communication apparatus is similar to that in the implementation a1, and a difference lies in that the second count value is obtained when the first clock frequency information is obtained. The second communication apparatus may obtain the preset count value in advance, and may calculate the first count value with reference to the preset count value. In still another possible implementation, the local clock signal of the first communication apparatus and the local clock signal of the second communication apparatus have a same frequency, and a frequency of the local clock signal of the first communication apparatus synchronizes with a frequency of the local clock signal of the second communication apparatus. For example, both the local clock signal of the first communication apparatus and the local clock signal of the second communication apparatus are 100 MHz signals. In this way, the second communication apparatus may send the k second data frames based on clock frequency information, indicated by the second count value, of the k first data frames, to resolve transparent transmission of clock frequency information of a service. Further, the k first data frames are sent based on the first count value. For this step, refer to the foregoing implementation a1. Details are not described again.

### Implementation a3:

In the implementation a3, the first clock frequency information includes a second count value and a preset count value. The first clock frequency information may indicate the transmission duration of the k first data frames of the first service data stream.

A difference between the implementation a3 and the implementation a2 is that the first communication apparatus transmits both the second count value and the preset count value to the second communication apparatus. For other descriptions, refer to the implementation a2. Details are not described again.

In a possible implementation, sending periods of the second count value and the preset count value may be separately set. For example, the sending period of the preset count value may be larger than the sending period of the second count value. This can reduce a quantity of sending times of the preset count value, and save resources.

In this embodiment of this application, a preset count value may be set for the first service data stream, and the first communication apparatus may transfer the preset count value to the second communication apparatus based on clock frequency information (for example, the first clock frequency information) corresponding to the first service data stream. In still another possible implementation, the first communication apparatus may alternatively transfer the preset count value to the second communication apparatus for a plurality of times based on a plurality of pieces of clock frequency information of the first service data stream. For example, the preset count value may be carried in each piece of clock frequency information of the first service data stream. In still another possible implementation, a plurality of preset count values may be set for the first service data stream, and each preset count value may correspond to one or more groups of data frames (each group of data frames may include k data frames).

### Implementation a4:

In the implementation a4, the first clock frequency information includes a moment at which a frame header of a 1^{st} data frame in the k first data frame is received, and a moment at which a frame trailer of a k^{th} first data frame in the k first data frame is received. The first clock frequency information may indicate a moment at which the first communication apparatus receives the k first data frames of the first service data stream.

In the implementation a4, in a possible implementation, the second communication apparatus may calculate the transmission duration of the k first data frames based on two moments of the first clock frequency information. Therefore, it may be understood that the first clock frequency information indicates the transmission duration of the k first data frames of the first service data stream.

In the implementation a4, it may also be understood that the first clock frequency information includes two timestamps: a timestamp 1 and a timestamp 2. The timestamp 1 is the moment at which the frame header (for example, a first bit of the frame header) of the 1^{st} data frame is received, and the timestamp 2 is the moment at which the frame trailer (for example, a last bit of the frame trailer) of the k^{th} first data frame is received.

The second communication apparatus may determine the transmission duration of the k first data frames of the first service data stream based on the first clock frequency information (calculate a difference between the two timestamps in the first clock frequency information), and may further send the k first data frames in the transmission duration based on the calculated transmission duration of the k first data frames, so that the transmission duration in which the second communication apparatus sends the k first data frames is equal to or close to transmission duration in which the first communication apparatus receives the k first data frames. This can resolve transparent transmission of clock frequency information of a service.

In a possible implementation, the first clock frequency information may occupy 32 bits on a basis of nanosecond. For example, the timestamp 1 is 0000 0000 0000 0000 0000 0000 0000 0001. The timestamp 2 is 0000 0000 0000 0000 0000 0000 1000 0000. A time difference between the timestamp 2 and the timestamp 1 is 127 nanoseconds, that is, the transmission duration of the k first data frames is 127 nanoseconds.

Further, the second communication apparatus may generate, based on the difference between the two timestamps in the first clock frequency information and the local clock signal of the second communication apparatus, a working clock signal that meets a clock frequency of the k first data frames, received by the first communication apparatus, of the first service data stream, and send the k first data frames based on the working clock signal. For example, a clock frequency of the working clock signal may be calculated according to a formula (Δt1/(1/f_local)), where Δt1 is the difference between the two timestamps in the first clock frequency information, f local is a clock frequency of the local clock signal of the second communication apparatus, and units of a numerator and a denominator in the formula may be unified to nanosecond.

In still another possible implementation, the second communication apparatus may not calculate the transmission duration of the k first data frames, but directly send the k second data frames based on the clock frequency information, indicated by the two timestamps, of the k first data frames. For example, the second communication apparatus records, as a "timestamp 3", a moment at which the second communication apparatus receives the frame header (for example, a first bit of the frame header) of the 1^{st} data frame in the k first data frames. A time difference Δt2 between the timestamp 3 and the timestamp 1 is calculated. Further, the second communication apparatus records, as a "timestamp 4", a moment at which the second communication apparatus receives the frame trailer of the k^{th} data frame in the k first data frames, then calculates a time difference Δt3 between the timestamp 4 and the timestamp 2, and compares Δt3 with Δt2. During actual application, it may be assumed that a minimum delay of a network is fixed within specific time, and there is a probability that the minimum delay may also be obtained within a period of time. When a difference between Δt3 and Δt2 is less than a set threshold, if Δt3 is less than Δt2, it indicates that a data sending frequency of the second communication apparatus is slow, and the second communication apparatus may appropriately increase the data sending frequency. If Δt3 is greater than Δt2, it indicates that the data sending frequency of the second communication apparatus is fast, and the second communication apparatus may appropriately decrease the data sending frequency.

In still another possible implementation, a frequency of the local clock signal of the first communication apparatus synchronizes with a frequency of the local clock signal of the second communication apparatus. In this case, the local clock signal of the first communication apparatus and the local clock signal of the second communication apparatus may have a same frequency or different frequencies. The second communication apparatus may send the k second data frames based on the clock frequency information, indicated by the two timestamps, of the k first data frames, to resolve transparent transmission of clock frequency information of a service.

### Implementation a5:

In the implementation a5, the first clock frequency information includes first duration, and the first duration is the transmission duration of the k first data frames.

In a possible implementation, the first communication apparatus may collect statistics on a first count value in the transmission duration of the k first data frames. Then, the first duration corresponding to the first count value is calculated. For example, calculation may be performed according to a formula Δt₂ = N_{source} * (1/f_{source}). In the formula, N_{source} is the first count value, f_{source} is a clock frequency of a local clock signal of the first communication apparatus, * indicates multiplication, / indicates division, and Δt₂ indicates the first duration. A unit of Δt₂ may be nanosecond or second.

In still another possible implementation, the first communication apparatus may start a timer at a moment at which a frame header of a 1^{st} first data frame in the k first data frames is received, and stops timing of the timer at a moment at which the frame header of the 1^{st} first data frame in the k first data frames is received. A current value of the timer is the first duration.

In another aspect, the second communication apparatus may decapsulate the first code block stream, to obtain the k first data frames of the first service data stream. Further, the second communication apparatus may send the k first data frames in the first duration indicated by the first clock frequency information, for example, sending duration in which the second communication apparatus sends the k first data frames may also be controlled to be the first duration. Therefore, this can resolve transparent transmission of clock frequency information of a service.

It can be learned from the implementation a5 that the first communication apparatus and the second communication apparatus may resolve transparent transmission of clock frequency information of a service by transmitting the first duration. The solution is simple. In addition, the second communication apparatus does not need to perform calculation with reference to a preset count value, a clock frequency of a reference clock signal, and the like.

In still another possible implementation, the frequency of the local clock signal of the first communication apparatus synchronizes with a frequency of a local clock signal of the second communication apparatus. In this case, the local clock signal of the first communication apparatus and the local clock signal of the second communication apparatus may have a same frequency or different frequencies. The second communication apparatus may send the k second data frames based on the clock frequency information, indicated by the first duration, of the k first data frames, to resolve transparent transmission of clock frequency information of a service.

### Implementation a6:

In the implementation a6, the first clock frequency information may indicate a moment at which the first communication apparatus receives the k first data frames of the first service data stream. The first clock frequency information includes a moment at which a frame header of a 1^{st} data frame in the k first data frames is received. Specifically, the moment, included in the first clock frequency information, at which the frame header of the 1^{st} data frame in the k first data frames is received is a moment at which the first communication apparatus receives the frame header of the 1^{st} data frame in the k first data frames.

If data frames corresponding to one piece of clock frequency information are referred to as a group of data frames, for example, because the first clock frequency information indicates the transmission duration of the k first data frames, the k first data frames may be referred to as a group of data frames. For another example, because the second clock frequency information indicates the transmission duration of the k second data frames, the k second data frames may also be referred to as a group of data frames. In this way, in a possible implementation, the second communication apparatus may calculate transmission duration of one group of data frames based on a difference between first clock frequency information included in two groups of received adjacent data frames.

For example, the k first data frames are referred to as a first group of data frames, and the k second data frames are referred to as a second group of data frames. If the k second data frames are received after the k first data frames, that is, the first group of data frames and the second group of data frames are two consecutive groups of data frames, after the second communication apparatus obtains the first clock frequency information corresponding to the first group of data frames (k first data frames) and obtains the second clock frequency information corresponding to the second group of data frames (k second data frames), the second communication apparatus may subtract a moment indicated by the first clock frequency information from a moment indicated by the second clock frequency information, to obtain transmission duration of the first group of data frames (k first data frames). It should be noted that, in this embodiment of this application, quantities of data frames included in any two groups of data frames may be equal or may not be equal. In this implementation, an example in which one group of data frames includes k data frames is used for presentation.

With reference to FIG. 4b, for example, the k first data frames and the k second data frames in FIG. 4b are 2k consecutive data frames. Because the moment at which the frame trailer of the k^{th} first data frame is received is close to a moment at which a frame header of a 1^{st} second data frame is received, in a possible implementation, it may also be understood that the two moments are approximately equal. The first clock frequency information is the moment at which the frame header of the 1^{st} first data frame is received, and the second clock frequency information is the moment at which the frame header of the 1^{st} second data frame is received. After receiving the first clock frequency information and the second clock frequency information, the second communication apparatus may subtract the moment at which the frame header of the 1^{st} first data frame is received from the moment at which the frame header of the 1^{st} second data frame is received, to obtain the transmission duration of the k first data frames. In this example, it may also be understood as that the first clock frequency information may further indicate the transmission duration of the k first data frames of the first service data stream.

It can be learned from the implementation a6 that the first communication apparatus and the second communication apparatus may resolve transparent transmission of clock frequency information of a service by transmitting a moment at which a frame header of a 1^{st} data frame in a group of data frames is received. The solution is simple, and a quantity of bits occupied by the transmitted information is small. In addition, the second communication apparatus does not need to perform calculation with reference to a preset count value, a clock frequency of a reference clock signal, and the like.

In still another possible implementation, the second communication apparatus may not calculate the transmission duration of the k first data frames, but directly send the data frames based on two timestamps corresponding to two groups of data frames. For example, the second communication apparatus records a receiving moment (timestamp 3) at which the second communication apparatus receives a frame header (for example, a first bit of the frame header) of a 1^{st} data frame in the k first data frames and a receiving moment (timestamp 5) at which the second communication apparatus receives a frame header (for example, a first bit of the frame header) of a 1^{st} data frame in the k second data frames. Further, the second communication apparatus calculates a time difference Δt2 between the timestamp 3 and the receiving moment (timestamp 1) at which the first communication apparatus receives the frame header of the 1^{st} data frame in the k first data frames, calculates a time difference Δt4 between the timestamp 5 and the receiving moment (timestamp 6) at which the first communication apparatus receives the frame header of the 1^{st} data frame in the k second data frames, and compares Δt4 with Δt2. During actual application, it may be assumed that a minimum delay of a network is fixed within specific time, and there is a probability that the minimum delay may also be obtained within a period of time. When a difference between Δt4 and Δt2 is less than a set threshold, if Δt4 is less than Δt2, it indicates that a data sending frequency of the second communication apparatus is slow, and the second communication apparatus may appropriately increase the data sending frequency. If Δt4 is greater than Δt2, it indicates that the data sending frequency of the second communication apparatus is fast, and the second communication apparatus may appropriately decrease the data sending frequency. For related descriptions of the solution, refer to related descriptions in the foregoing implementation a4. Details are not described herein again.

In still another possible implementation, the frequency of the local clock signal of the first communication apparatus synchronizes with a frequency of a local clock signal of the second communication apparatus. In this case, the local clock signal of the first communication apparatus and the local clock signal of the second communication apparatus may have a same frequency or different frequencies. The second communication apparatus may send the k second data frames based on the first clock frequency information, to resolve transparent transmission of clock frequency information of a service.

### Implementation a7:

In the implementation a7, the first clock frequency information may indicate a moment at which the first communication apparatus receives the k first data frames of the first service data stream. The first clock frequency information includes a moment at which a frame trailer of a k^{th} first data frame in the k first data frames is received. Specifically, the moment, included in the first clock frequency information, at which the frame trailer of the k^{th} first data frame in the k first data frames is received is a moment at which the first communication apparatus receives the frame trailer of the k^{th} first data frame in the k first data frames.

For example, the k first data frames are referred to as a first group of data frames, where k fourth data frames of the first service data stream are referred to as a third group of data frames. Fourth clock frequency information indicates transmission duration of the k fourth data frames. If the k fourth data frames are received before the k first data frames, that is, the third group of data frames and the first group of data frames are two consecutive groups of data frames, after the second communication apparatus obtains the first clock frequency information corresponding to the first group of data frames (k first data frames) and obtains the fourth clock frequency information corresponding to the third group of data frames (k fourth data frames), the second communication apparatus may subtract a moment indicated by the fourth clock frequency information from a moment indicated by the first clock frequency information, to obtain transmission duration of the first group of data frames (k first data frames). It should be noted that, in this embodiment of this application, quantities of data frames included in any two groups of data frames may be equal or may not be equal. In this implementation, an example in which one group of data frames includes k data frames is used for presentation.

For another example, the k first data frames are referred to as a first group of data frames, and the k second data frames are referred to as a second group of data frames. If the k second data frames are received after the k first data frames, that is, the first group of data frames and the second group of data frames are two consecutive groups of data frames, after the second communication apparatus obtains the first clock frequency information corresponding to the first group of data frames (k first data frames) and obtains the second clock frequency information corresponding to the second group of data frames (k second data frames), the second communication apparatus may subtract a moment indicated by the first clock frequency information from a moment indicated by the second clock frequency information, to obtain transmission duration of the second group of data frames (k second data frames).

With reference to FIG. 4b, for example, the k first data frames and the k second data frames in FIG. 4b are 2k consecutive data frames. Because the moment at which the frame trailer of the k^{th} first data frame is received is close to a moment at which a frame header of a 1^{st} second data frame is received, in a possible implementation, it may also be understood that the two moments are approximately equal. The first clock frequency information is the moment at which the frame trailer of the k^{th} first data frame is received, and the second clock frequency information is a moment at which a frame trailer of a k^{th} second data frame is received. After receiving the first clock frequency information and the second clock frequency information, the second communication apparatus may subtract the moment at which the frame trailer of the k^{th} first data frame is received from the moment at which the frame trailer of the k^{th} second data frame is received, to obtain the transmission duration of the k second data frames. In this example, it may also be understood as that the first clock frequency information may further indicate the transmission duration of the k first data frames of the first service data stream.

It can be learned from the implementation a7 that the first communication apparatus and the second communication apparatus may resolve transparent transmission of clock frequency information of a service by transmitting a moment at which a frame trailer of a 1^{st} data frame in a group of data frames is received. The solution is simple, and a quantity of bits occupied by the transmitted information is small. In addition, the second communication apparatus does not need to perform calculation with reference to a preset count value, a clock frequency of a reference clock signal, and the like.

In still another possible implementation, the second communication apparatus may not calculate the transmission duration of the k first data frames, but directly send the data frames based on two timestamps corresponding to two groups of data frames. For the solution, refer to related descriptions in the foregoing implementation a6. Details are not described herein again.

In still another possible implementation, a frequency of a local clock signal of the first communication apparatus synchronizes with a frequency of a local clock signal of the second communication apparatus. In this case, the local clock signal of the first communication apparatus and the local clock signal of the second communication apparatus may have a same frequency or different frequencies. The second communication apparatus may send the k second data frames based on the first clock frequency information, to resolve transparent transmission of clock frequency information of a service.

### Implementation a8:

In the implementation a8, the first clock frequency information may indicate the transmission duration of the k first data frames of the first service data stream. The first clock frequency information includes a third count value, and the third count value is a quantity of periods of a clock frequency of a local clock signal of the first communication apparatus in second duration. The second duration is duration from a preset moment to a moment at which a frame header of a 1^{st} first data frame in the k first data frames is received.

In this embodiment of this application, the preset moment may be implemented in a plurality of manners. In a possible implementation, the first communication apparatus may use, as the preset moment, the moment at which the frame header of the 1^{st} data frame of the received first service data stream is received.

In this embodiment of this application, the first communication apparatus and the second communication apparatus may agree that the receiving moment at which the first communication apparatus receives the frame header of the 1^{st} data frame of the first service data stream is the preset moment. Alternatively, the first communication apparatus may determine a location of the preset moment, and the first communication apparatus may not send the location of the preset moment to the second communication apparatus. In still another possible implementation, the first communication apparatus sends indication information indicating "the receiving moment at which the first communication apparatus receives the frame header of the 1^{st} data frame of the first service data stream is the preset moment" to the second communication apparatus.

In still another possible implementation, one preset moment may be specified at a long interval, and duration between two adjacent preset moments may be greater than transmission duration of at least two groups of data frames. For example, the first communication apparatus may specify a preset moment every 3k data frames. In this implementation, the first communication apparatus may send, to the second communication apparatus, indication information indicating which moment is the preset moment, or may not indicate a location of the preset moment to the second communication apparatus.

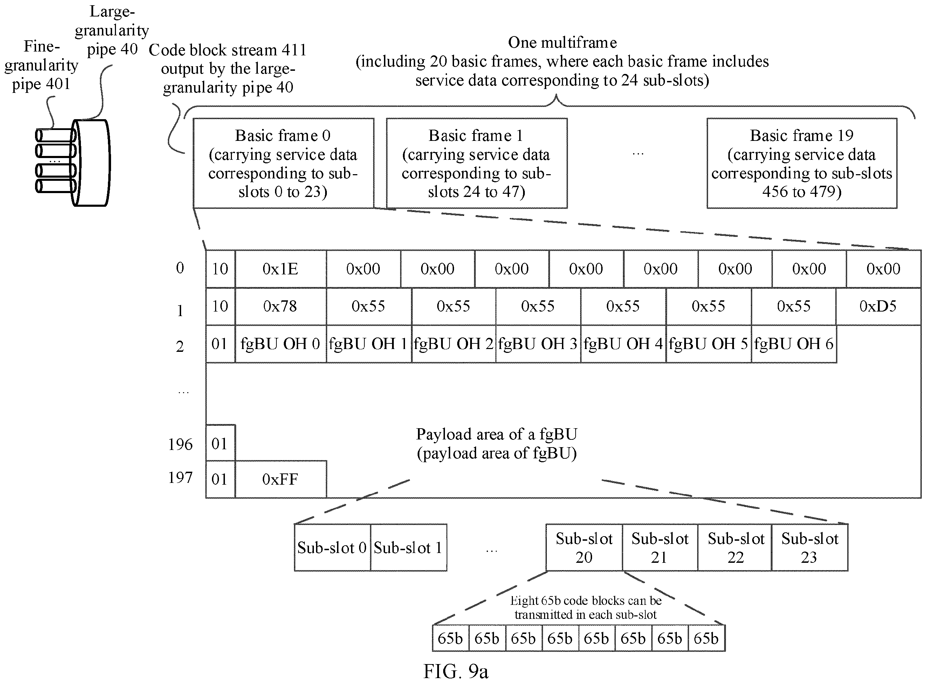

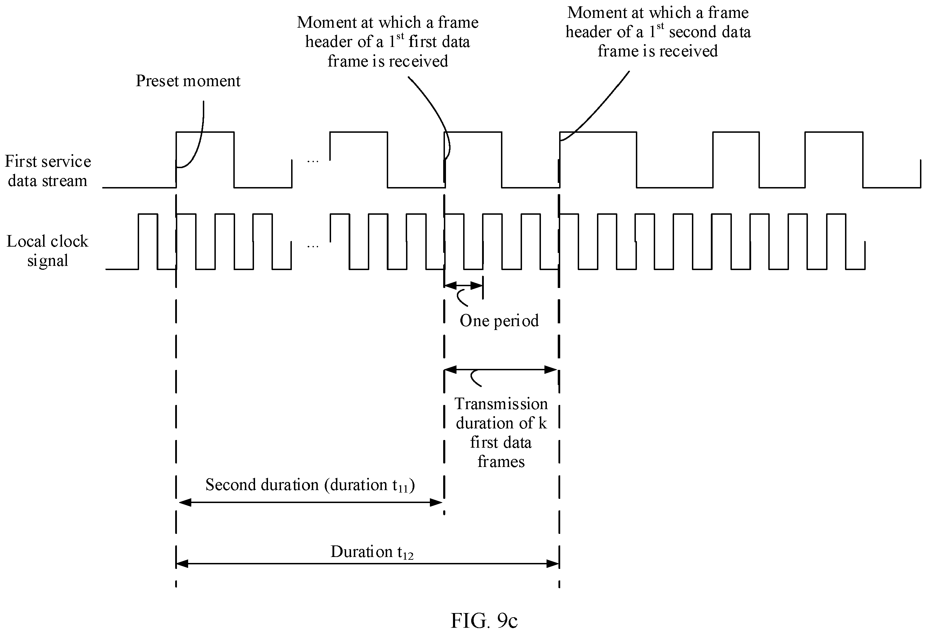

FIG. 9c is a schematic diagram of an example of possible transmission duration of a data frame of a first service data stream according to an embodiment of this application. As shown in FIG. 9c, a specified moment is the preset moment. For example, the preset moment is a receiving moment at which the first communication apparatus receives a first bit of the frame header of the 1^{st} data frame of the first service data stream. The first communication apparatus starts a counter starting from the preset moment, and uses the counter to count the quantity of periods of the clock frequency (the clock frequency of the local clock signal of the first communication apparatus may be denoted as f_{source}) of the local clock signal of the first communication apparatus. The first communication apparatus continues to count until the frame header of the 1^{st} first data frame is identified, and a value of the counter is identified. The value of the counter is the third count value (that is, a count value indicated by the first clock frequency information, where a first count value in this embodiment of this application may be represented as N_{Ksource}). In another aspect, the first communication apparatus continues to use the counter to count until a frame header of a 1^{st} second data frame is identified, and a current value of the counter is identified. The value of the counter is referred to as a fifth count value, and the fifth count value is the second clock frequency information.

It can be learned from FIG. 9c that the third count value reflects a count value of the counter in the second duration (duration tn). The fifth count value reflects a count value of the counter in duration t₁₂.

Further, in a possible implementation, the first communication apparatus may continue to use the counter to count until a next preset moment is reached, and reset and restart the counter. In still another possible implementation, the first communication apparatus may continue to use the counter to count until the data frames of the first service data stream are received. In still another possible implementation, the first communication apparatus may continue to use the counter to count until a maximum value that can be counted by the counter is reached. In this case, the counter is reset and restarted to recount. The first communication apparatus may record a moment at which the counter is restarted as a new preset moment. Because the maximum value that can be counted by the counter is large, the second communication apparatus may infer, based on a count value included in the received clock frequency information, whether the counter is reset and restarted to recount. Therefore, even if the first communication apparatus does not indicate the new preset moment to the second communication apparatus, the second communication apparatus may also send data based on the clock frequency information, and resolve transparent transmission of clock frequency information of a service. In still another possible implementation, the first communication apparatus may alternatively indicate the new preset moment to the second communication apparatus.

Further, the first communication apparatus may encapsulate the first service data stream, to obtain the first code block stream; place the third count value in the first code block stream; and send the first code block stream to the second communication apparatus.

In another aspect, the second communication apparatus may decapsulate the first code block stream, to obtain the k first data frames of the first service data stream, the first clock frequency information (third count value), and the second clock frequency information (fifth count value). Further, the second communication apparatus may subtract the third count value from the fifth count value, to obtain the first count value. The second communication apparatus sends the k first data frames based on the clock frequency corresponding to the first count value obtained through calculation.

It can be learned from the implementation a8 that the first communication apparatus and the second communication apparatus may resolve transparent transmission of clock frequency information of a service by transmitting the third count value. The solution is simple, and a quantity of bits occupied by the transmitted information is small.

In still another possible implementation, the local clock signal of the first communication apparatus and the local clock signal of the second communication apparatus have a same frequency, and a frequency of the local clock signal of the first communication apparatus synchronizes with a frequency of the local clock signal of the second communication apparatus. For example, both the local clock signal of the first communication apparatus and the local clock signal of the second communication apparatus are 100 MHz signals. In this way, the second communication apparatus may send the k second data frames based on the clock frequency information, indicated by the third count value, of the k first data frames, to resolve transparent transmission of clock frequency information of a service.

### Implementation a9:

In the implementation a9, the first clock frequency information includes second duration. The second duration is duration from a preset moment to a moment at which a frame header of a 1^{st} first data frame in the k first data frames is received.

In a possible implementation, the first communication apparatus may collect statistics on a third count value, and then calculate the second duration corresponding to the third count value. For example, calculation may be performed according to a formula Δtₖ₂ = N_{Ksource} * (1/f_{source}). In the formula, N_{Ksource} is the third count value, f_{source} is a clock frequency of a local clock signal of the first communication apparatus, * indicates multiplication, / indicates division, and Δtₖ₂ indicates the second duration. A unit of Δtₖ₂ may be nanosecond or second.

In still another possible implementation, the first communication apparatus may start a timer at the preset moment, and records duration collected by the timer at the moment at which the frame header of the 1^{st} first data frame in the k first data frames is received. A current value of the timer is the second duration.

With reference to FIG. 9c, after receiving the k first data frames of the first service data stream, the first clock frequency information (second duration, namely, duration t₁₁ in FIG. 9c), and the second clock frequency information (duration, namely, duration t₁₂ in FIG. 9c, corresponding to a fifth count value), the second communication apparatus may subtract the second duration from duration indicated by the second clock frequency information, to obtain the transmission duration of the k first data frames. The second communication apparatus sends the k first data frames based on a clock frequency corresponding to the transmission duration, obtained through calculation, of the k first data frames.

It can be learned from the implementation a9 that the first communication apparatus and the second communication apparatus may resolve transparent transmission of clock frequency information of a service by transmitting the second duration. The solution is simple. In addition, the second communication apparatus does not need to perform calculation with reference to a preset count value, a clock frequency of a reference clock signal, and the like.

In still another possible implementation, a frequency of a local clock signal of the first communication apparatus synchronizes with a frequency of a local clock signal of the second communication apparatus. In this case, the local clock signal of the first communication apparatus and the local clock signal of the second communication apparatus may have a same frequency or different frequencies. The second communication apparatus may send the k second data frames based on the clock frequency information, indicated by the second duration, of the k first data frames, to resolve transparent transmission of clock frequency information of a service.

### Implementation a10:

In the implementation a10, the first clock frequency information may indicate the transmission duration of the k first data frames of the first service data stream. The first clock frequency information includes a fourth count value, and the fourth count value is a quantity of periods of a clock frequency of a local clock signal of the first communication apparatus in third duration. The third duration is duration from a preset moment to a moment at which a frame trailer of a k^{th} first data frame in the k first data frames is received. For the preset moment in this embodiment of this application, refer to the foregoing content. Details are not described herein again.

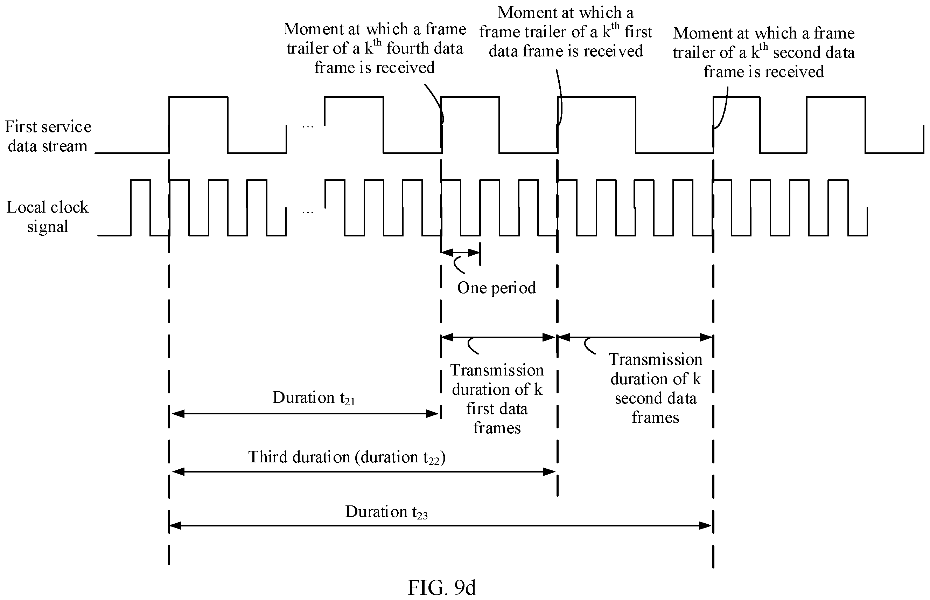

FIG. 9d is a schematic diagram of an example of possible transmission duration of a data frame of a first service data stream. As shown in FIG. 9d, k fourth data frames, the k first data frames, and the k second data frames are 3k consecutive data frames. As shown in FIG. 9d, a specified moment is used as the preset moment. The first communication apparatus starts a counter starting from the preset moment, and uses the counter to count the quantity of periods of the clock frequency (the clock frequency of the local clock signal of the first communication apparatus may be denoted as f_{source}) of the local clock signal of the first communication apparatus. The counter continues to count until a frame trailer of a k^{th} fourth data frame is identified, and a current value of the counter is identified. The value of the counter is a seventh count value, and the seventh count value is fourth clock frequency information. The counter continues to count until a frame trailer of a k^{th} first data frame is identified, and a current value of the counter is identified. The value of the counter is the fourth count value. In another aspect, the first communication apparatus continues to use the counter to count until a frame trailer of a k^{th} second data frame is identified, and a current value of the counter is identified. The value of the counter is referred to as a sixth count value, and the sixth count value is the second clock frequency information.

It can be learned from FIG. 9d that the seventh count value reflects a count value of the counter in the third duration (duration t₂₁). The fourth count value reflects a count value of the counter in the third duration (duration t₂₂). The sixth count value reflects a count value of the counter in duration t₂₃.

In another aspect, the second communication apparatus receives the k first data frames of the first service data stream, the first clock frequency information (fourth count value), and the fourth clock frequency information (seventh count value). Further, the second communication apparatus may subtract the seventh count value from the fourth count value, to obtain a first count value. The second communication apparatus sends the k first data frames based on the clock frequency corresponding to the first count value obtained through calculation. Similarly, the second communication apparatus may subtract the fourth count value from the sixth count value, to obtain a count value corresponding to the transmission duration of the k second data frames. The second communication apparatus sends the k first data frames based on a clock frequency indicated by the count value, obtained through calculation, corresponding to the transmission duration of the k second data frames.

It can be learned from the implementation a10 that the first communication apparatus and the second communication apparatus may resolve transparent transmission of clock frequency information of a service by transmitting the fourth count value. The solution is simple, and a quantity of bits occupied by the transmitted information is small.

In still another possible implementation, the second communication apparatus may not calculate the transmission duration of the k first data frames, but directly send the data frames based on two timestamps corresponding to two groups of data frames. For the solution, refer to related descriptions in the foregoing implementation a6. Details are not described herein again.

In still another possible implementation, the local clock signal of the first communication apparatus and a local clock signal of the second communication apparatus have a same frequency, and a frequency of the local clock signal of the first communication apparatus synchronizes with a frequency of the local clock signal of the second communication apparatus. For example, both the local clock signal of the first communication apparatus and the local clock signal of the second communication apparatus are 100 MHz signals. In this way, the second communication apparatus may send the k second data frames based on the clock frequency information, indicated by the fourth count value, of the k first data frames, to resolve transparent transmission of clock frequency information of a service.

### Implementation a11:

In the implementation a11, the first clock frequency information includes third duration, the third duration is duration from a preset moment to a moment at which a frame trailer of a k^{th} first data frame in the k first data frames is received.

In a possible implementation, the first communication apparatus may collect statistics on a fourth count value, and then calculate the third duration corresponding to the fourth count value. For a calculation manner, refer to the foregoing implementation a9. Details are not described again.

In still another possible implementation, the first communication apparatus may start a timer at the preset moment, and records duration collected by the timer at the moment at which the frame trailer of the k^{th} first data frame in the k first data frames is received. A current value of the timer is the third duration.

With reference to FIG. 9d, after receiving the k first data frames of the first service data stream, the first clock frequency information (third duration, namely, duration t₂₂ in FIG. 9d), and fourth clock frequency information (duration, namely, duration t₂₁ in FIG. 9d, corresponding to a seventh count value), the second communication apparatus may subtract duration indicated by the fourth clock frequency information from the third duration, to obtain the transmission duration of the k first data frames. The second communication apparatus sends the k first data frames based on a clock frequency corresponding to the transmission duration, obtained through calculation, of the k first data frames.

It can be learned from the implementation a11 that the first communication apparatus and the second communication apparatus may resolve transparent transmission of clock frequency information of a service by transmitting the third duration. The solution is simple. In addition, the second communication apparatus does not need to perform calculation with reference to a preset count value, a clock frequency of a reference clock signal, and the like.

In still another possible implementation, a frequency of a local clock signal of the first communication apparatus synchronizes with a frequency of a local clock signal of the second communication apparatus. In this case, the local clock signal of the first communication apparatus and the local clock signal of the second communication apparatus may have a same frequency or different frequencies. The second communication apparatus may send the k second data frames based on the clock frequency information, indicated by the third duration, of the k first data frames, to resolve transparent transmission of clock frequency information of a service.

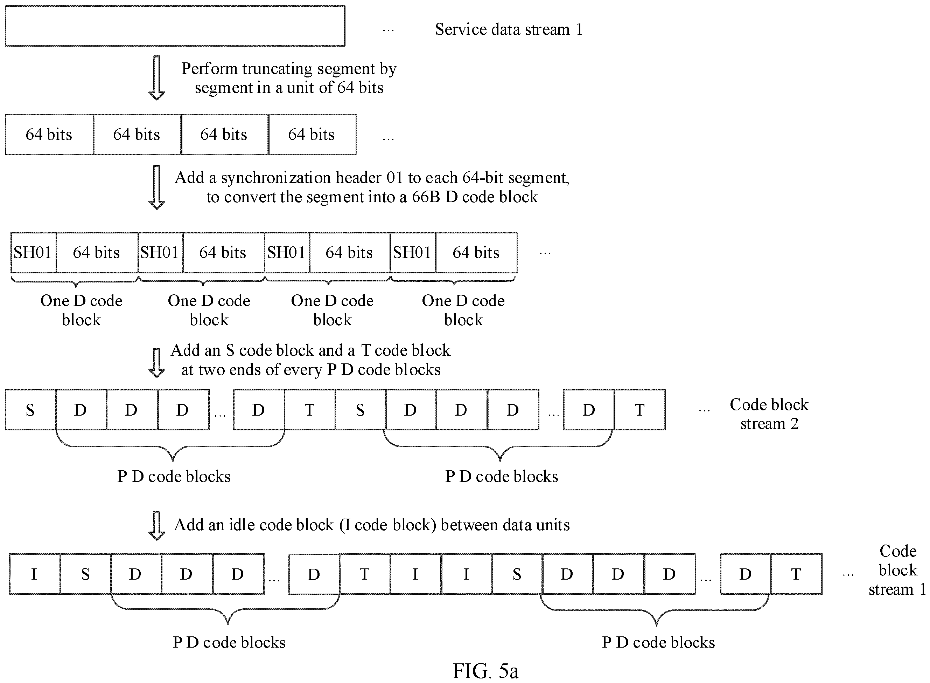

Based on the foregoing descriptions, FIG. 5a shows an example of a possible implementation of converting a service data stream into a code block stream according to an embodiment of this application. The implementation may be performed on a first communication apparatus side. In FIG. 5a, an example in which a service data stream 1 is converted into a code block stream 1 and the code block stream 1 is in a 64B/66B coding form is used for presentation. If the first service data stream needs to be converted into the first code block stream, in a possible implementation, the service data stream 1 may be the first service data stream, and the code block stream 1 may be the first code block stream. For a process of converting the first service data stream into the first code block stream, refer to the process of converting the service data stream 1 into the code block stream 1 in FIG. 5a.

As shown in FIG. 5a, the service data stream 1 is a string of bit streams. The first communication apparatus may truncate the service data stream 1 segment by segment on a basis of 64 bits, to obtain a plurality of segments, where each segment includes 64 bits. Then, the first communication apparatus places 64 bits of each segment into a payload area of a D code block. It may also be understood that the first communication apparatus adds a synchronization header 01 to each segment, to obtain the D code block.

Then, the first communication apparatus may add an S code block and a T code block to two ends of a group of D code blocks. One group of D code blocks may include one or more D code blocks. Quantities of any two groups of D code blocks may be equal or unequal. In a possible implementation, quantities of any two groups of D code blocks in the code block stream 1 are equal. In FIG. 5a, an example in which one group of D code blocks includes P D code blocks is used for presentation, where P may be a positive integer. In this embodiment of this application, the P D code blocks and the S code block and the T code block before and after the P D code blocks may be referred to as a data unit, or referred to as a container. The S code block may indicate a start of the container, and the T code block may indicate an end of the container. Some bits in the S code block may be used to carry container overheads, that is, may be used to carry overhead information corresponding to the data unit. A process of converting the bit string in the service data stream 1 into a string of D code blocks, and adding the S code block and the T code block to the two ends of P consecutive D code blocks may be referred to as container encapsulation.

Further, the first communication apparatus may fill a code block between two adjacent data units (which are also referred to as containers), for example, fill an idle code block, so that a rate of the code block stream 1 matches a pipe rate. Then, the code block stream 1 is mapped to a pipe (the pipe in this embodiment of this application may also be referred to as a hard pipe).

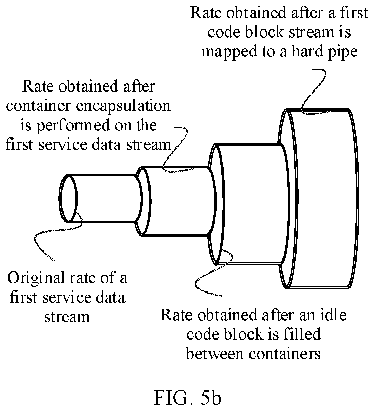

FIG. 5b is a schematic diagram of an example of a rate relationship between data streams in a container construction process. As shown in FIG. 5b, an original rate of the service data stream 1 may be less than a rate obtained after container encapsulation is performed on the service data stream 1. The rate obtained after container encapsulation is performed on the service data stream 1 may be less than a rate obtained after an idle code block is filled between containers. A rate obtained after the idle code block is filled between containers may be less than a rate obtained after the code block stream 1 is mapped to the hard pipe.

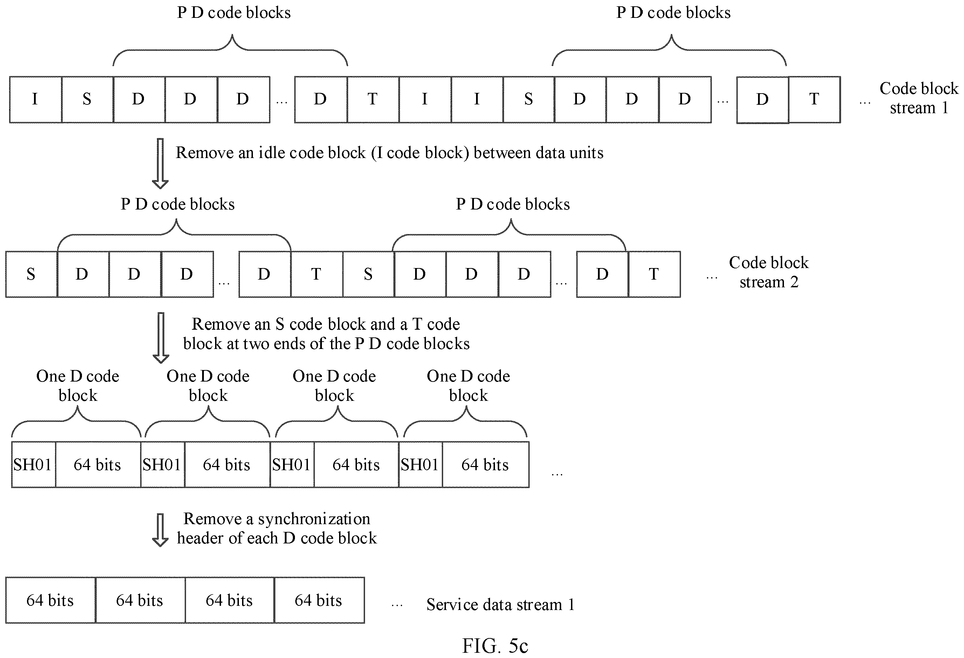

Based on the foregoing descriptions, FIG. 5c shows an example of a possible implementation of converting a code block stream into a service data stream according to an embodiment of this application. The implementation may be performed on a second communication apparatus side, and may be understood as an inverse process of FIG. 5a. In FIG. 5c, an example in which a code block stream 1 is converted into a service data stream 1 and the code block stream 1 is in a 64B/66B coding form is used for presentation. If the first code block stream needs to be converted into the first service data stream, in a possible implementation, the service data stream 1 may be the first service data stream, and the code block stream 1 may be the first code block stream. For a process of converting the first code block stream into the first service data stream, refer to the process of converting the code block stream 1 into the service data stream 1 in FIG. 5c.

As shown in FIG. 5c, the second communication apparatus receives the code block stream 1. Then, the second communication apparatus removes a code block, for example, an idle code block, filled between data units in the code block stream 1 for rate adaptation. Further, the second communication apparatus extracts overhead information carried in an S code block and/or a T code block (for example, the first clock frequency information may be extracted from the S code block), and removes an S code block and a T code block at two ends of each data unit, to obtain a code block stream including only D code blocks. Further, the second communication apparatus removes a synchronization header of each D code block in a code block stream including only D code blocks, to obtain a string of bit streams, namely, the service data stream 1.

In FIG. 5a, an example in which bits of the service data stream 1 are carried in a payload area of a data code block of a data unit in the code block stream 1 is used for presentation. During actual application, in addition to a payload area of a data code block in a first data unit, the bits of the service data stream 1 may further be carried in a tail code block, for example, may be carried in a tail code block of T7 or a tail code block of T6.

It should be noted that the code blocks of the code block stream 1 in this embodiment of this application may be divided into one or more data units. In FIG. 5a, an example in which one data unit includes an S code block, P D code blocks, and a T code block is used for description. During actual application, one data unit may further include a plurality of forms. For differentiation, in this embodiment of this application, a data unit that carries bits corresponding to the k first data frames is referred to as a first data unit. The bits corresponding to the k first data frames may carry one or more first data units. In this embodiment of this application, all first data units that carry the bits corresponding to the k first data frames are referred to as a first data unit group. It may also be understood that the first data unit group includes W₁ first data units, where W₁ is a positive integer. Quantities of data code blocks included in any two first data units may be equal or unequal.

For differentiation, in this embodiment of this application, a data unit that carries bits corresponding to the k second data frames is referred to as a second data unit. The bits corresponding to the k second data frames may carry one or more second data units. In this embodiment of this application, all second data units that carry the bits corresponding to the k second data frames are referred to as a second data unit group. It may also be understood that the first data unit group includes W₂ second data units, where W₂ is a positive integer. Quantities of data code blocks included in any two second data units may be equal or unequal. The first code block stream further includes the second clock frequency information, and the second clock frequency information indicates the transmission duration of the k second data frames of the first service data stream, and/or the moment at which the first communication apparatus receives the k second data frames of the first service data stream.

In FIG. 5a, an example in which quantities of D code blocks included in any two data units of the code block stream 1 are P is used for presentation. In other words, a quantity of data code blocks included in the first data unit is the same as a quantity of data code blocks included in the second data unit. During actual application, a quantity of data code blocks included in the first data unit may alternatively be different from a quantity of data code blocks included in the second data unit.

In this embodiment of this application, the first data unit is used as an example to describe data units of the first code block stream. For content of another data unit, refer to related descriptions of the first data unit. Details are not described again.

For flexibility of the provided solution, the first data unit may have a plurality of structure forms. For example, the first data unit may include one of the following content:
a header code block and at least one data code block;
a header code block, at least one data code block, and a tail code block;
at least one data code block and a tail code block;
a header code block, at least one data code block, and an operations, administration, and maintenance code block;
a header code block, at least one data code block, a tail code block, and an operations, administration, and maintenance code block; or
at least one data code block, a tail code block, and an operations, administration, and maintenance code block.

In a possible implementation, the header code block may be an S code block. The tail code block may be a T code block. The data code block may be a D code block. The operations, administration, and maintenance code block may be an O code block. For a specific structure form, refer to related descriptions in FIG. 2b.

In this embodiment of this application, bits corresponding to the k first data frames may be carried in a payload area of a data code block in the at least one data code block of the first data unit in the W₁ first data units. The bits corresponding to the k first data frames may be carried in the payload area of the data code block in the at least one data code block of the first data unit in the W₁ first data units, and may further be carried in a tail code block of the first data unit in the W₁ first data units, to improve a quantity of bits, carried in the data units, from the service data stream.

The first clock frequency information may be carried in some or all first data units in the W₁ first data units. In a possible implementation, W₁ is 1, and the first data unit carries all of the first clock frequency information and the k first data frames. In still another possible implementation, W₁ is an integer greater than 1. In this case, the first clock frequency information may be carried in one or more first data units in the W₁ first data units. In this case, one piece of clock frequency information may indicate a clock frequency of bits carried in the plurality of data units, to reduce a frequency of sending the clock frequency information, and save resources.

Further, the first communication apparatus may further add first indication information to each first data unit that is in the W₁ first data units and that carries the first clock frequency information. The first indication information indicates that the first data unit carrying the first indication information carries a portion or all of the first clock frequency information. The first communication apparatus may further add second indication information to each first data unit that is in the W₁ first data units and that does not carry the first clock frequency information. The second indication information indicates that the first data unit carrying the second indication information does not carry the first clock frequency information. In this way, the second communication apparatus may determine, based on whether a data unit carries the first indication information, whether the data unit carries the clock frequency information. When the data unit does not carry the first indication information, for example, carries the second indication information, the second communication apparatus does not need to search for the clock frequency information. This can improve a data processing speed of the second communication apparatus.

The following describes, by using a first case, a case in which the first communication apparatus adds the first clock frequency information to one first data unit in the W₁ first data units, and describes, by using a second case, a case in which the first communication apparatus adds the first clock frequency information to a plurality of first data units in the W₁ first data units.

First case: The first communication apparatus may transmit the first clock frequency information in one first data unit in the W₁ first data units, and does not transmit the first clock frequency information in another first data unit in the W₁ first data units.

In the first case, in this embodiment of this application, a field may further be set in each first data unit. For example, a SEQ field may be newly set. The SEQ field may occupy 3 bits, to indicate 0 to 7 (eight values in total). A value of the SEQ field increases with a quantity of data units. For example, if a value of a SEQ field of a current data unit is 0, a value of a SEQ field of a next data unit is increased by 1, and is 1; a value of a SEQ field of a data unit after the next data unit is increased by 1, and is 2; and the rest may be deduced by analogy. When the value of the SEQ field reaches 7, the value restarts from 0.

For example, a value of W₁ is 4, and the k first data frames are carried in four first data units. In still another possible implementation, every k data frames of the first service data stream are carried in every four data units of the first code block stream. Clock frequency information may be carried in data units in which a value of the SEQ field is 0 and a value of the SEQ field is 4. The clock frequency information (for example, the first clock frequency information) carried in the data unit in which the value of the SEQ field is 0 may indicate the transmission duration that is carried in the current data unit and consecutive data units (four first data units), after the data unit, in which values of SEQ fields are sequentially 1, 2, and 3 and that is of all data frames (k first data frames) from the first service data stream. Similarly, the clock frequency information (for example, the second clock frequency information) carried in the data unit in which the value of the SEQ field is 4 may indicate the transmission duration that is carried in the current data unit and consecutive data units (four second data units), after the data unit, in which values of SEQ fields are sequentially 5, 6, and 7 and that is of all data frames (k second data frames) from the first service data stream.

It can be learned from the foregoing example that the values 0 and 4 of the SEQ field are separately equivalent to the first indication information in this embodiment of this application, and the first indication information indicates that the data unit carrying the first indication information carries the clock frequency information. In still another possible implementation, it may be understood that the first indication information indicates that the data unit carrying the first indication information carries all of the clock frequency information. The values 1, 2, 3, 5, 6, and 7 of the SEQ fields are equivalent to the second indication information in this embodiment of this application, and the second indication information indicates that the data unit carrying the second indication information does not carry the clock frequency information.

For another example, a value of W₁ is 2, and the k first data frames are carried in two first data units. In still another possible implementation, every k data frames of the first service data stream are carried in every two data units of the first code block stream. Clock frequency information may be carried in data units in which values of SEQ fields are 0, 2, 4, and 6. The clock frequency information (for example, the first clock frequency information) carried in the data unit in which the value of the SEQ field is 0 may indicate the transmission duration that is carried in the current data unit and a data unit (two first data units), after the data unit, in which a value of the SEQ field is 1 and that is of all data frames (k first data frames) from the first service data stream. Similarly, the clock frequency information (for example, the second clock frequency information) carried in the data unit in which the value of the SEQ field is 2 may indicate the transmission duration that is carried in the current data unit and a data unit (two second data units), after the data unit, in which a value of the SEQ field is 3 and that is of all data frames (k second data frames) from the first service data stream.

It can be learned from the foregoing example that the values 0, 2, 4, and 6 of the SEQ field are separately equivalent to the first indication information in this embodiment of this application, and the first indication information indicates that the data unit carrying the first indication information carries the clock frequency information. The values 1, 3, 5, and 7 of the SEQ fields are equivalent to the second indication information in this embodiment of this application, and the second indication information indicates that the data unit carrying the second indication information does not carry the clock frequency information.

Second case: The first communication apparatus may transmit the first clock frequency information in a plurality of first data units in the W₁ first data units.

For example, W₁ is 4, and the first clock frequency information occupies 32 bits in total. The first communication apparatus may transmit first 16 bits of the first clock frequency information in a 1^{st} first data unit in the W₁ first data units, and transmit last 16 bits of the first clock frequency information in a 2^{nd} first data unit in the W₁ first data units. The first communication apparatus does not transmit the first clock frequency information in a 3^{rd} first data unit and a 4^{th} first data unit in the W₁ first data units. In other words, the plurality of first data units in the W₁ first data units carry all of the first clock frequency information, and one first data unit in the plurality of first data units may only carry a portion of the first clock frequency information.

In the second case, a SEQ field may alternatively be set in each first data unit, and the SEQ field may occupy 3 bits, to indicate 0 to 7 (eight values in total).

For example, a value of W₁ is 4, and the k first data frames are carried in four first data units. In still another possible implementation, every k data frames of the first service data stream are carried in every four data units of the first code block stream. In this implementation, 32 bits of one piece of clock frequency information may be carried in data units in which a value of the SEQ field is 0 and a value of the SEQ field is 1. For example, first 16 bits of the clock frequency information are carried in the data unit in which the value of the SEQ field is 0, and last 16 bits of the clock frequency information are carried in the data unit in which the value of the SEQ field is 1. The 32 bits of the clock frequency information (for example, the first clock frequency information) carried in the data units in which the value of the SEQ field is 0 and the value of the SEQ field is 1 may indicate the transmission duration that is carried in the current two data units and consecutive data units (four first data units), after the data units, in which values of SEQ fields are sequentially 2 and 3 and that is of all data frames (k first data frames) from the first service data stream. Similarly, 32 bits of the clock frequency information (for example, the second clock frequency information) carried in data units in which a value of the SEQ field is 4 and a value of the SEQ field is 5 may indicate the transmission duration that is carried in the current two data units and consecutive data units (four second data units), after the data units, in which values of SEQ fields are sequentially 6 and 7 and that is of all data frames (k second data frames) from the first service data stream.

It can be learned from the foregoing example that the values 0, 1, 4, and 5 of the SEQ field are separately equivalent to the first indication information in this embodiment of this application, and the first indication information indicates that the data unit carrying the first indication information carries the clock frequency information. In still another possible implementation, the first indication information indicates that the data unit carrying the first indication information carries a portion of the clock frequency information. In this way, the plurality of data units may jointly carry one piece of clock frequency information, to increase a quantity of bits used to carry the clock frequency information. The values 2, 3, 6, and 7 of the SEQ fields are equivalent to the second indication information in this embodiment of this application, and the second indication information indicates that the data unit carrying the second indication information does not carry the clock frequency information.

In embodiments of this application, there may also be a plurality of implementations for carrying the clock frequency information of the first service data stream. The following uses one first data unit carrying the first clock frequency information as an example for description. The first data unit may carry a portion or all of the first clock frequency information. The first clock frequency information (which may be a portion or all of the first clock frequency information) may be carried in at least one of the following content of the first data unit: a header code block, at least one data code block, a tail code block, or an operations, administration, and maintenance code block, to improve flexibility of the solution. The following describes an implementation b1, an implementation b2, an implementation b3, and an implementation b4.

### Implementation b 1:

In the implementation b1, the first clock frequency information may be carried in the header code block of the first data unit.

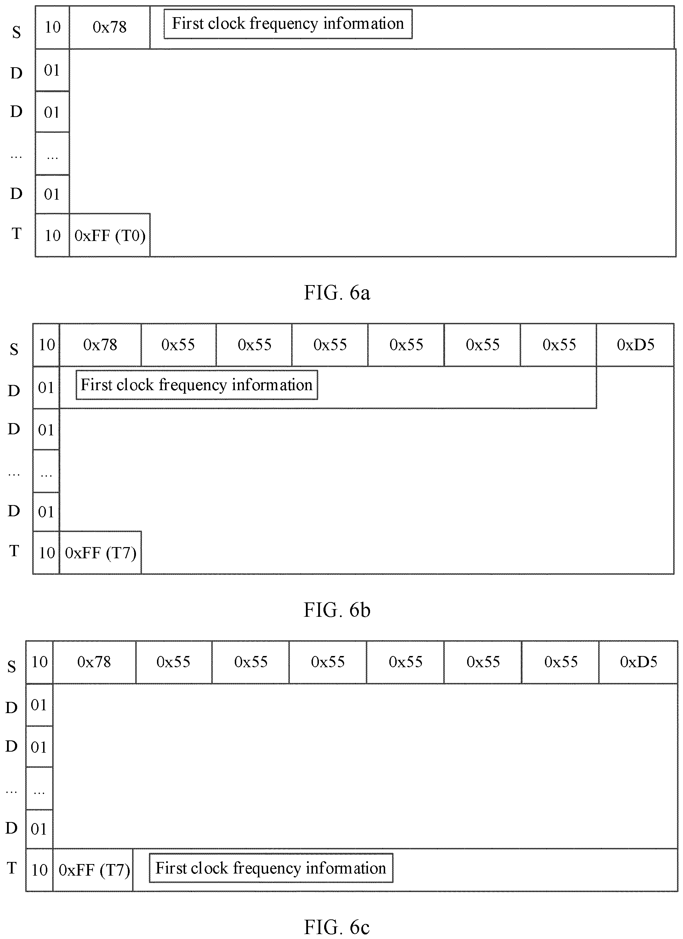

The header code block may be an S code block, and may be used to identify a start of a data unit. FIG. 6a is a schematic diagram of an example of a structure of a first data unit carrying first clock frequency information according to an embodiment of this application. As shown in FIG. 6a, the data unit is a data unit in FIG. 5a.

The first service data stream may be a constant rate service. One PCM frame of the first service data stream is 256 bits (32 * 8 = 256), and one PCM frame is truncated on a basis of 64 bits, to obtain four segments through truncation. Therefore, each data unit may carry one PCM frame by using payload areas of four D code blocks.

FIG. 6a shows that a structure form of the data unit is SDDDDT. The first clock frequency information may be carried in a payload area of the S code block, for example, may be carried in a location after a code block type area "0x78" carried in the payload area. In this way, the second communication apparatus can quickly obtain the clock frequency information through parsing.

### Implementation b2:

In the implementation b2, the first clock frequency information may be carried in the at least one data code block of the first data unit.

FIG. 6b is a schematic diagram of an example of a structure of another first data unit carrying first clock frequency information according to an embodiment of this application. As shown in FIG. 6b, the data unit is a data unit in FIG. 5a. FIG. 6b shows that a structure form of the data unit is SDDDDT. The first clock frequency information may be carried in a payload area of a first D code block after an S code block.

In a possible implementation, because the first clock frequency information occupies an area of a PCM frame that is originally used to carry the service data stream, a T7 code block may be used as a T code block, so that an area other than a code block type area "0xFF" in a payload area of the T7 code block is used to carry the PCM frame. For example, in FIG. 6b, a maximum of seven bytes of the D code block may be occupied to carry the first clock frequency information. When the T code block is T7, the payload area of the T code block may further include bits of seven bytes to carry the PCM frame.

### Implementation b3:

In the implementation b3, the first clock frequency information may be carried in the tail code block of the first data unit.

FIG. 6c is a schematic diagram of an example of a structure of still another first data unit carrying first clock frequency information according to an embodiment of this application. As shown in FIG. 6c, the data unit is a data unit in FIG. 5a. FIG. 6c shows that a structure form of the data unit is SDDDDT. The first clock frequency information may be carried in a payload area of a T code block. For example, the T code block uses a T7 code block, and the first clock frequency information may be carried in an area other than a code block type area "0xFF" in a payload area of the T7 code block. The T7 code block is merely an example, and another code block may alternatively be used, for example, a T6 code block or a T5 code block.

### Implementation b4:

In the implementation b4, the first clock frequency information may be carried in the operations, administration, and maintenance code block of the first data unit.

The operations, administration, and maintenance code block may be an O code block. The operations, administration, and maintenance code block may be located between two data units. With reference to FIG. 5a, after an S code block and a T code block are added to two ends of P D code blocks, an O code block may be inserted between two data units. For example, the O code block may be periodically inserted. Further, an idle code block may be filled in a code block stream into which the O code block is inserted, to perform rate adaptation.

A possible form of the code block stream into which the O code block is inserted may be: ... OISDDDDTIOISDDDDTIOI..., where O is an O code block, I is an idle code block, S is a header code block, D is a data code block, and T is a tail code block.

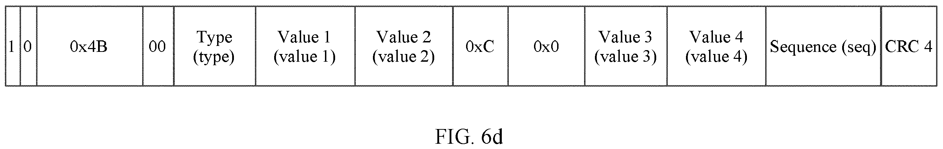

For a structure form of the O code block, refer to related descriptions in FIG. 2b. FIG. 6d is a schematic diagram of an example of a structure of a possible O code block. As shown in FIG. 6d, information carried in a payload area of the code block may include a code block type area "0x4B", and values carried in the payload area may sequentially be: 00, a type (type), a value 1 (value 1), a value 2 (value 2), 0xC, 0x0, a value 3 (value 3), a value 4 (value 4), a sequence (sequence), and cyclic redundancy check (Cyclic Redundancy Check, CRC) 4. For example, the first clock frequency information may be carried in at least one of the value 1 (value 1), the value 2 (value 2), the value 3 (value 3), or the value 4 (value 4) of the O code block.

In still another possible implementation, the first data unit may further include the data frame shown in FIG. 2d, and the first data unit may include an overhead area and a payload area. The first clock frequency information may be carried in at least one of the overhead area or the payload area in the data frame shown in FIG. 2d. For example, the first clock frequency information is carried in at least one of a general overhead, a mapping overhead, or CRC 8 in the overhead area. The k first data frames may be carried in the payload area of the data frame shown in FIG. 2d. It should be noted that the first clock frequency information may be carried one or more first data units. The k first data frames may also be carried one or more first data units. A specific carrying solution is similar to the foregoing content. For example, a solution of setting a first data unit group may be used. Details are not described herein again.

The foregoing content is described by using sending one first service data stream as an example. During actual application, a source communication apparatus may also send a plurality of service data streams. For example, in addition to the first service data stream, the source communication apparatus may further send Q₀ second service data streams to the first communication apparatus, where Q₀ is a positive integer.

In a possible implementation, the Q₀ second service data streams and the first service data stream have a same source communication apparatus, and the Q₀ second service data streams and the first service data stream have a same sink communication apparatus. In this case, the Q₀ second service data streams and the first service data stream have a same source and sink.

In a possible implementation, the first communication apparatus may obtain third indication information of each of the Q₀ second service data streams and the first service data stream. The third indication information indicates whether the Q₀ second service data streams and the first service data stream have a same source and sink.

For two service data streams in the Q₀ second service data streams and the first service data stream, the first communication apparatus may determine, based on two pieces of third indication information corresponding to the two service data streams, whether the two service data streams are from a same source communication apparatus (which may be a same logical communication apparatus or a same physical communication apparatus) and whether the two service data streams are to a same sink communication apparatus (which may be a same logical communication apparatus or a same physical communication apparatus).

For the service data streams in the Q₀ second service data streams and the first service data stream, the third indication information of the service data streams may be one piece of information, and whether the Q₀ second service data streams and the first service data stream have a same source and sink may be determined based on the information. In still another possible implementation, the third indication information may include two portions of information. For example, the third indication information includes source indication information and sink indication information. The first communication apparatus may determine, based on source indication information of two service data streams, whether the two service data streams are from a same source communication apparatus. The first communication apparatus may further determine, based on sink indication information of the two service data streams, whether the two service data streams are to a same sink communication apparatus.

For example, for two service data streams in the Q₀ second service data streams and the first service data stream, two pieces of source indication information of the two service data streams may be two port numbers, and the two port numbers may be the same or may be different. When the two port numbers are the same, the first communication apparatus may determine, based on the source indication information corresponding to the two service data streams, that the two service data streams are from a same source communication apparatus. When the two port numbers are different, if the first communication apparatus determines that the two port numbers (which may be logical port numbers or physical port numbers) correspond to a same communication apparatus (for example, the first communication apparatus is connected to a same communication apparatus by using the two port numbers), the first communication apparatus may also determine, based on the source indication information corresponding to the two service data streams, that the two service data streams are from a same source communication apparatus. When the two port numbers are different, if the first communication apparatus determines that the two port numbers (which may be logical port numbers or physical port numbers) do not correspond to a same communication apparatus (for example, the first communication apparatus is connected to a same communication apparatus by using the two port numbers), the first communication apparatus determines that the two service data streams are not from a same source communication apparatus.

For another example, for two service data streams in the Q₀ second service data streams and the first service data stream, two pieces of third indication information of the two service data streams may be two service numbers or two pieces of service type information. When determining that two services have a same service number or same service type information, the first communication apparatus may determine that the two service data streams have a same source and sink.

It can be learned from the foregoing example that the third indication information may be some configured indication information. In addition, the third indication information may alternatively be address information, for example, medium access control (medium access control, MAC) address information or an Internet protocol (Internet protocol, IP) address. For example, the source indication information in the third indication information may be a source address, and the sink indication information may be a destination address. The Q₀ second service data streams and the first service data stream have a same source address, and the Q₀ second service data streams and the first service data stream have a same target address. In this case, the Q₀ second service data streams and the first service data stream have a same source and sink.

In a possible implementation, in S302, the first communication apparatus may multiplex the first service data stream and the Q₀ second service data streams, to obtain the first code block stream. Parallel processing may be implemented on a plurality of service data streams through multiplexing, to improve a processing speed of each service data stream. There may be a plurality of multiplexing manners. The following describes, by using an implementation c1 and an implementation c2, a specific implementation in which the first communication apparatus multiplexes the first service data stream and the Q₀ second service data streams, and an implementation on a second communication apparatus side.

### Implementation c1:

In the implementation c1, the first communication apparatus multiplexes bit blocks of the first service data stream and the Q₀ second service data streams on a basis of a bit block including n₀ consecutive bits, to obtain the first code block stream, where n₀ is a positive integer.

In the implementation c1, the first communication apparatus receives the first service data stream and the Q₀ second service data streams. The first communication apparatus may multiplex, based on a preset order of the first service data stream and the Q₀ second service data streams and on a basis of a bit block including n₀ consecutive bits, bit blocks of the first service data stream and the Q₀ second service data streams, to obtain a third service data stream. Further, the first communication apparatus may generate the first code block stream based on the third service data stream.

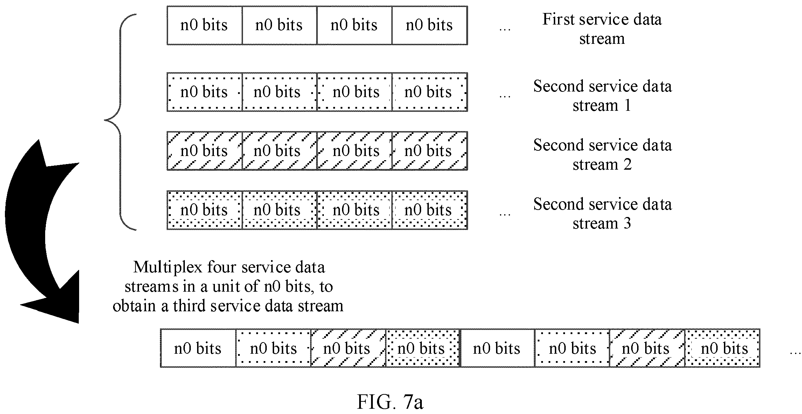

FIG. 7a is a schematic diagram of an example of multiplexing the bit block with n₀ bits in the first service data stream and the Q₀ second service data streams. In FIG. 7a, an example in which Q₀ is 3 is used for description. Four signals (which are respectively the first service data stream, a second service data stream 1, a second service data stream 2, and a second service data stream 3) are multiplexed, to obtain the third service data stream shown in FIG. 7a.

In this embodiment of this application, for the process in which the first communication apparatus generates the first code block stream based on the third service data stream, refer to the process shown in FIG. 5a. In this case, the third service data stream is the service data stream 1 in FIG. 5a, and the code block stream 1 is the first code block stream. Based on a value of n₀, D code blocks included in one data unit may carry a plurality of signals.

For the k first data frames and the k third data frames of each of the Q₀ second service data streams, the first communication apparatus may carry the data frames by using one data unit, or may carry the data frames by using a plurality of data units. For example, the first code block stream includes a first data unit group. The first data unit group includes W₁ first data units.

When W₁ is 1, one first data unit in the W₁ first data units includes the bits corresponding to the k first data frames of the first service data stream, and bits corresponding to the k third data frames of each of the Q₀ second service data streams.

When W₁ is an integer greater than 1, one first data unit in the W₁ first data units includes some of the bits corresponding to the k first data frames of the first service data stream, and some of bits corresponding to the k third data frames of each of the Q₀ second service data streams.

In a possible implementation, if W₁ is an integer greater than 1, and k/W₁ is an integer, one first data unit in the W₁ first data units includes bits corresponding to (k/W₁) first data frames of the first service data stream, and bits corresponding to (k/W₁) third data frames of each of the Q₀ second service data streams.

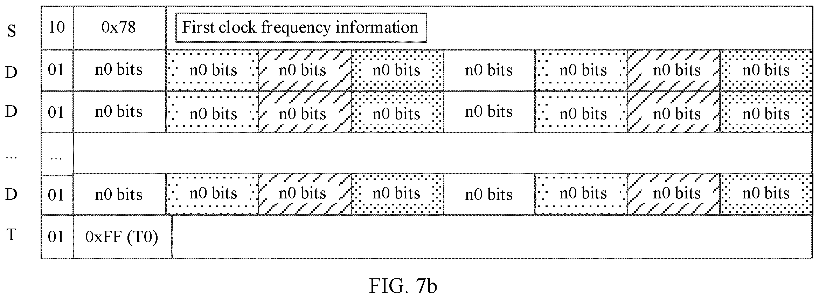

Example 1: In an example in which n₀ is 8, the first communication apparatus multiplexes the first service data stream and the Q₀ second service data streams on a basis of 8 bits (or referred to as 1 byte). FIG. 7b is an example of a schematic diagram of a signal carried in a data unit shown in FIG. 6a. As shown in FIG. 7b, one D code block may carry 64-bit data, that is, may carry eight consecutive n₀-bit data units of the third service data stream. In a possible implementation, one data unit may include 16 D code blocks. If one PCM frame has 256 bits, one PCM frame is carried by four D code blocks, and four PCM frames of four signals may be carried by 16 D code blocks.

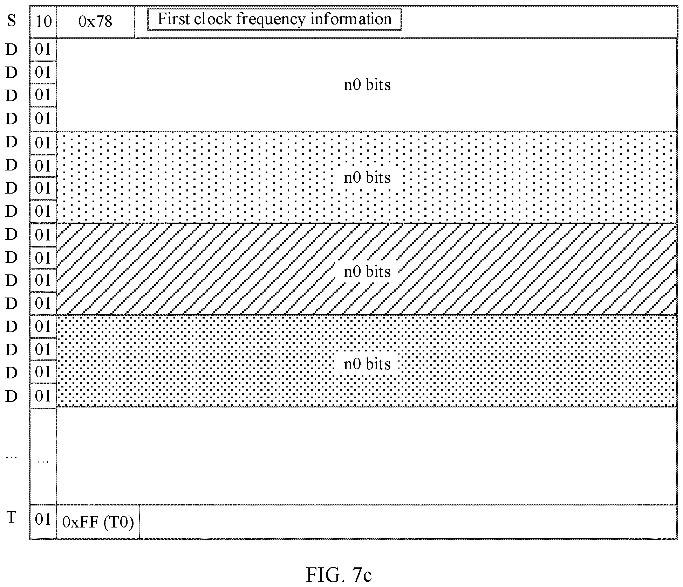

Example 2: In an example in which n₀ is 256, the first communication apparatus multiplexes the first service data stream and the Q₀ second service data streams on a basis of 256 bits (or referred to as 32 bytes). FIG. 7c is an example of a schematic diagram of a signal carried in a data unit shown in FIG. 6a. As shown in FIG. 7c, one D code block may carry 64-bit data, and four D code blocks may carry one n₀-bit data unit of the third service data stream.

When one data unit of the first code block stream carries a plurality of signals, one piece of clock frequency information may be carried. The first data unit is used as an example. The first data unit may include bits corresponding to the k first data frames of the first service data stream, bits corresponding to the k third data frames of each of the Q₀ second service data streams, and the first clock frequency information. The first data unit may include only the first clock frequency information. In this case, in addition to the transmission duration of the k first data frames of the first service data stream, the first clock frequency information may further indicate transmission duration of k third data frames of a second service data stream corresponding to third clock frequency information. The transmission duration of the k first data frames is equal to the transmission duration of the k third data frames of the second service data stream.

In still another possible implementation, the first data unit may further include a plurality of pieces of clock frequency information. For example, in addition to the first clock frequency information, the first data unit may further include Q₀ pieces of third clock frequency information corresponding to the Q₀ second service data streams. The third clock frequency information in the Q₀ pieces of third clock frequency information indicates the transmission duration of the k third data frames of the second service data stream.

Correspondingly, after obtaining the first code block stream, the second communication apparatus side may decapsulate the first code block stream, to obtain the third service data stream. Further, the second communication apparatus may demultiplex the first code block stream on a basis of a bit block including n₀ consecutive bits, to obtain the first service data stream and the Q₀ second service data streams.

### Implementation c2:

In the implementation c2, the first communication apparatus multiplexes data units of a code block stream corresponding to the first service data stream and the Q₀ second service data streams on a basis of N₁ (N₁ is a positive integer) data units, to obtain the first code block stream.

In the implementation c2, the first communication apparatus may process the first service data stream, to generate the second code block stream. For this process, refer to the process shown in FIG. 5a. The first service data stream may be the service data stream 1, and the second code block stream may be a code block stream 2.

In another aspect, the first communication apparatus may process the Q₀ second service data streams, to generate Q₀ third code block streams. For this process, refer to the process shown in FIG. 5a. The second service data stream may be the service data stream 1, and the third code block stream corresponding to the second service data stream may be a code block stream 2.

Further, the first communication apparatus multiplexes data in the Q₀ third code block streams and the second code block stream, to obtain the first code block stream. For example, the second communication apparatus may multiplex, based on a preset order of the Q₀ third code block streams and the second code block stream and on a basis of N₁ data units, data units of the Q₀ third code block streams and the second code block stream, to obtain the first code block stream.

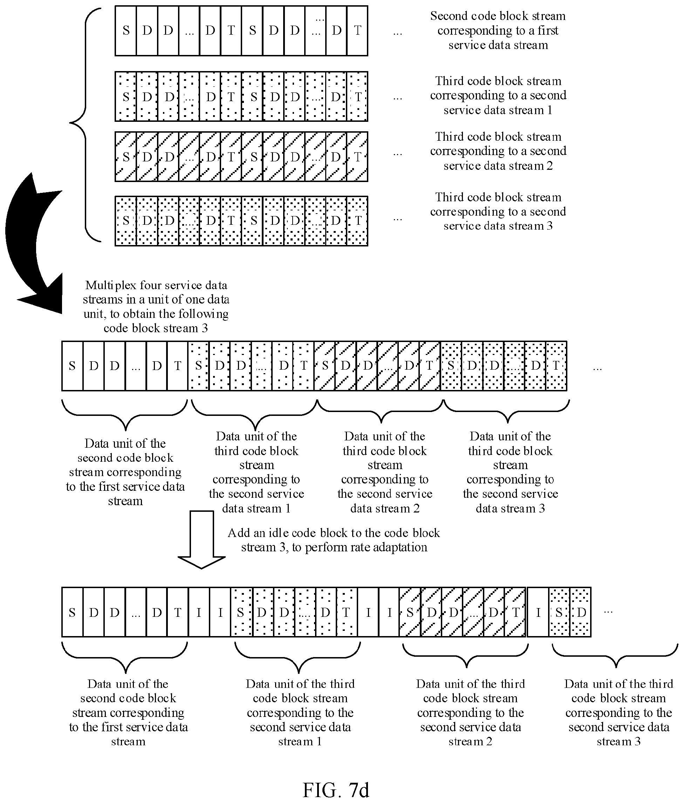

FIG. 7d is a schematic diagram of an example in which the first communication apparatus multiplexes the data units of the Q₀ third code block streams and the second code block stream on a basis of one data unit. As shown in FIG. 7d, the first communication apparatus multiplexes data of the Q₀ third code block streams and the second code block stream on a basis of one data unit, to obtain a code block stream 3. Further, an idle code block may be added between data units of the code block stream 3, to perform rate adaptation. The code block stream 3 to which the idle code block is added may be understood as the first code block stream.

In a possible implementation, one piece of clock frequency information may be carried in each data unit. For example, the first clock frequency information may be carried in the first data unit. The second code block stream includes the first data unit, and the first data unit includes the first clock frequency information and the k first data frames. For the third code block stream, one data unit of the third code block stream may carry the k third data frames of the second service data stream corresponding to the third code block stream and the third clock frequency information. The third clock frequency information indicates the transmission duration of the k third data frames of the second service data stream.

In still another possible implementation, a plurality of consecutive data units of the first code block stream may share one piece of clock frequency information. In other words, the clock frequency information may be carried only in the data unit of the second code block stream, and the clock frequency information is not carried in the Q₀ third code block streams. As shown in FIG. 7d, four consecutive data units are separately from four signals. It is assumed that the four data units include the first data unit, and the first data unit includes the first clock frequency information and the k first data frames. In the first code block stream, all three data units other than the first data unit in the four consecutive data units do not carry the clock frequency information. In this case, the four data units share the first clock frequency information of the first data unit. In other words, the first clock frequency information not only indicates the transmission duration of the k first data frames, but also indicates the transmission duration of the k third data frames carried in each of the remaining three data units in the four data units.

Further, with reference to the foregoing implementation, the first communication apparatus may set a SEQ field in each data unit of the first code block stream, and the SEQ field may occupy 3 bits, to indicate 0 to 7 (eight values in total). A value of the SEQ field increases with a quantity of data units. For example, if a value of a SEQ field of a current data unit is 0, a value of a SEQ field of a next data unit is increased by 1, and is 1; a value of a SEQ field of a data unit after the next data unit is increased by 1, and is 2; and the rest may be deduced by analogy. When the value of the SEQ field reaches 7, the value restarts from 0.

For example, a value of N₁ is 1, a value of W₁ is 1, and the k first data frames of the first service data stream are carried in one first data unit. A data unit, of the first code block stream, in which the value of the SEQ field is 0 is a data unit (a data unit from the second code block stream) of k data frames (for example, the k first data frames) that carry the first service data stream, a data unit, of the first code block stream, in which the value of the SEQ field is 1 is a data unit of k data frames that carry the second service data stream 1, a data unit, of the first code block stream, in which the value of the SEQ field is 2 is a data unit of k data frames that carry the second service data stream 2, and a data unit, of the first code block stream, in which the value of the SEQ field is 3 is a data unit of k data frames that carry the second service data stream 3. If the data unit in which the value of the SEQ field is 0 carries clock frequency information (for example, the first clock frequency information), the clock frequency information carried in the data unit in which the value of the SEQ field is 0 may indicate that the current data unit carries transmission duration of all data frames from the first service data stream, may further indicate that the data unit, after the current data unit, in which the value of the SEQ field is 1 carries transmission duration of all data frames from the second service data stream 1, may further indicate that the data unit, after the current data unit, in which the value of the SEQ field is 2 carries transmission duration of all data frames from the second service data stream 2, and may further indicate that the data unit, after the current data unit, in which the value of the SEQ field is 3 carries transmission duration of all data frames from the second service data stream 3. The data units in which values of SEQ fields are 1, 2, and 3 do not carry the clock frequency information.

Similarly, a data unit (a data unit from the second code block stream), of the first code block stream, in which the value of the SEQ field is 4 is a data unit of k data frames that carry the first service data stream, a data unit, of the first code block stream, in which the value of the SEQ field is 5 is a data unit of k data frames that carry the second service data stream 1, a data unit, of the first code block stream, in which the value of the SEQ field is 6 is a data unit of k data frames that carry the second service data stream 2, and a data unit, of the first code block stream, in which the value of the SEQ field is 7 is a data unit of k data frames that carry the second service data stream 3. The data unit in which the value of the SEQ field is 4 may carry the clock frequency information. The clock frequency information carried in the data unit in which the value of the SEQ field is 4 may indicate that the current data unit carries transmission duration of all data frames from the first service data stream, may further indicate that the data unit, after the current data unit, in which the value of the SEQ field is 5 carries transmission duration of all data frames from the second service data stream 1, may further indicate that the data unit, after the current data unit, in which the value of the SEQ field is 6 carries transmission duration of all data frames from the second service data stream 2, and may further indicate that the data unit, after the current data unit, in which the value of the SEQ field is 7 carries transmission duration of all data frames from the second service data stream 3. The data units in which values of SEQ fields are 5, 6, and 7 do not carry the clock frequency information.

Correspondingly, the second communication apparatus may remove padding information (for example, an idle code block) from the first code block stream, to obtain the code block stream 3. Further, the second communication apparatus may demultiplex the code block stream 3, for example, demultiplexing the first code block stream on a basis of N₁ data units, to obtain the Q₀ third code block streams and the second code block stream. The second communication apparatus may obtain the k first data frames of the first service data stream and the first clock frequency information from the second code block stream. For the third code block stream in the Q₀ third code block streams, the second communication apparatus may further process the third code block stream, to obtain the k third data frames of the second service data stream corresponding to the third code block stream.

The solution provided in embodiments of this application is applicable to a large-granularity pipe. In this case, before S303, the first communication apparatus may further obtain Q₁ fourth code block streams, where Q₁ is a positive integer. In S303, the first code block stream may perform time division multiplexing on the Q₁ fourth code block streams and the first code block stream according to a correspondence between the Q₁ fourth code block streams and S₁ first slots and a correspondence between the first code block stream and the S₁ first slots, to obtain a fifth code block stream; and send the fifth code block stream. The Q₁ fourth code block streams and one code block stream in the first code block stream correspond to at least one first slot in the S₁ first slots. S₁ is an integer not less than (Q₁+1).

Correspondingly, the second communication apparatus obtains the fifth code block stream, and demultiplexes the fifth code block stream according to the correspondence between the Q₁ fourth code block streams and S₁ first slots and a correspondence between the first code block stream and the S₁ first slots, to obtain the Q₁ fourth code block streams and the first code block stream.

With reference to FIG. 2a-1 and FIG. 2a-2, in this solution, when the solution provided in embodiments of this application is applied to a large-granularity pipe scenario, both the first code block stream and the Q₁ fourth code block streams may be code block streams (for example, the code block stream 511, the code block stream 611, and the code block stream 411 in FIG. 2a-1 and FIG. 2a-2) corresponding to a large-granularity pipe. The fifth code block stream may be the code block stream 1211 in FIG. 2a-1 and FIG. 2a-2. The first slot may be a slot corresponding to the large-granularity pipe mentioned in FIG. 2a-1 and FIG. 2a-2. For example, one first slot may correspond to one slot of 5 Gbps.

The following uses a path at a slot granularity of 5 Gbps in FlexE as a large-granularity pipe for description. It should be noted that a bandwidth of one large-granularity pipe in embodiments of this application is not limited to 5 Gbps, for example, may be 6 Gbps or 7 Gbps.

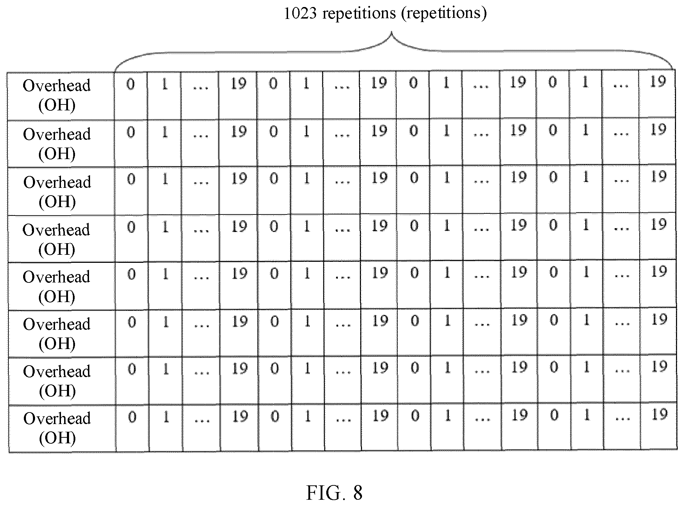

FIG. 8 is a schematic diagram of an example of a structure of a frame format (a data frame format of the code block stream 1211) of a flexible Ethernet protocol according to an embodiment of this application. The frame format of the code block stream 1211 output by the first communication apparatus in FIG. 2a-1 may be the frame format of the flexible Ethernet protocol. As shown in FIG. 8, in the flexible Ethernet protocol, a fixed frame format may be constructed based on transmission of a physical port, and slot division based on TDM is performed. For a 100 GE PHY port, a data code block stream may include 20 64B/66B code blocks and correspond to 20 slots. Each slot has a bandwidth of 5 Gbps, which is referred to as one slot (slot).

A code block stream corresponding to a large-granularity pipe is multiplexed based on 20 slots, to construct a time division multiplexing frame.

As shown in FIG. 8, the flexible Ethernet may construct a time division multiplexing frame structure based on the 64B/66B code block. Data at each PHY in the FlexE is aligned by periodically inserting a FlexE overhead (OH) code block. For example, one 66B overhead code block FlexE OH may be inserted every 1023*20 66B payload data code blocks.

As shown in FIG. 8, 66B code blocks in eight rows (each row includes one OH code block + 1023*20 pieces of data (Data)) form a protocol frame (the protocol frame may also be referred to as a basic frame, a base frame, a single frame, or the like) in the flexible Ethernet protocol. As shown in FIG. 8, 32 protocol frames of the flexible Ethernet protocol form a multiframe of the flexible Ethernet protocol.

In a possible implementation, in the FlexE OH, two management channels may be defined, and the management channel may be used to run a management communication link and an OAM communication link of a 1.2 Mbit/s Ethernet protocol and a 1.8 Mbit/s Ethernet protocol that are coded based on a 64B/66B code block stream. Further, in this embodiment of this application, 64B/66B coding may be used in a scenario of a 100 GE physical layer. An ITU-T MTN reuses the FlexE frame structure. Therefore, the frame structure of the ITU-T MTN is the same as that of the FlexE frame structure. Details are not described again.

In still another possible implementation, the solution provided in embodiments of this application is applicable to a fine-granularity pipe. In this case, before S303, the first communication apparatus may further obtain Q₁ fourth code block streams, where Q₁ is a positive integer. In S303, the first code block stream may perform time division multiplexing on the Q₁ fourth code block streams and the first code block stream according to a correspondence between the Q₁ fourth code block streams and S₁ first slots and a correspondence between the first code block stream and the S₁ first slots, to obtain a fifth code block stream. The Q₁ fourth code block streams and one code block stream in the first code block stream correspond to at least one first slot in the S₁ first slots. S₁ is an integer not less than (Q₁+1).

Further, the first communication apparatus obtains Q₂ sixth code block streams, where Q₂ is a positive integer. The first communication apparatus performs time division multiplexing on code blocks of the Q₂ sixth code block streams and the fifth code block stream according to a correspondence between the Q₂ sixth code block streams and S₂ second slots and a correspondence between the fifth code block stream and the S₂ second slots, to obtain a seventh code block stream; and sends the seventh code block stream. The Q₂ sixth code block streams and one code block stream in the fifth code block stream correspond to at least one second slot in the S₂ second slots. S₂ is an integer not less than (Q₂+1). Second slots corresponding to the fifth code block stream are divided into the S₁ first slots.

Correspondingly, the second communication apparatus obtains the seventh code block stream, and demultiplexes the seventh code block stream according to the correspondence between the Q₂ sixth code block streams and the S₂ second slots and a correspondence between the fifth code block stream and the S₂ second slots, to obtain the Q₂ sixth code block streams and the fifth code block stream. Further, the second communication apparatus obtains the fifth code block stream, and demultiplexes the fifth code block stream according to the correspondence between the Q₁ fourth code block streams and the S₁ first slots and a correspondence between the first code block stream and the S₁ first slots, to obtain the Q₁ fourth code block streams and the first code block stream.

With reference to FIG. 2a-1 and FIG. 2a-2, in this solution, when the solution provided in embodiments of this application is applied to a fine-granularity pipe scenario, both the first code block stream and the Q₁ fourth code block streams may be code block streams (for example, code block streams corresponding to the fine-granularity service 1 and the fine-granularity service 2) corresponding to the fine-granularity pipe in FIG. 2a-1 and FIG. 2a-2. The fifth code block stream may be the code block stream 411 in FIG. 2a-1 and FIG. 2a-2. The first slot may be a sub-slot corresponding to the fine-granularity pipe mentioned in FIG. 2a-1 and FIG. 2a-2. For example, one first slot may correspond to one sub-slot of 10 M. The Q₂ sixth code block streams may be the code block streams corresponding to large-granularity pipes (for example, the code block stream 511 and the code block stream 611 in FIG. 2a-1 and FIG. 2a-2). The seventh code block stream may be the code block stream 1211 in FIG. 2a-1 and FIG. 2a-2. The second slot may be a slot corresponding to the large-granularity pipe mentioned in FIG. 2a-1 and FIG. 2a-2. For example, one second slot may correspond to one slot of 5 Gbps.

The following describes a flexible fine-granularity basic unit (fine-granularity basic unit, fgBU) frame format in a fine-granularity slot with reference to FIG. 2a-1 and FIG. 2a-2, FIG. 9a, and FIG. 9b.

In this embodiment of this application, at least two fine-granularity pipes may be obtained by dividing a large-granularity pipe. A bandwidth of one fine-granularity pipe is less than a bandwidth of a large-granularity pipe to which the fine-granularity pipe belongs. In this embodiment of this application, an example in which a bandwidth of a large-granularity pipe is 5 Gbps and a bandwidth of a fine-granularity pipe is 10 Mbps is used for description. Bandwidths corresponding to two large-granularity pipes may be equal or unequal. Bandwidths of any two fine-granularity pipes obtained by dividing one large-granularity pipe may also be equal or unequal. To more clearly describe this embodiment of this application, the following content is described by using an example in which a bandwidth of each large-granularity pipe is 5 Gbps and a bandwidth of each fine-granularity pipe is 10 Mbps. One slot corresponding to one large-granularity pipe may be divided into 480 sub-slots, and a correspondence between the 480 sub-slots and fine-granularity services may further be established, to multiplex data of each fine-granularity service according to the correspondence.

FIG. 9a shows an example of a flexible fine-granularity basic unit (fine-granularity basic unit, fgBU) (a code block stream corresponding to the fine-granularity service 1) format according to an embodiment of this application. The code block stream output by the large-granularity pipe 40 is obtained by multiplexing data on a plurality of fine-granularity pipes, that is, a frame format of the code block stream 411 output by the large-granularity pipe 40 may be referred to as an fgBU frame format. As shown in FIG. 9a, the large-granularity pipe 40 is divided into 480 fine-granularity pipes 401, and one fine-granularity pipe corresponds to one sub-slot. Each fine-granularity service is multiplexed according to a correspondence between the sub-slot and the fine-granularity service, to obtain a code block stream (the code block stream output by the large-granularity pipe 40 shown in the figure) obtained through multiplexing.

The code block stream obtained by multiplexing the fine-granularity service includes at least one multiframe. One multiframe includes 20 basic frames (for example, a basic frame 0 to a basic frame 19 in FIG. 9a), and one basic frame includes 24 sub-slot resources. One multiframe may include all 480 sub-slot resources of one large-granularity pipe. The basic frame in embodiments of this application may also be referred to as a fine-granularity basic unit (Fine-Granularity Basic Unit, fgBU) or a fine-granularity basic frame.

As shown in FIG. 9a, a frame structure of the basic frame may include one S code block, 195 D code blocks, and one T code block, and a total length of the basic frame is 197 66b code blocks. A first data code block after the S code block carries overhead information, and a total of locations that can carry the overhead information are 7 * 8 bits = 56 bits. In 24 sub-slot resources included in a single basic frame, eight 65-bit code blocks may be transmitted on one sub-slot resource.

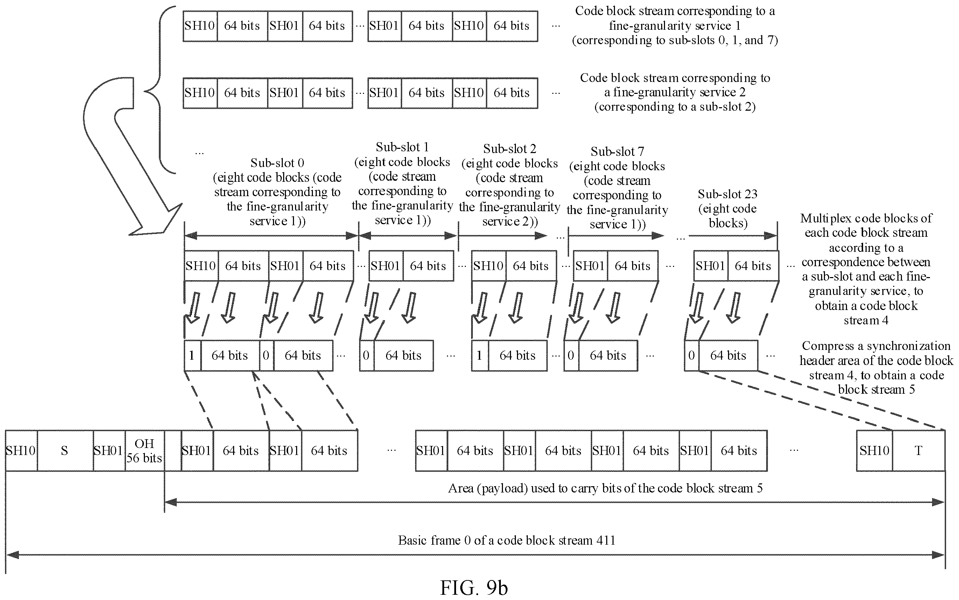

FIG. 9b is a schematic diagram of an example of a basic frame 0 of a code block stream 411. As shown in FIG. 9b, sub-slots corresponding to the fine-granularity service 1 are sub-slots 0 and 1. For example, a bandwidth of the fine-granularity service 1 is increased, and a sub-slot 7 is further allocated to the fine-granularity service 1. A sub-slot allocated to the fine-granularity service 2 is a sub-slot 2. One of Q₁ clients may correspond to one or more of 480 sub-slots included in one large-granularity pipe. There may also be one or more sub-slots in the 480 sub-slots that are not allocated to a client.

The first communication apparatus may encapsulate data corresponding to the fine-granularity service 1, to obtain a code block stream corresponding to the fine-granularity service 1, and encapsulate data corresponding to the fine-granularity service 2, to obtain a code block stream corresponding to the fine-granularity service 2. The first communication apparatus may multiplex, according to a correspondence between the fine-granularity service 1 and a sub-slot and a correspondence between the fine-granularity service 2 and a sub-slot, the code block stream corresponding to the fine-granularity service 1 and the code block stream corresponding to the fine-granularity service 2, to obtain a code block stream 4.

In FIG. 9b, an example in which a code block in a code block stream is a 64-bit/66-bit code block is used for presentation. Further, a synchronization header area of a code block of the code block stream 4 is compressed, to obtain a code block stream 5. A specific compression manner may be, for example, compressing a synchronization header area occupying 2 bits into a synchronization header area occupying 1 bit. For example, if a synchronization header is 01, the synchronization header after compression is 0. If a synchronization header is 10, the synchronization header after compression is 1. Further, the first communication apparatus may place bits of the code block stream 5 into a payload (payload) area of the code block stream 411. In other words, bits of the fourth code block stream are encapsulated into an fgBU frame (basic frame 0).

Still refer to FIG. 9b. One basic frame (which may also be referred to as an fgBU frame) carries data corresponding to 24 sub-slots. An fgBU frame format may include the following four parts:
an fgBU encapsulation header (preamble): used for fgBU boundary positioning and Ethernet rate adaptation, and compatible with an Ethernet preamble, and X-Ethernet/MTN large-granularity pipes;
an fgBU overhead (OH): used to carry overhead information;
an fgBU payload (Payload): used to carry service data, and including a bit other than 56-bit OH information in a D code block after a first S code block of the fgBU frame, a payload area in another D code block, and a bit (for example, a bit other than a synchronization header area in a T7 code block), of the T code block, that may be used to carry service data; and
an fgBU encapsulation tail (T7): compatible with an Ethernet standard T7 code block (a code block type is 0xFF), where it is recommended that an idle code block be added after the encapsulation tail.

A fine-granularity fgBU of an Ethernet hard private line has a fixed length: 197 64B/66B code blocks (1567 bytes before coding), and includes a 7-byte fgBU overhead, a 1560-byte payload, an 8-byte preamble, a 1-byte EFD, and an 8-byte IPG (under a typical rate, each coded fgBU is followed by an idle code block).

There is another manner of generating the code block stream 411. For example, indication information may be carried in an area of the code block stream 411. The indication information indicates information carried in a synchronization header area that is of a code block of the code block stream 5 and that is carried in the multiframe. A compressed 1-bit synchronization header area of each code block is extracted and processed, and then placed in a preset area, for example, after OH information, to obtain the indication information. Then, only 64 bits of each code block in the code block stream 5 other than the synchronization header area are sequentially placed in the payload area of the code block stream 411. The second communication apparatus may restore the synchronization header area of the code block of the code block stream 5 based on the indication information.

It can be understood that, to implement functions in the foregoing embodiments, the communication apparatus includes corresponding hardware structures and/or software modules for performing the functions. A person skilled in the art should be easily aware that, with reference with units and method steps in the examples described in embodiments disclosed in this application, this application can be implemented by hardware or a combination of hardware and computer software. Whether a function is performed through hardware or hardware driven by computer software depends on particular application scenarios and design constraint conditions of the technical solutions.

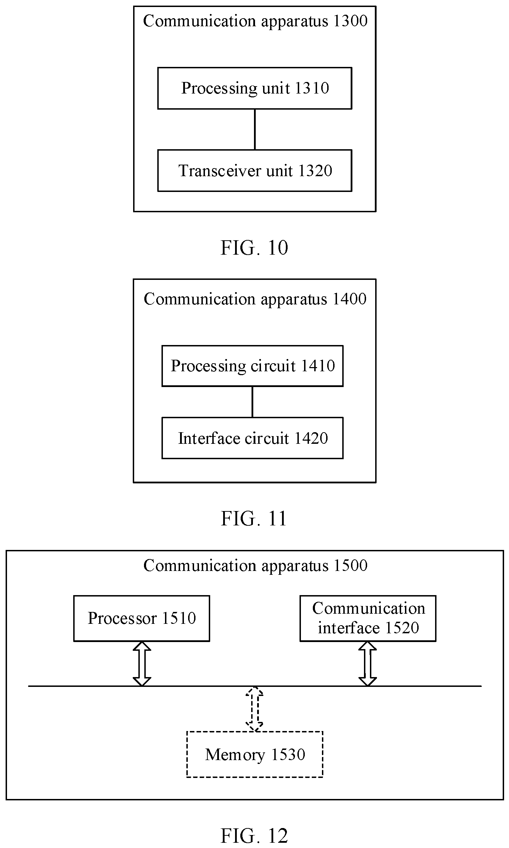

FIG. 10, FIG. 11, and FIG. 12 are schematic diagrams of structures of three possible communication apparatuses according to embodiments of this application. The communication apparatuses may be configured to implement the functions of the first communication apparatus in the foregoing method embodiments. Therefore, beneficial effect of the foregoing method embodiments can also be achieved. The communication apparatuses may alternatively be configured to implement functions of the second communication apparatus in the foregoing method embodiments. Therefore, beneficial effect of the foregoing method embodiments can also be achieved. In embodiments of this application, the communication apparatus may be the transmitting apparatus or the first communication apparatus in FIG. 1a and FIG. 2a-1 and FIG. 2a-2, or may be a module (for example, a chip) used in the transmitting apparatus or the first communication apparatus. In embodiments of this application, the communication apparatus may be the receiving apparatus or the second communication apparatus in FIG. 1a and FIG. 2a-1 and FIG. 2a-2, or may be a module (for example, a chip) used in the receiving apparatus or the second communication apparatus.

As shown in FIG. 10, a communication apparatus 1300 includes a processing unit 1310 and a transceiver unit 1320. The communication apparatus 1300 may be configured to implement the functions of the first communication apparatus in the method embodiment shown in FIG. 3.

When the communication apparatus 1300 is configured to implement the functions of the first communication apparatus in the method embodiment shown in FIG. 3, the processing unit 1310 is configured to use the transceiver unit 1320 to: receive a first service data stream; generate a first code block stream based on the first service data stream, where the first code block stream includes first clock frequency information, and the first clock frequency information indicates transmission duration of k first data frames of the first service data stream, and/or a moment at which the k first data frames of the first service data stream are received; and send the first code block stream.

When the communication apparatus 1300 is configured to implement the functions of the first communication apparatus in the method embodiment shown in FIG. 3, the processing unit 1310 is further configured to use the transceiver unit 1320 to: receive Q₀ second service data streams, where Q₀ is a positive integer; and generate the first code block stream based on the first service data stream and the Q₀ second service data streams. The first clock frequency information further indicates transmission duration of k third data frames of each of the Q₀ second service data streams, and/or a moment at which the first communication apparatus receives the k third data frames.

When the communication apparatus 1300 is configured to implement the functions of the first communication apparatus in the method embodiment shown in FIG. 3, the processing unit 1310 is further configured to use the transceiver unit 1320 to: multiplex, based on a preset order of the first service data stream and the Q₀ second service data streams and on a basis of a bit block including n₀ consecutive bits, bit blocks of the first service data stream and the Q₀ second service data streams, to obtain a third service data stream, where n₀ is a positive integer; and generate the first code block stream based on the third service data stream.

When the communication apparatus 1300 is configured to implement the functions of the first communication apparatus in the method embodiment shown in FIG. 3, the processing unit 1310 is further configured to use the transceiver unit 1320 to: process the Q₀ second service data streams, to generate Q₀ third code block streams; process the first service data stream, to generate a second code block stream, where the second code block stream includes the first clock frequency information, and the second code block stream includes the first clock frequency information and the k first data frames; and multiplex data in the Q₀ third code block streams and the second code block stream, to obtain the first code block stream.

When the communication apparatus 1300 is configured to implement the functions of the first communication apparatus in the method embodiment shown in FIG. 3, the processing unit 1310 is further configured to use the transceiver unit 1320 to multiplex, based on a preset order of the Q₀ third code block streams and the second code block stream and on a basis of N₁ data units, data units of the Q₀ third code block streams and the second code block stream, to obtain the first code block stream, where N₁ is a positive integer.

When the communication apparatus 1300 is configured to implement the functions of the first communication apparatus in the method embodiment shown in FIG. 3, the processing unit 1310 is further configured to use the transceiver unit 1320 to: obtain Q₁ fourth code block streams, where Q₁ is a positive integer; perform time division multiplexing on code blocks of the Q₁ fourth code block streams and the first code block stream according to a correspondence between the Q₁ fourth code block streams and S₁ first slots and a correspondence between the first code block stream and the S₁ first slots, to obtain a fifth code block stream, where the Q₁ fourth code block streams and one code block stream in the first code block stream correspond to at least one first slot in the S₁ first slots, and S₁ is an integer not less than (Q₁+1); and send the fifth code block stream.

When the communication apparatus 1300 is configured to implement the functions of the first communication apparatus in the method embodiment shown in FIG. 3, the processing unit 1310 is further configured to use the transceiver unit 1320 to: obtain Q₂ sixth code block streams, where Q₂ is a positive integer; perform time division multiplexing on code blocks of the Q₂ sixth code block streams and the fifth code block stream according to a correspondence between the Q₂ sixth code block streams and S₂ second slots and a correspondence between the fifth code block stream and the S₂ second slots, to obtain a seventh code block stream, where the Q₂ sixth code block streams and one code block stream in the fifth code block stream correspond to at least one second slot in the S₂ second slots, S₂ is an integer not less than (Q₂+1), and second slots corresponding to the fifth code block stream are divided into the S₁ first slots; and send the seventh code block stream.

As shown in FIG. 10, the communication apparatus 1300 includes the processing unit 1310 and the transceiver unit 1320. The communication apparatus 1300 may be configured to implement the functions of the second communication apparatus in the method embodiment shown in FIG. 3.

When the communication apparatus 1300 is configured to implement the functions of the second communication apparatus in the method embodiment shown in FIG. 3, the processing unit 1310 is configured to use the transceiver unit 1320 to: obtain a first code block stream, where the first code block stream includes first clock frequency information, and the first clock frequency information indicates transmission duration of k first data frames of a first service data stream, and/or a moment at which the k first data frames of the first service data stream are received; obtain the k first data frames and the first clock frequency information from the first code block stream; and send the k first data frames based on the first clock frequency information.

When the communication apparatus 1300 is configured to implement the functions of the second communication apparatus in the method embodiment shown in FIG. 3, the processing unit 1310 is further configured to use the transceiver unit 1320 to: obtain second clock frequency information and k second data frames from the first code block stream, where the second clock frequency information indicates transmission duration of k second data frames of the first service data stream, and/or a moment at which the first communication apparatus receives the k second data frames of the first service data stream; and send the k second data frames based on the second clock frequency information.

When the communication apparatus 1300 is configured to implement the functions of the second communication apparatus in the method embodiment shown in FIG. 3, the processing unit 1310 is further configured to use the transceiver unit 1320 to: obtain the first clock frequency information from the first code block stream; and demultiplex the first code block stream, to obtain the first service data stream and Q₀ second service data streams, where Q₀ is a positive integer, and the first clock frequency information further indicates transmission duration of k third data frames of each of the Q₀ second service data streams, and/or a moment at which the first communication apparatus receives the k third data frames.

When the communication apparatus 1300 is configured to implement the functions of the second communication apparatus in the method embodiment shown in FIG. 3, the processing unit 1310 is further configured to use the transceiver unit 1320 to demultiplex the first code block stream on a basis of a bit block including n₀ consecutive bits, to obtain the first service data stream and the Q₀ second service data streams.

When the communication apparatus 1300 is configured to implement the functions of the second communication apparatus in the method embodiment shown in FIG. 3, the processing unit 1310 is further configured to use the transceiver unit 1320 to: demultiplex the first code block stream, to obtain Q₀ third code block streams and a second code block stream, where the second code block stream includes first clock frequency information and the k first data frames; obtain the first service data stream and the first clock frequency information from the second code block stream; and obtain the Q₀ second service data streams from the Q₀ third code block streams.

When the communication apparatus 1300 is configured to implement the functions of the second communication apparatus in the method embodiment shown in FIG. 3, the processing unit 1310 is further configured to use the transceiver unit 1320 to demultiplex the first code block stream on a basis of N₁ data units, to obtain Q₀ third code block streams and a second code block stream, where N₁ is a positive integer.

When the communication apparatus 1300 is configured to implement the functions of the second communication apparatus in the method embodiment shown in FIG. 3, the processing unit 1310 is further configured to use the transceiver unit 1320 to: obtain a fifth code block stream; and demultiplex the fifth code block stream according to a correspondence between Q₁ fourth code block streams and S₁ first slots and a correspondence between the first code block stream and the S₁ first slots, to obtain the Q₁ fourth code block streams and the first code block stream, where the Q₁ fourth code block streams and one code block stream in the first code block stream correspond to at least one first slot in the S₁ first slots, and S₁ is an integer not less than (Q₁+1).

When the communication apparatus 1300 is configured to implement the functions of the second communication apparatus in the method embodiment shown in FIG. 3, the processing unit 1310 is further configured to use the transceiver unit 1320 to: obtain a seventh code block stream; and demultiplex the seventh code block stream according to a correspondence between Q₂ sixth code block streams and S₂ second slots and a correspondence between the fifth code block stream and the S₂ second slots, to obtain the Q₂ sixth code block streams and the fifth code block stream, where the Q₂ sixth code block streams and one code block stream in the fifth code block stream correspond to at least one second slot in the S₂ second slots, second slots corresponding to the fifth code block stream are divided into the S₁ first slots, and S₂ is an integer not less than (Q₂+1).

For related descriptions of the foregoing solution and more detailed descriptions of the processing unit 1310 and the transceiver unit 1320, directly refer to related descriptions in the method embodiment shown in FIG. 3. Details are not described herein.

As shown in FIG. 11, a communication apparatus 1400 includes a processing circuit 1410 and an interface circuit 1420. The processing circuit 1410 is coupled to the interface circuit 1420. It may be understood that the interface circuit 1420 may be a transceiver or an input/output interface. Optionally, the communication apparatus 1400 may further include a memory, configured to store instructions executed by the processing circuit, input data required by the processing circuit 1410 to run instructions, or data generated after the processing circuit 1410 runs instructions.

When the communication apparatus 1400 is configured to implement the method shown in FIG. 3, the processing circuit 1410 is configured to implement the functions of the processing unit 1310, and the interface circuit 1420 is configured to implement the functions of the transceiver unit 1320.

As shown in FIG. 12, a communication apparatus 1500 includes a processor 1510 and a communication interface 1520. The processor 1510 is coupled to the communication interface 1520. It may be understood that the communication interface 1520 may be a transceiver or an input/ output interface. Optionally, the communication apparatus 1500 may further include a memory 1530, configured to: store instructions executed by the processor 1510, or store input data required by the processor 1510 to run instructions, or store data generated after the processor 1510 runs instructions.

When the communication apparatus 1500 is configured to implement the method shown in FIG. 3, the processor 1510 is configured to implement the functions of the processing unit 1310, and the communication interface 1520 is configured to implement the functions of the transceiver unit 1320.

When the communication apparatus 1500 is configured to implement the functions of the first communication apparatus in the method embodiment shown in FIG. 3, the processor 1510 is configured to use the communication interface 1520 to: receive a first service data stream; generate a first code block stream based on the first service data stream, where the first code block stream includes first clock frequency information, and the first clock frequency information indicates transmission duration of k first data frames of the first service data stream, and/or a moment at which the k first data frames of the first service data stream are received; and send the first code block stream.

When the communication apparatus 1500 is configured to implement the functions of the second communication apparatus in the method embodiment shown in FIG. 3, the processor 1510 is configured to use the communication interface 1520 to: obtain a first code block stream, where the first code block stream includes first clock frequency information, and the first clock frequency information indicates transmission duration of k first data frames of a first service data stream, and/or a moment at which the k first data frames of the first service data stream are received; obtain the k first data frames and the first clock frequency information from the first code block stream; and send the k first data frames based on the first clock frequency information.

When the communication apparatus is a chip used in the communication apparatus, the chip in the communication apparatus implements the functions of the communication apparatus in the foregoing method embodiments. The chip in the communication apparatus receives information from another module (for example, a radio frequency module or an antenna) in the communication apparatus, where the information is sent by a network device to the communication apparatus. Alternatively, the chip in the communication apparatus sends information to another module (for example, a radio frequency module or an antenna) in the communication apparatus, where the information is sent by the communication apparatus to a network device.

It should be noted that the processor in embodiments of this application may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a transistor logic device, a hardware component, or any combination thereof. The general-purpose processor may be a microprocessor or any regular processor.

According to the method provided in embodiments of this application, this application further provides a computer program product. The computer program product includes a computer program or instructions. When the computer program or the instructions is/are run on a computer, the computer is enabled to perform the method in any embodiment shown in FIG. 3.

According to the method in embodiments of this application, this application further provides a computer-readable storage medium. The computer-readable medium stores a program or instructions. When the program or the instructions is/are run on a computer, the computer is enabled to perform the method in any embodiment shown in FIG. 3.

According to the method provided in embodiments of this application, this application further provides a chip system. The chip system may include a processor. The processor is coupled to the memory, and may be configured to perform the method in any embodiment shown in FIG. 3. Optionally, the chip system further includes a memory. The memory is configured to store a computer program (which may also be referred to as code or instructions). The processor is configured to invoke a computer program from the memory and run the computer program, so that an apparatus on which the chip system is installed performs the method in any embodiment shown in FIG. 3.

According to the method in embodiments of this application, this application further provides a system, including the first communication apparatus and the second communication apparatus.

The method steps in embodiments of this application may be implemented in a hardware manner, or may be implemented in a manner of executing software instructions by the processor. The software instructions may include a corresponding software module. The software module may be stored in a random access memory (Random Access Memory, RAM), a flash memory (flash), a read-only memory (Read-Only Memory, ROM), a programmable read-only memory, an erasable programmable read-only memory (Erasable Programmable ROM, EPROM), an electrically erasable programmable read-only memory, a register, a hard disk, a solid-state drive (solid-state drive, SSD), a removable hard disk, a compact disc read-only memory (Compact Disc Read-Only Memory, CD-ROM), or any other form of storage medium well-known in the art. For example, a storage medium is coupled to the processor, to enable the processor to read information from the storage medium and write information into the storage medium. Certainly, the storage medium may be a component of the processor. The processor and the storage medium may be disposed in an ASIC. In addition, the ASIC may be located in a communication apparatus. Certainly, the processor and the storage medium may exist in the communication apparatus as discrete components.

All or some of embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially performed. The computer may be a general-purpose computer, a dedicated computer, a computer network, a network device, user equipment, or another programmable apparatus. The computer programs or the instructions may be stored in a computer-readable storage medium or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are/is consistent and may be mutually referenced, and technical features in different embodiments may be combined based on an internal logical relationship thereof, to form a new embodiment.

"A plurality of" in this application means two or more than two. The term "and/or" describes an association relationship between associated objects, and represents that three relationships may exist. For example, A and/or B may represent the following cases: Only A exists, both A and B exist, and only B exists, where A and B may be singular or plural. In text descriptions of this application, a character "/" usually indicates that associated objects are in an "or" relationship. In the formula of this application, a character "/" indicates that associated objects are in a "division" relationship. "Including at least one of A, B, or C" may indicate: including A; including B; including C; including A and B; including A and C; including B and C; and including A, B, and C.

It may be understood that various numbers in embodiments of this application are merely for distinguishing for ease of description, and are not intended to limit the scope of embodiments of this application. Sequence numbers of the foregoing processes do not mean execution sequences. The execution sequences of the processes should be determined according to functions and internal logic of the processes.

## Claims

1. A communication method, wherein the method comprises:
receiving a first service data stream;
generating a first code block stream based on the first service data stream, wherein the first code block stream comprises first clock frequency information, the first clock frequency information indicates transmission duration of k first data frames of the first service data stream, and/or a moment at which the k first data frames of the first service data stream are received, and k is a positive integer; and
sending the first code block stream.

2. The method according to claim 1, wherein before the generating a first code block stream based on the first service data stream, the method further comprises:
receiving Q₀ second service data streams, wherein Q₀ is a positive integer; and
the generating a first code block stream based on the first service data stream comprises:
generating the first code block stream based on the first service data stream and the Q₀ second service data streams, wherein
the first clock frequency information further indicates transmission duration of k third data frames of each of the Q₀ second service data streams, and/or a moment at which the k third data frames are received.

3. The method according to claim 2, wherein the Q₀ second service data streams and the first service data stream have a same source communication apparatus, and the Q₀ second service data streams and the first service data stream have a same sink communication apparatus.

4. The method according to claim 2 or 3, wherein the generating the first code block stream based on the first service data stream and the Q₀ second service data streams comprises:
multiplexing, based on a preset order of the first service data stream and the Q₀ second service data streams and on a basis of a bit block comprising n₀ consecutive bits, bit blocks of the first service data stream and the Q₀ second service data streams, to obtain a third service data stream, wherein n₀ is a positive integer; and
generating the first code block stream based on the third service data stream.

5. The method according to claim 2 or 3, wherein the generating the first code block stream based on the first service data stream and the Q₀ second service data streams comprises:
processing the Q₀ second service data streams, to generate Q₀ third code block streams;
processing the first service data stream, to generate a second code block stream, wherein the second code block stream comprises the first clock frequency information and the k first data frames; and
multiplexing data in the Q₀ third code block streams and the second code block stream, to obtain the first code block stream.

6. A communication method, wherein the method comprises:
obtaining a first code block stream, wherein the first code block stream comprises first clock frequency information, the first clock frequency information indicates transmission duration of k first data frames of a first service data stream, and/or a moment at which the k first data frames of the first service data stream are received, and k is a positive integer;
obtaining the k first data frames and the first clock frequency information from the first code block stream; and
sending the k first data frames based on the first clock frequency information.

7. The method according to claim 6, wherein the obtaining the k first data frames and the first clock frequency information from the first code block stream comprises:
obtaining the first clock frequency information from the first code block stream; and
demultiplexing the first code block stream, to obtain Q₀ second service data streams and the k first data frames of the first service data stream, wherein Q₀ is a positive integer, wherein
the first clock frequency information further indicates transmission duration of k third data frames of each of the Q₀ second service data streams, and/or a moment at which the k third data frames are received.

8. The method according to claim 6 or 7, wherein the Q₀ second service data streams and the first service data stream have a same source communication apparatus, and the Q₀ second service data streams and the first service data stream have a same sink communication apparatus.

9. The method according to claim 7 or 8, wherein the demultiplexing the first code block stream, to obtain the first service data stream and Q₀ second service data streams comprises:
demultiplexing the first code block stream on a basis of a bit block comprising n₀ consecutive bits, to obtain the first service data stream and the Q₀ second service data streams.

10. The method according to claim 7 or 8, wherein the obtaining the first clock frequency information from the first code block stream, and demultiplexing the first code block stream, to obtain the first service data stream and Q₀ second service data streams comprises:
demultiplexing the first code block stream, to obtain Q₀ third code block streams and a second code block stream, wherein the second code block stream comprises the first clock frequency information and the k first data frames;
obtaining the first service data stream and the first clock frequency information from the second code block stream; and
obtaining the Q₀ second service data streams from the Q₀ third code block streams.

11. The method according to any one of claims 1 to 10, wherein the first clock frequency information comprises:
a moment at which a frame header of a 1^{st} data frame in the k first data frames is received.

12. The method according to any one of claims 1 to 11, wherein the first clock frequency information comprises:
a moment at which a frame trailer of a k^{th} first data frame in the k first data frames is received.

13. The method according to any one of claims 1 to 10, wherein the first clock frequency information comprises:
a first count value, wherein
the first count value is a quantity of periods of a clock frequency of a local clock signal of a first communication apparatus in duration in which the first communication apparatus receives the k first data frames.

14. The method according to any one of claims 1 to 10, wherein the first clock frequency information comprises:
a second count value, wherein
the second count value is a difference between a first count value and a preset count value, and the first count value is a quantity of periods of a clock frequency of a local clock signal of a first communication apparatus in duration in which the first communication apparatus receives the k first data frames.

15. The method according to any one of claims 1 to 10, wherein the first clock frequency information comprises:
a second count value and a preset count value, wherein
the second count value is a difference between a first count value and the preset count value, and the first count value is a quantity of periods of a clock frequency of a local clock signal of a first communication apparatus in duration in which the first communication apparatus receives the k first data frames.

16. The method according to any one of claims 1 to 10, wherein the first clock frequency information comprises:
first duration, wherein the first duration is the transmission duration of the k first data frames.

17. The method according to any one of claims 1 to 10, wherein the first clock frequency information comprises:
a third count value, wherein
the third count value is a quantity of periods of a clock frequency of a local clock signal of a first communication apparatus in second duration, and the second duration is duration from a preset moment to a moment at which a frame header of a 1^{st} first data frame in the k first data frames is received.

18. The method according to any one of claims 1 to 10, wherein the first clock frequency information comprises:
second duration, wherein
the second duration is duration from a preset moment to a moment at which a frame header of a 1^{st} first data frame in the k first data frames is received.

19. The method according to any one of claims 1 to 10, wherein the first clock frequency information comprises:
a fourth count value, wherein
the fourth count value is a quantity of periods of a clock frequency of a local clock signal of a first communication apparatus in third duration, and the third duration is duration from a preset moment to a moment at which a frame trailer of a k^{th} first data frame in the k first data frames is received.

20. The method according to any one of claims 1 to 10, wherein the first clock frequency information comprises:
third duration, wherein
the third duration is duration from a preset moment to a moment at which a frame trailer of a k^{th} first data frame in the k first data frames is received.

21. The method according to any one of claims 1 to 20, wherein the first code block stream further comprises second clock frequency information, and the second clock frequency information indicates transmission duration of k second data frames of the first service data stream, and/or a moment at which the k second data frames of the first service data stream are received.

22. The method according to any one of claims 1 to 21, wherein the first code block stream comprises a first data unit group, the first data unit group comprises W₁ first data units, W₁ is a positive integer, and the first clock frequency information is carried in at least one of the following content of at least one first data unit in the W₁ first data units:
a header code block, at least one data code block, a tail code block, or an operations, administration, and maintenance code block.

23. The method according to claim 22, wherein bits corresponding to the k first data frames are carried in one of the following content of a first data unit in the W₁ first data units:
a payload area of a data code block in the at least one data code block; or
the tail code block and a payload area of a data code block in the at least one data code block.

24. The method according to any one of claims 1 to 21, wherein the first code block stream comprises a first data unit group, the first data unit group comprises W₁ first data units, W₁ is a positive integer, and the first clock frequency information is carried in at least one of the following content of at least one first data unit in the W₁ first data units:
an overhead area or a payload area.

25. The method according to any one of claims 22 to 24, wherein the at least one first data unit in the W₁ first data units carries first indication information, and the first indication information indicates that the first data unit carrying the first indication information carries the first clock frequency information.

26. A communication apparatus, comprising a processing unit and a transceiver unit, wherein the processing unit is configured to use the transceiver unit to:
receive a first service data stream;
generate a first code block stream based on the first service data stream, wherein the first code block stream comprises first clock frequency information, the first clock frequency information indicates transmission duration of k first data frames of the first service data stream, and/or a moment at which the k first data frames of the first service data stream are received, and k is a positive integer; and
send the first code block stream.

27. The apparatus according to claim 26, wherein the processing unit is further configured to use the transceiver unit to:
receive Q₀ second service data streams, wherein Q₀ is a positive integer; and
the generating a first code block stream based on the first service data stream comprises:
generating the first code block stream based on the first service data stream and the Q₀ second service data streams, wherein
the first clock frequency information further indicates transmission duration of k third data frames of each of the Q₀ second service data streams, and/or a moment at which the k third data frames are received.

28. The apparatus according to claim 27, wherein the Q₀ second service data streams and the first service data stream have a same source communication apparatus, and the Q₀ second service data streams and the first service data stream have a same sink communication apparatus.

29. The apparatus according to claim 27 or 28, wherein the processing unit is configured to use the transceiver unit to:
multiplex, based on a preset order of the first service data stream and the Q₀ second service data streams and on a basis of a bit block comprising n₀ consecutive bits, bit blocks of the first service data stream and the Q₀ second service data streams, to obtain a third service data stream, wherein n₀ is a positive integer; and
generate the first code block stream based on the third service data stream.

30. The apparatus according to claim 27 or 28, wherein the processing unit is configured to use the transceiver unit to:
process the Q₀ second service data streams, to generate Q₀ third code block streams;
process the first service data stream, to generate a second code block stream, wherein the second code block stream comprises the first clock frequency information, and the second code block stream comprises the first clock frequency information and the k first data frames; and
multiplex data in the Q₀ third code block streams and the second code block stream, to obtain the first code block stream.

31. A communication apparatus, comprising a processing unit and a transceiver unit, wherein the processing unit is configured to use the transceiver unit to:
obtain a first code block stream, wherein the first code block stream comprises first clock frequency information, the first clock frequency information indicates transmission duration of k first data frames of a first service data stream, and/or a moment at which the k first data frames of the first service data stream are received, and k is a positive integer;
obtain the k first data frames and the first clock frequency information from the first code block stream; and
send the k first data frames based on the first clock frequency information.

32. The apparatus according to claim 31, wherein the processing unit is configured to use the transceiver unit to:
obtain the first clock frequency information from the first code block stream; and
demultiplex the first code block stream, to obtain the first service data stream and Q₀ second service data streams, wherein Q₀ is a positive integer, wherein
the first clock frequency information further indicates transmission duration of k third data frames of each of the Q₀ second service data streams, and/or a moment at which the k third data frames are received.

33. The method according to claim 32, wherein the Q₀ second service data streams and the first service data stream have a same source communication apparatus, and the Q₀ second service data streams and the first service data stream have a same sink communication apparatus.

34. The apparatus according to claim 32 or 33, wherein the demultiplexing the first code block stream, to obtain the first service data stream and Q₀ second service data streams comprises:
demultiplexing the first code block stream on a basis of a bit block comprising n₀ consecutive bits, to obtain the first service data stream and the Q₀ second service data streams.

35. The apparatus according to claim 32 or 33, wherein the processing unit is configured to use the transceiver unit to:
demultiplex the first code block stream, to obtain Q₀ third code block streams and a second code block stream, wherein the second code block stream comprises the first clock frequency information and the k first data frames;
obtain the first service data stream and the first clock frequency information from the second code block stream; and
obtain the Q₀ second service data streams from the Q₀ third code block streams.

36. The apparatus according to any one of claims 26 to 35, wherein the first clock frequency information comprises:
a moment at which a frame header of a 1^{st} data frame in the k first data frames is received.

37. The apparatus according to any one of claims 26 to 36, wherein the first clock frequency information comprises:
a moment at which a frame trailer of a k^{th} first data frame in the k first data frames is received.

38. The apparatus according to any one of claims 26 to 35, wherein the first clock frequency information comprises:
a first count value, wherein
the first count value is a quantity of periods of a clock frequency of a local clock signal of a first communication apparatus in duration in which the first communication apparatus receives the k first data frames.

39. The apparatus according to any one of claims 26 to 35, wherein the first clock frequency information comprises:
a second count value, wherein
the second count value is a difference between a first count value and a preset count value, and the first count value is a quantity of periods of a clock frequency of a local clock signal of a first communication apparatus in duration in which the first communication apparatus receives the k first data frames.

40. The apparatus according to any one of claims 26 to 35, wherein the first clock frequency information comprises:
a second count value and a preset count value, wherein
the second count value is a difference between a first count value and the preset count value, and the first count value is a quantity of periods of a clock frequency of a local clock signal of a first communication apparatus in duration in which the first communication apparatus receives the k first data frames.

41. The apparatus according to any one of claims 26 to 35, wherein the first clock frequency information comprises:
first duration, wherein the first duration is the transmission duration of the k first data frames.

42. The apparatus according to any one of claims 26 to 35, wherein the first clock frequency information comprises:
a third count value, wherein
the third count value is a quantity of periods of a clock frequency of a local clock signal of a first communication apparatus in second duration, and the second duration is duration from a preset moment to a moment at which a frame header of a 1^{st} first data frame in the k first data frames is received.

43. The apparatus according to any one of claims 26 to 35, wherein the first clock frequency information comprises:
second duration, wherein
the second duration is duration from a preset moment to a moment at which a frame header of a 1^{st} first data frame in the k first data frames is received.

44. The apparatus according to any one of claims 26 to 35, wherein the first clock frequency information comprises:
a fourth count value, wherein
the fourth count value is a quantity of periods of a clock frequency of a local clock signal of a first communication apparatus in third duration, and the third duration is duration from a preset moment to a moment at which a frame trailer of a k^{th} first data frame in the k first data frames is received.

45. The apparatus according to any one of claims 26 to 35, wherein the first clock frequency information comprises:
third duration, wherein
the third duration is duration from a preset moment to a moment at which a frame trailer of a k^{th} first data frame in the k first data frames is received.

46. The apparatus according to any one of claims 26 to 45, wherein the first code block stream further comprises second clock frequency information, and the second clock frequency information indicates transmission duration of k second data frames of the first service data stream, and/or a moment at which the k second data frames of the first service data stream are received.

47. The apparatus according to any one of claims 26 to 45, wherein the first code block stream comprises a first data unit group, the first data unit group comprises W₁ first data units, W₁ is a positive integer, and the first clock frequency information is carried in at least one of the following content of at least one first data unit in the W₁ first data units:
a header code block, at least one data code block, a tail code block, or an operations, administration, and maintenance code block.

48. The apparatus according to claim 47, wherein bits corresponding to the k first data frames are carried in one of the following content of a first data unit in the W₁ first data units:
a payload area of a data code block in the at least one data code block; or
the tail code block and a payload area of a data code block in the at least one data code block.

49. The apparatus according to any one of claims 26 to 45, wherein the first code block stream comprises a first data unit group, the first data unit group comprises W₁ first data units, W₁ is a positive integer, and the first clock frequency information is carried in at least one of the following content of at least one first data unit in the W₁ first data units:
an overhead area or a payload area.

50. The apparatus according to any one of claims 47 to 49, wherein the at least one first data unit in the W₁ first data units carries first indication information, and the first indication information indicates that the first data unit carrying the first indication information carries the first clock frequency information.

51. A communication apparatus, wherein the apparatus comprises a processor coupled to a memory;
the memory is configured to store a computer program or instructions; and
the processor is configured to execute the computer program or the instructions in the memory, to enable the communication apparatus to perform the method according to any one of claims 1 to 25.

52. A computer-readable storage medium, wherein the computer-readable storage medium stores computer-executable instructions, and when a computer invokes the computer-executable instructions, the method according to any one of claims 1 to 25 is performed.
